# EUROPEAN PATENT SPECIFICATION

(11) **EP 1 507 824 B1**
(45) Date of publication and mention of the grant of the patent: **12.03.2008**
(21) Application number: 03755936.6
(22) Date of filing: 22.05.2003
(51) Int. Cl.: C08K 5/098, C08K 5/34

(54) **STABILIZED ARTICLES**
STABILISIERTE GEGENSTÄNDE
ARTICLES STABILISES

(30) Priority: 30.05.2002 EP 02405435
(43) Date of publication of application: 23.02.2005
(73) Proprietor: Ciba Specialty Chemicals Holding Inc., 4057 Basel (CH); Ciba Specialty Chemicals S.p.A., 40037 Sasso Marconi (BO) (IT)
(72) Inventor: BANORA, Michela, I-40135 Bologna (IT)
(86) International application number: PCT/EP2003/005373
(87) International publication number: WO 2003/102068

(56) References cited:
- WO-A-94/25657
- US-A1- 2002 016 390
- PATENT ABSTRACTS OF JAPAN vol. 017, no. 345 (C-1077), 30 June 1993 (1993-06-30) -& JP 05 043749 A (TOPPAN PRINTING CO LTD), 23 February 1993 (1993-02-23)

## Description

The present invention relates to non-agricultural articles which keep their properties during the use and degrade later on, until total disintegration and disappearance of the plastic. The invention further relates to a method for controlling the weathering resistance and the degradation of non-agricultural articles. The desired effect is obtained with specific combinations of degradant metal salts and stabilizers.

A brief description of some exemplary non-agricultural articles made in accordance with the invention follows. Typically, the articles are required to have a relatively long service life followed by a relatively short period during which embrittlement and fragmentation occurs, either in situ or in a landfill. The articles may be film products comprising polyolefins or other organic polymers.
(a) Geotextiles. These are films, woven or spun-bonded fabrics that are used in civil engineering projects, primarily for temporary soil stabilization. In road and bridge building operations, for example, it is necessary that soil embankments and road base materials be stabilized and consolidated until trees, brushes and grass become established, typically for periods of six to eighteen months. Likewise, ditches and other drainage devices require temporary consolidation. When the service requirements are over, the material can degrade and be assimilated harmlessly into the surrounding environment.
(b) Multiple-use landfill covers. These can be used to cover a landfill active face overnight, pulled off in the morning and re-deployed at the end of the day. After some weeks, mechanical damage requires that the thick film cover be replaced. The pieces of the old cover can then undergo oxo-biodegradation after burial in the landfill.
(c) Industrial covers. Such covers, including tarpaulins and pallet wraps, are frequently required to provide protection for weeks or months and are then discarded after mechanical damage has rendered them no longer useful. Such covers will degrade in a landfill if made in accordance with the present invention. Other industrial covers in accordance with the invention include the wrappings for kiln-dried lumber, for new cars and boats during storage and transportation; temporary enclosures for buildings during repairs (for example, leaky condos) seasonal outdoor displays; covers for mining applications and oil rig applications, to cover and protect the work areas for the period of the year when the work cannot be done; covers for mothballing applications, for covering equipment such as chemical or oil industry equipment that has to be preserved for a time when not in use. All such covers and wrappings made in accordance with the invention can be disposed of in landfills after their service life and then undergo degradation.
(d) Waste covers, including covers and liners used in the construction or operation of a landfill. These have a service life that may be from several days to several months, depending upon the application. After their service life, they can degrade in the landfill.
(e) Temporary scaffolding sheets. These are used in the construction industry to protect inside surfaces during repairs. Their service life is typically between about three and eight months. After their service life, they can be disposed of and degrade in a landfill.
(f) Building films. These are used to protect some parts of a building during construction or repairs. Their service life is typically between two months and one year.
(g) Silt fences. These are used to protect temporarily some repair work or construction done on highways, fences, etc. Their service life is typically up to about one year.
(h) Flexible packaging wraps. These are used in the lumber and steel industries to protect lumber and metal goods during transportation and storage.
(i) Poultry curtains, made of polymer films. These are used in poultry farms to build temporary walls.
(j) Films for building temporary shelter constructions, such as emergency shelters.

In all of the foregoing examples, the non-agricultural article, made in accordance with the invention, will keep its properties during use and will degrade after its service life.

The invention also relates to a method for controlling the weather resistance and the degradation of a non-agricultural organic polymer article, for example articles of the types described above, which comprises incorporating into the organic polymer components (II) and (III) as defined below.

The invention also relates to a composition comprising components (II) and (III), and optionally one or more of components (IV), (V), (VI), (VII) or (VIII) as defined below, for incorporation with an organic polymer to form a non-agricultural article.

The invention also relates to the use of a mixture containing components (II) and (III), and optionally one or more of components (IV), (V), (VI), (VII) or (VIII) as defined below, for controlling the weathering resistance and the degradation of a non-agricultural organic polymer article.

The non-agricultural article of the present invention comprises an organic polymer, an organic salt of Fe, Ce, Co, Mn, Cu or Vd and one or more sterically hindered amine compounds.

Shelf stable nonwoven fabrics and films are disclosed in US-A-5,393,831. A method for controlling the degradation start time is further disclosed in JP-A-05/043749. Chemically degradable polyolefin films are also described in US-A-5,565,503.

Stabilized plastics are for example described in EP-A-226,453, GB-A-1,582,280, US-A-3,909,333, US-A-5,859,098, DE-A-4,003,129 and EP-A-172,691.

The present invention relates in particular to a non-agricultural article comprising the components
(I) an organic polymer,
(II) an organic salt of Fe, Ce, Co, Mn, Cu or V, and
(III) one or more sterically hindered amine compounds selected from the group consisting of
a compound of the formula (A-1) 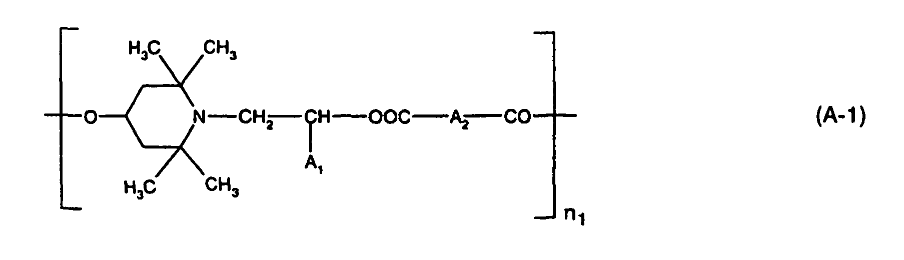 wherein
A₁ is hydrogen or C₁-C₄alkyl,
A₂ is a direct bond or C₁-C₁₀alkylene, and
n₁ is a number from 2 to 50;
at least one compound of the formulae (A-2-a) and (A-2-b) 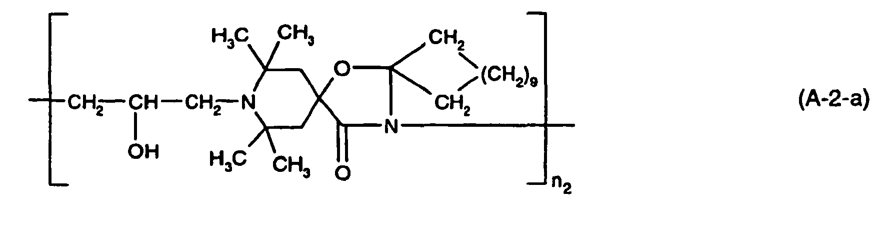 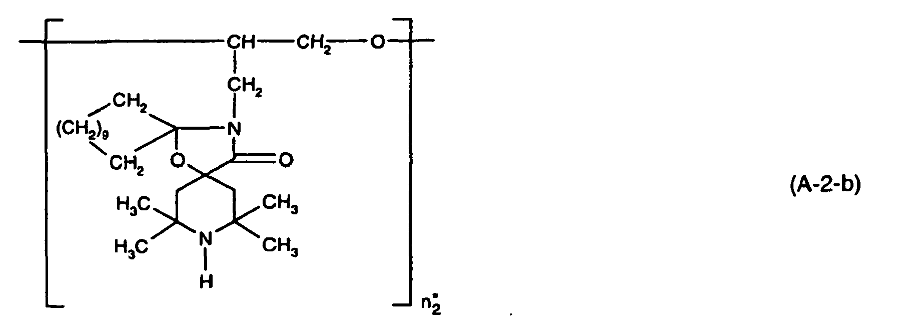 wherein
n₂ and n₂* are a number from 2 to 50;
a compound of the formula (A-3) 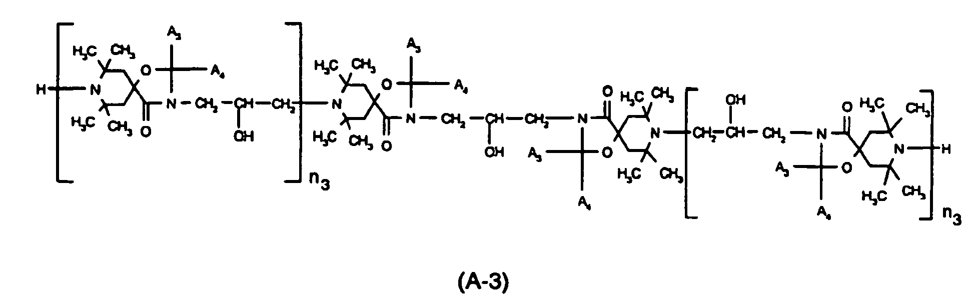 wherein
A₃ and A₄ independently of one another are hydrogen or C₁-C₈alkyl, or A₃ and A₄ together form a C₂-C₁₄alkylene group, and
the, variables n₃ independently of one another are a number from 1 to 50;
a compound of the formula (A-4) 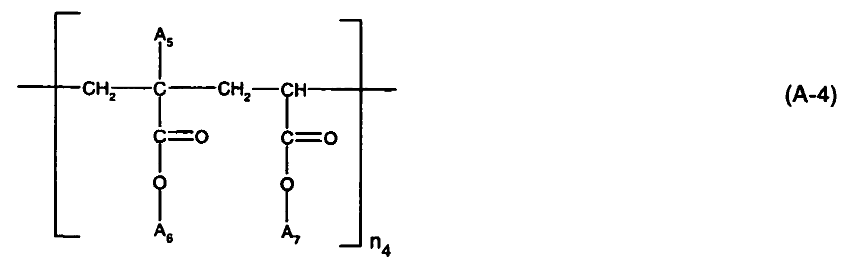 wherein
n₄ is a number from 2 to 50,
A₅ is hydrogen or C₁-C₄alkyl,
the radicals A₆ and A₇ independently of one another are C₁-C₄alkyl or a group of the formula (a-I) 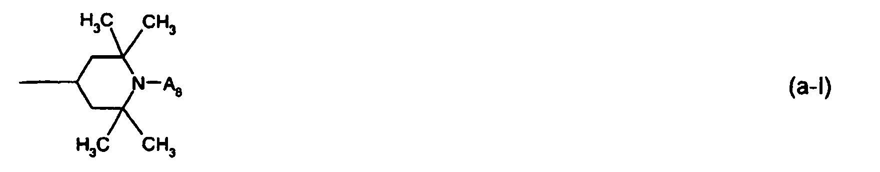 wherein A₈ is hydrogen, C₁-C₈alkyl, -O^{·}, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
with the proviso that at least 50 % of the radicals A₇ are a group of the formula (a-I);
a compound of the formula (B-1) 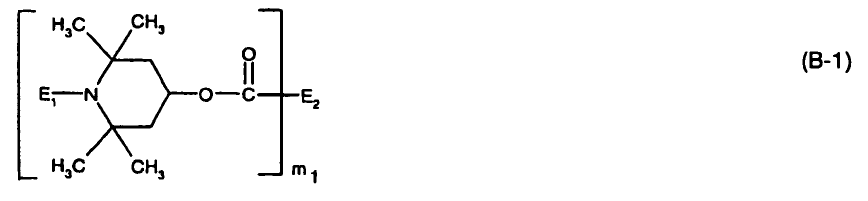 in which
E₁ is hydrogen, C₁-C₈alkyl, -O^{·}, -OH, -CH₂CN, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
m₁ is 1, 2 or 4,
if m₁ is 1, E₂ is C₁-C₂₅alkyl,
if m₁ is 2, E₂ is C₁-C₁₄alkylene or a group of the formula (b-I) 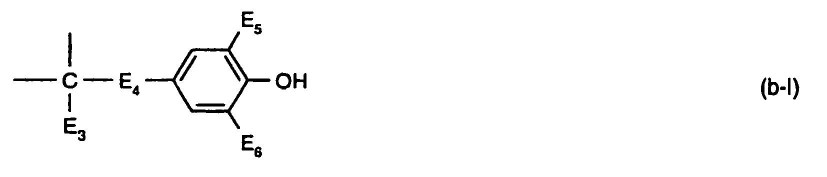 wherein E₃ is C₁-C₁₀alkyl or C₂-C₁₀alkenyl, E₄ is C₁-C₁₀alkylene, and
E₅ and E₆ independently of one another are C₁-C₄alkyl, cyclohexyl or methylcyclohexyl, and
if m₁ is 4, E₂ is C₄-C₁₀alkanetetrayl;
a compound of the formula (B-2) 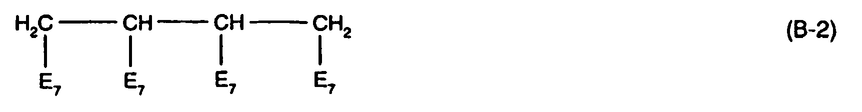 in which
two of the radicals E₇ are -COO-(C₁-C₂₀alkyl), and
two of the radicals E₇ are a group of the formula (b-II) 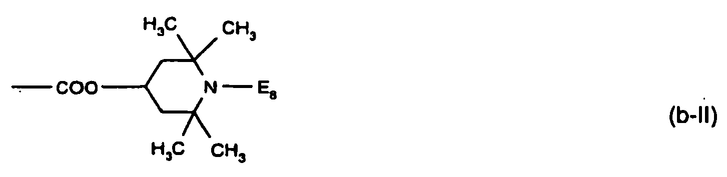 with E₈ being hydrogen, C₁-C₈ alkyl, -O^{·}, -OH, -CH₂CN, C₁-C₁₈alkoxy, C₂-C₁₈ alkoxy substituted by -OH; C₅-C₁₂ cycloalkoxy, C₃-C₆ alkenyl, C₇-C₉ phenylalkyl unsubstituted or substituted on the phenyl by 1, 2 or 3 C₁-C₄alkyl ; or C₁-C₈acyl;
a compound of the formula (B-3) 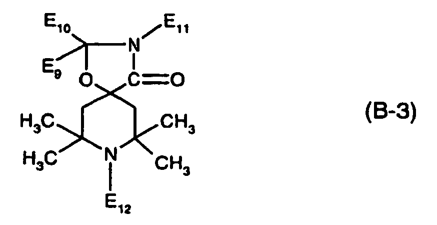 in which
E₉ and E₁₀ together form C₂-C₁₄alkylene,
E₁₁ is hydrogen or a group -Z₁-COO-Z₂,
Z₁ is C₂-C₁₄alkylene, and
Z₂ is C₁-C₂₄alkyl, and
E₁₂ is hydrogen, C₁-C₈ alkyl, -O^{·}, -OH, -CH₂CN, C₁-C₁₈alkoxy, C₂-C₁₈ alkoxy substituted by -OH; C₅-C₁₂ cycloalkoxy, C₃-C₆ alkenyl, C₇-C₉ phenylalkyl unsubstituted or substituted on the phenyl by 1, 2 or 3 C₁-C₄alkyl ; or C₁-C₈acyl
a compound of the formula (B-4) 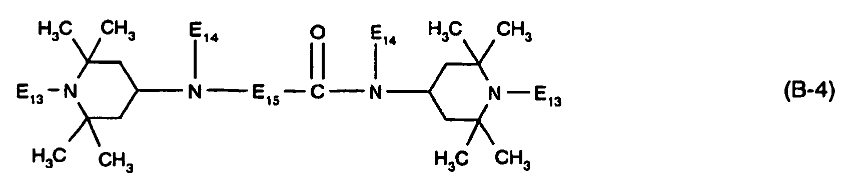 wherein
the radicals E₁₃ independently of one another are hydrogen, C₁-C₈ alkyl, -O^{·}, -OH, -CH₂CN, C₁-C₁₈alkoxy, C₂-C₁₈ alkoxy substituted by -OH; C₅-C₁₂ cycloalkoxy, C₃-C₆ alkenyl, C₇-C₉ phenylalkyl unsubstituted or substituted on the phenyl by 1, 2 or 3 C₁-C₄alkyl ; or C₁-C₈acyl;
the radicals E₁₄ independently of one another are hydrogen or C₁-C₁₂alkyl, and E₁₅ is C₁-C₁₀alkylene or C₃-C₁₀alkylidene;
a compound of the formula (B-5) 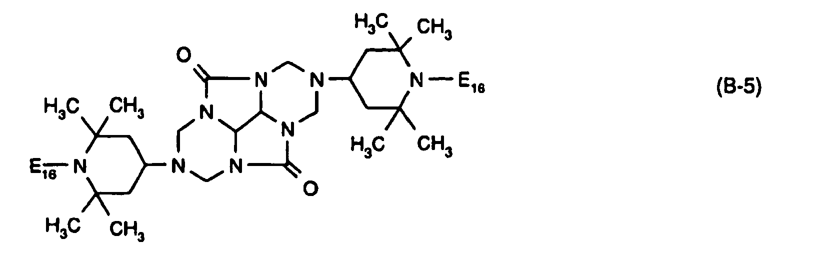 wherein
the radicals E₁₆ independently of one another are hydrogen, C₁-C₈ alkyl, -O^{·}, -OH, -CH₂CN, C₁-C₁₈alkoxy, C₂-C₁₈ alkoxy substituted by -OH; C₅-C₁₂ cycloalkoxy, C₃-C₆ alkenyl, C₇-C₈ phenylalkyl unsubstituted or substituted on the phenyl by 1, 2 or 3 C₁-C₄alkyl; or C₁-C₈acyl;
a compound of the formula (B-6) 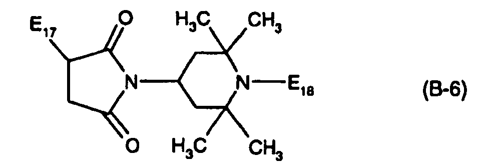 in which
E₁₇ is C₁-C₂₄alkyl, and
E₁₈ is hydrogen, C₁-C₈ alkyl, -O^{·}, -OH, -CH₂CN, C₁-C₁₈alkoxy, C₂-C₁₈ alkoxy substituted by -OH; C₅-C₁₂ cycloalkoxy, C₃-C₆ alkenyl, C₇-C₉ phenylalkyl unsubstituted or substituted on the phenyl by 1, 2 or 3 C₁-C₄alkyl ; or C₁-C₈acyl
a compound of the formula (B-7) 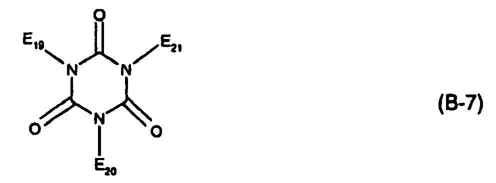 in which
E_{19'} E₂₀ and E₂₁ independently of one another are a group of the formula (b-III) 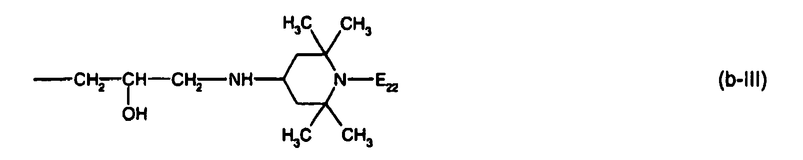 wherein E₂₂ is hydrogen, C₁-C₈ alkyl, -O^{·}, -OH, -CH₂CN, C₁-C₁₈alkoxy, C₂-C₁₈ alkoxy substituted by -OH; C₅-C₁₂ cycloalkoxy, C₃-C₆ alkenyl, C₇-C₈ phenylalkyl unsubstituted or substituted on the phenyl by 1, 2 or 3 C₁-C₄alkyl; or C₁-C₈acyl;
a compound of the formula (B-8) 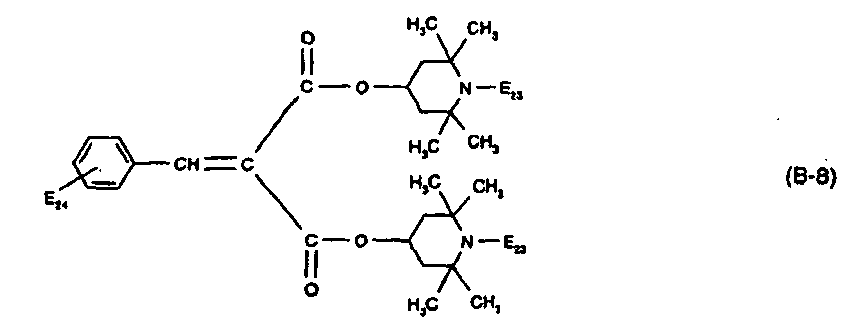 wherein
the radicals E₂₃ independently of one another are hydrogen, C₁-C₈alkyl, -O^{·}, -OH, -CH₂CN, C₁-C₁₈alkoxy, C₂-C₁₈ alkoxy substituted by -OH; C₅-C₁₂ cycloalkoxy, C₃-C₆ alkenyl, C₇-C₈ phenylalkyl unsubstituted or substituted on the phenyl by 1, 2 or 3 C₁-C₄alkyl; or C₁-C₈acyl; and E₂₄ is hydrogen, C₁-C₁₂alkyl or C₁-C₁₂alkoxy,
a compound of the formula (B-9) 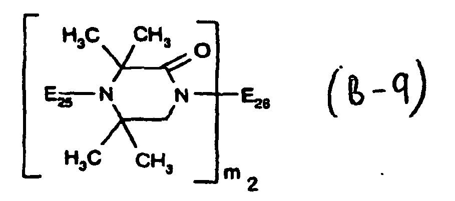 wherein
*m*₂ is 1, 2 or 3,
E₂₅ is hydrogen, C₁-C₈alkyl, -O^{·}, -OH, -CH₂CN, C₁-C₁₈alkoxy, C₂-C₁₈ alkoxy substituted by -OH; C₅-C₁₂ cycloalkoxy, C₃-C₆ alkenyl, C₇-C₈ phenylalkyl unsubstituted or substituted on the phenyl by 1, 2 or 3 C₁-C₄alkyl; or C₁-C₈acyl; and
when m₂ is 1, E₂₈ is a group 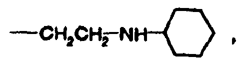 when m₂ is 2, E₂₆ is C₂-C₂₂alkylene, and
when m₂ is 3, E₂₆ is a group of the formula (b-IV) 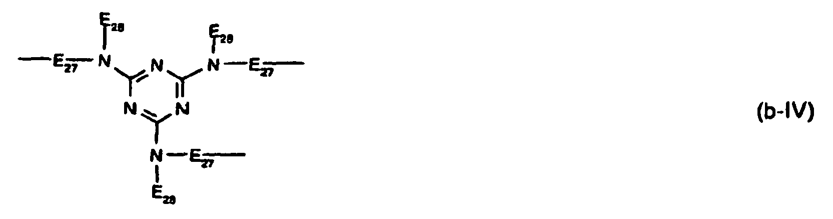 wherein the radicals E₂₇ independently of one another are C₂-C₁₂alkylene, and
the radicals E₂₈ independently of one another are C₁-C₁₂alkyl or C₅-C₁₂cycloalkyl;
a compound of the formula (B-10) 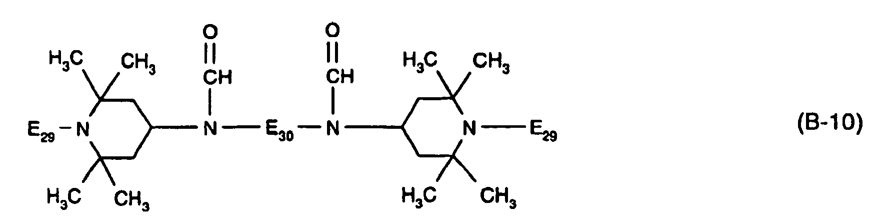 wherein
the radicals E₂₉ independently of one another are hydrogen, C₁-C₈ alkyl, -O^{·}, -OH, -CH₂CN, C₁-C₁₈ alkoxy, C₂-C₁₈ alkoxy substituted by -OH; C₅-C₁₂ cycloalkoxy, C₃-C₆ alkenyl, C₇-C₉ phenylalkyl unsubstituted or substituted on the phenyl by 1, 2 or 3 C₁-C₄alkyl ; or C₁-C₈acyl, and
E₃₀ is C₂-C₂₂alkylene, C₅-C₇cycloalkylene, C₁-C₄alkylenedi(C₅-C₇cycloalkylene), phenylene or phenylenedi(C₁-C₄alkylene);
a compound of the formula (C-1) 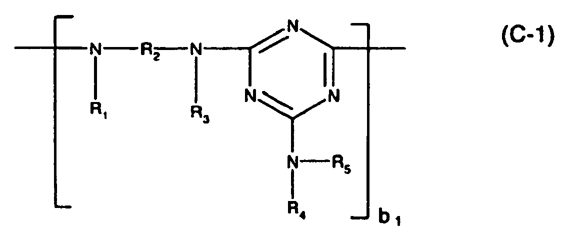 in which
R₁, R₃, R₄ and R₅ independently of one another are hydrogen, C₁-C₁₂alkyl, C₅-C₁₂cycloalkyl, C₁-C₄-alkyl-substituted C₅-C₁₂cycloalkyl, phenyl, phenyl which is substituted by -OH and/or C₁-C₁₀alkyl; C₇-C₉phenylalkyl, C₇-C₉phenylalkyl which is substituted on the phenyl radical by -OH and/or C₁-C₁₀alkyl; or a group of the formula (c-I) 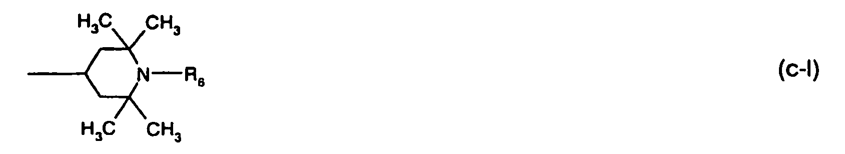 R₂ is C₂-C₁₈alkylene, C₅-C₇cycloalkylene or C₁-C₄alkylenedi(C₅-C₇cycloalkylene), or
the radicals R₁, R₂ and R₃, together with the nitrogen atoms to which they are bonded, perform a 5- to 10-membered heterocyclic ring, or
R₄ and R₅, together with the nitrogen atom to which they are bonded, form a 5- to 10-membered heterocyclic ring,
R₆ is hydrogen, C₁-C₈alkyl, -O^{·}, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl, and
b₁ is a number from 2 to 50,
with the proviso that at least one of the radicals R₁, R₃, R₄ and R₅ is a group of the formula (c-I);
a compound of the formula (C-2) 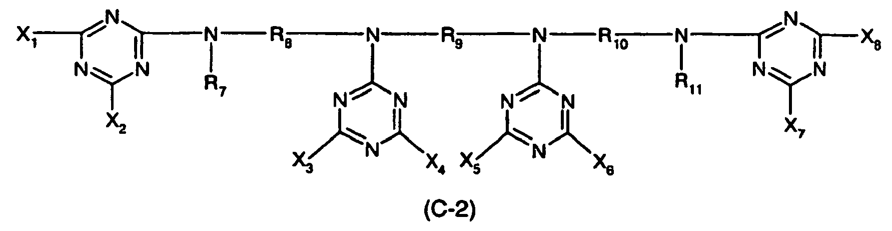 wherein
R₇ and R₁₁ independently of one another are hydrogen or C₁-C₁₂alkyl,
R₈, R₉ and R₁₀ independently of one another are C₂-C₁₀alkylene, and
X₁, X₂, X₃, X₄, X₅, X₆, X₇ and X₈ independently of one another are a group of the formula (C-II), 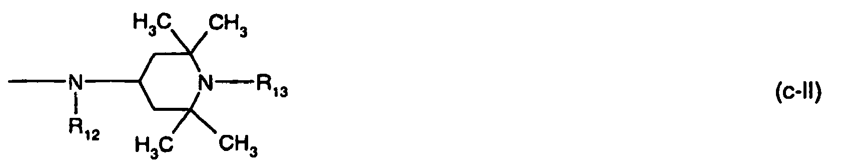 in which R₁₂ is hydrogen, C₁-C₁₂alkyl, C₅-C₁₂cycloalkyl, C₁-C₄alkyl-substituted C₅-C₁₂cycloalkyl, phenyl, -OH- and/or C₁-C₁₀alkyl-substituted phenyl, C₇-C₉phenylalkyl, C₇-C₉phenylalkyl which is substituted on the phenyl radical by -OH and/or C₁-C₁₀alkyl; or a group of the formula (c-I) as defined above, and
R₁₃ has one of the meanings of R₆;
a compound of the formula (C-3) 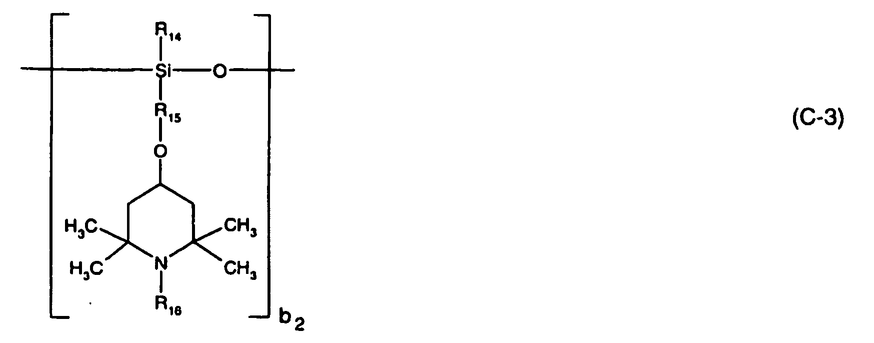 in which
R₁₄ is C₁-C₁₀alkyl, C₅-C₁₂cycloalkyl, C₁-C₄alkyl-substituted C₅-C₁₂cycloalkyl, phenyl or C₁-C₁₀alkyl-substituted phenyl,
R₁₅is C₃-C₁₀alkylene,
R₁₆ has one of the meanings of R₆, and
b₂ is a number from 2 to 50;
a compound of the formula (C-4) 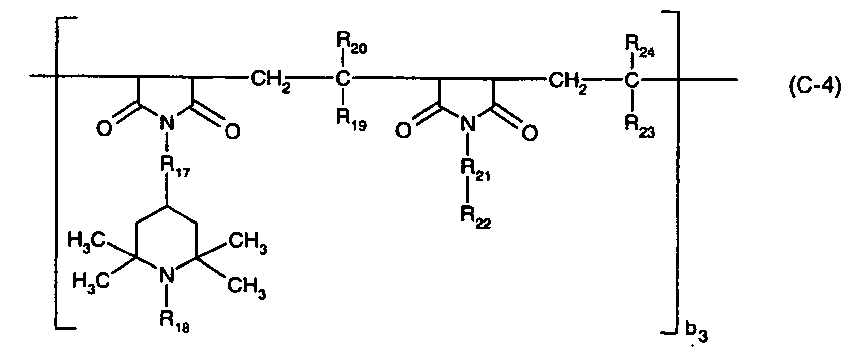 in which
R₁₇ and R₂₁ independently of one another are a direct bond or a -N(X₉)-CO-X₁₀-CO-N(X₁₁)-group, where X₉ and X₁₁ independently of one another are hydrogen, C₁-C₈alkyl,
C₅-C₁₂cycloalkyl, phenyl, C₇-C₉phenylalkyl or a group of the formula (c-I),
X₁₀ is a direct bond or C₁-C₄alkylene,
R₁₈ has one of the meanings of R₆,
R₁₉, R₂₀, R₂₃ and R₂₄ independently of one another are hydrogen, C₁-C₃₀alkyl,
C₅-C₁₂cycloalkyl or phenyl,
R₂₂ is hydrogen, C₁-C₃₀alkyl, C₅-C₁₂cycloalkyl, phenyl, C₇-C₉phenylalkyl or a group of the formula (c-I), and
b₃ is a number from 1 to 50;
a compound of the formula (C-5) 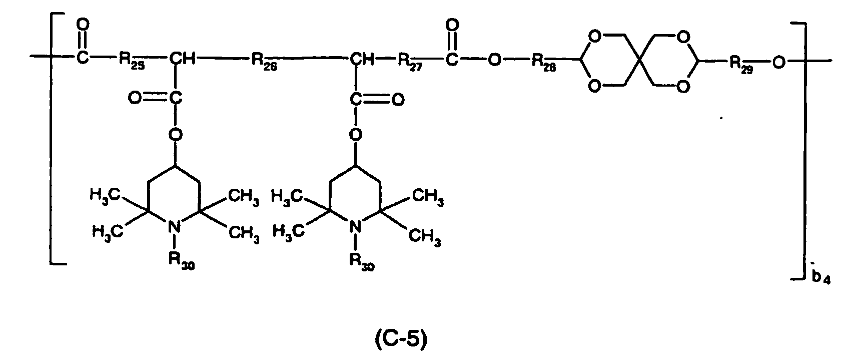 in which
R₂₅, R₂₆, R₂₇, R₂₈ and R₂₉ independently of one another are a direct bond or C₁-C₁₀alkylene,
A₃₀ has one of the meanings of R₆, and
b₄ is a number from 1 to 50; and
a product (C-6) obtainable by reacting a product, obtained by reaction of a polyamine of the formula (C-6-1) with cyanuric chloride, with a compound of the formula (C-6-2) 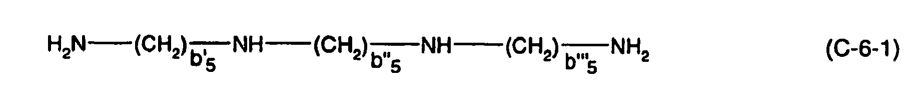 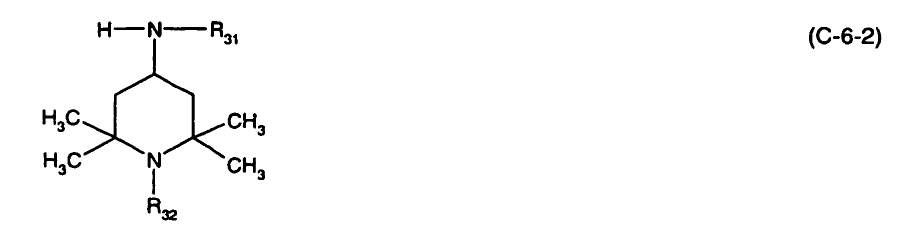 in which
b'₅, b"₅ and b'"₅ independently of one another are a number from 2 to 12,
R₃₁ is hydrogen, C₁-C₁₂alkyl, C₅-C₁₂cycloalkyl, phenyl or C₇-C₈phenylalkyl, and
R₃₂ has one of the meanings of R₆.

When the non-agricultural article according to the present invention contains a polyolefin, the presence of an oxidizable unsaturated compound selected from the group consisting of natural rubber, styrene butadiene resin, fat and oil, is disclaimed.

A non-agricultural article which is free of an oxidizable unsaturated compound, in particular natural rubber, styrene butadiene resin, fat or oil, is of special interest.

Examples of alkyl having up to 30 carbon atoms are methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, eicosyl, docosyl and triacontyl. One of the preferred definitions of A₈, E₁, E₈, E₁₂, E₁₃, E₁₆, E₁₈, E₂₂, E₂₃, E₂₅, E₂₉, R₆, R₁₃, R₁₈, R₁₈, R₃₀ and R₃₂ is C₁-C₄alkyl, especially methyl. R₃₁ is preferably butyl.

Examples of alkoxy having up to 18 carbon atoms are methoxy, ethoxy, propoxy, isopropoxy, butoxy, isobutoxy, pentoxy, isopentoxy, hexoxy, heptoxy, octoxy, decyloxy, dodecyloxy, tetradecyloxy, hexadecyloxy and octadecyloxy. One of the preferred meanings of E₁ is octoxy. E₂₄ is preferably C₁-C₄alkoxy and one of the preferred meanings of R₈ is propoxy.

Examples of C₅-C₁₂cycloalkyl are cyclopentyl, cyclohexyl, cycloheptyl, cyclooctyl and cyclododecyl. C₅-C₈Cycloalkyl, especially cyclohexyl, is preferred.

C₁-C₄Alkyl-substituted C₅-C₁₂cycloalkyl is for example methylcyclohexyl or dimethylcyclohexyl.

Examples of C₅-C₁₂cycloalkoxy are cyclopentoxy, cyclohexoxy, cycloheptoxy, cyclooctoxy, cyclodecyloxy and cyclododecyloxy. C₅-C₈Cycloalkoxy, in particular cyclopentoxy and cyclohexoxy, is preferred.

-OH- and/or C₁-C₁₀alkyl-substituted phenyl is for example methylphenyl, dimethylphenyl, trimethylphenyl, tert-butylphenyl or 3,5-di-tert-butyl-4-hydroxyphenyl.

Examples of C₇-C₉phenylalkyl are benzyl and phenylethyl.

C₇-C₈Phenylalkyl which is substituted on the phenyl radical by -OH and/or by alkyl having up to 10 carbon atoms is for example methylbenzyl, dimethylbenzyl, trimethylbenzyl, tert-butylbenzyl or 3,5-di-tert-butyl-4-hydroxybenzyl.

Examples of alkenyl having up to 10 carbon atoms are allyl, 2-methallyl, butenyl, pentenyl and hexenyl. Allyl is preferred. The carbon atom in position 1 is preferably saturated.

Examples of acyl containing not more than 8 carbon atoms are formyl, acetyl, propionyl, butyryl, pentanoyl, hexanoyl, heptanoyl, octanoyl, acryloyl, methacryloyl and benzoyl. C₁-C₈Alkanoyl, C₃-C₈alkenyl and benzoyl are preferred. Acetyl and acryloyl are especially preferred.

Examples of alkylene having up to 22 carbon atoms are methylene, ethylene, propylene, trimethylene, tetramethylene, pentamethylene, 2,2-dimethyltrimethylene, hexamethylene, trimethylhexamethylene, octamethylene and decamethylene.

An example of C₃-C₁₀alkylidene is the group

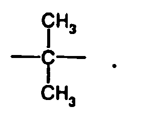

An example of C₄-C₁₀alkanetetrayl is 1,2,3,4-butanetetrayl.

An example of C₅-C₇cycloalkylene is cyclohexylene.

An example of C₁-C₄alkylenedi(C₅-C₇cycloalkylene) is methylenedicyclohexylene.

An example of phenylenedi(C₁-C₄alkylene) is methylene-phenylene-methylene or ethylene-phenylene-ethylene.

Where the radicals R₁, R₂ and R₃, together with the nitrogen atoms to which they are attached, form a 5- to 10-membered heterocyclic ring, this ring is for example

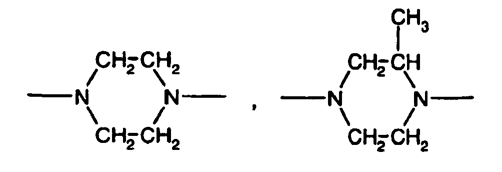

A 6-membered heterocyclic ring is preferred.

Where the radicals R₄ and R₅, together with the nitrogen atom to which they are attached, form a 5- to 10-membered heterocyclic ring, this ring is for example 1-pyrrolidyl, piperidino, morpholino, 1-piperazinyl, 4-methyl-1-piperazinyl, 1-hexahydroazepinyl, 5,5,7-trimethyl-1-homopiperazinyl or 4,5,5,7-tetramethyl-1-homopiperazinyl. Morpholino is particularly preferred.

One of the preferred definitions of R₁₉ and R₂₃ is phenyl.

R₂₆ is preferably a direct bond.

n₁, n₂, n₂* and n₄ are preferably a number from 2 to 25, in particular 2 to 20.
n₃ is preferably a number from 1 to 25, in particular 1 to 20 or 2 to 20.

b₁ and b₂ are preferably a number from 2 to 25, in particular 2 to 20.

b₃ and b₄ are preferably a number from 1 to 25, in particluar 1 to 20 or 2 to 20.

b'₅ and b"'₅ are preferably 3 and b"₅ is preferably 2.

A₈ is preferably hydrogen, C₁-C₄alkyl, C₁-C₁₀alkoxy, cyclohexyloxy, allyl, benzyl or acetyl. E₁, E₈, E₁₂, E₁₃, E_{16,} E₁₈, E₂₂, E₂₃, E₂₅ and E₂₉ are preferably hydrogen, C₁-C₄alkyl, C₁-C₁₀alkoxy, cyclohexyloxy, allyl, benzyl or acetyl.

R₆, R₁₃, R₁₆, R₁₈, R₃₀ and R₃₂ are preferably hydrogen, C₁-C₄alkyl, C₁-C₁₀alkoxy, cyclohexyloxy, allyl, benzyl or acetyl.

A₈, E₁, E₈, E₁₂, E₁₃, E₁₆, E₁₈, E₂₂, E₂₃, E₂₅, E₂₉, R₆, R₁₃, R₁₆, R₁₈, R₃₀ and R₃₂ are preferably hydrogen or methyl and R₆ additionally is C₁-C₈alkoxy.

The compounds described above as component (III) are essentially known and commercially available. All of them can be prepared by known processes.

The preparation of the compounds of the formulae (A-1), (A-2-a), (A-2-b), (A-3) and (A-4) is disclosed, for example, in US-A-4,233,412, US-A-4,340,534, WO-A-98/51,690 and EP-A-1,803.

The preparation of the compounds of the formulae (B-1), (B-2), (B-3), (B-4), (B-5), (B-6), (B-7), (B-8), (B-9) and (B-10) is disclosed, for example, in US-A-5,679,733, US-A-3,640,928, US-A-4,198,334, US-A-5,204,473, US-A-4,619,958, US-A-4,110,306, US-A-4,110,334, US-A-4,689,416, US-A-4,408,051, SU-A-768,175 (Derwent 88-138,751/20), US-A-5,049,604, US-A-4,769,457, US-A-4,356,307, US-A-4,619,956, US-A-5,182,390, GB-A-2,269,819, US-A-4,292,240, US-A-5,026,849, US-A-5,071,981, US-A-4,547,538 and US-A-4,976,889.

The preparation of the compounds of the formulae (C-1), (C-2), (C-3), (C-4) and (C-5) as well as the product (C-6) is disclosed, for example, in US-A-4,086,204, US-A-6,046,304, US-A-4,331,586, US-A-4,108,829, US-A-5,051,458, WO-A-94/12,544 (Derwent 94-177,274/22), DD-A-262,439 (Derwent 89-122,983/17), US-A-4,857,595, US-A-4,529,760 and US-A-4,477,615 and CAS 136,504-96-6.

The product (C-6) can be prepared analogously to known processes, for example by reacting a polyamine of formula (C-6-1) with cyanuric chloride in a molar ratio of from 1:2 to 1:4 in the presence of anhydrous lithium carbonate, sodium carbonate or potassium carbonate in an organic solvent such as 1,2-dichloroethane, toluene, xylene, benzene, dioxane or tert-amyl alcohol at a temperature of from -20°C to +10°C, preferably from -10°C to +10°C, in particular from 0°C to +10°C, for from 2 to 8 hours, followed by reaction of the resultant product with a 2,2,6,6-tetramethyl-4-piperidylamine of the formula (C-6-2). The molar ratio of the 2,2,6,6-tetramethyl-4-piperidylamine to polyamine of the formula (C-6-1) employed is for example from 4:1 to 8:1. The quantity of the 2,2,6,6-tetramethyl-4-piperidylamine can be added in one portion or in more than one portion at intervals of a few hours.

The molar ratio of polyamine of the formula (C-6-1) to cyanuric chloride to 2,2,6,6-tetramethyl-4-piperidylamine of the formula (C-6-2) is preferably from 1:3:5 to 1:3:6.

The following example indicates one way of preparing a preferred product (C-6-a).

Example: 23.6 g (0.128 mol) of cyanuric chloride, 7.43 g (0.0426 mol) of N,N'-bis[3-aminopropyl]ethylenediamine and 18 g (0.13 mol) of anhydrous potassium carbonate are reacted at 5°C for 3 hours with stirring in 250 ml of 1,2-dichloroethane. The mixture is warmed at room temperature for a further 4 hours. 27.2 g (0.128 mol) of N-(2,2,6,6-tetramethyl-4-piperidyl)butylamine are added and the resultant mixture is warmed at 60°C for 2 hours. A further 18 g (0.13 mol) of anhydrous potassium carbonate are added and the mixture is warmed at 60°C for a further 6 hours. The solvent is removed by distillation under a slight vacuum (200 mbar) and replaced by xylene. 18.2 g (0.085 mol) of N-(2,2,6,6-tetramethyl-4-piperidyl)butylamine and 5.2 g (0.13 mol) of ground sodium hydroxide are added, the mixture is heated at reflux for 2 hours and, for a further 12 hours, the water formed during the reaction is removed by azeotropic distillation. The mixture is filtered. The solution is washed with water and dried over Na₂SO₄. The solvent is evaporated and the residue is dried at 120-130°C in vacuo (0.1 mbar). The desired product is obtained as a colourless resin.

In general, the product (C-6) can for example be represented by a compound of the formula (C-6-α), (C-6-β) or (C-6-γ). It can also be in the form of a mixture of these three compounds.

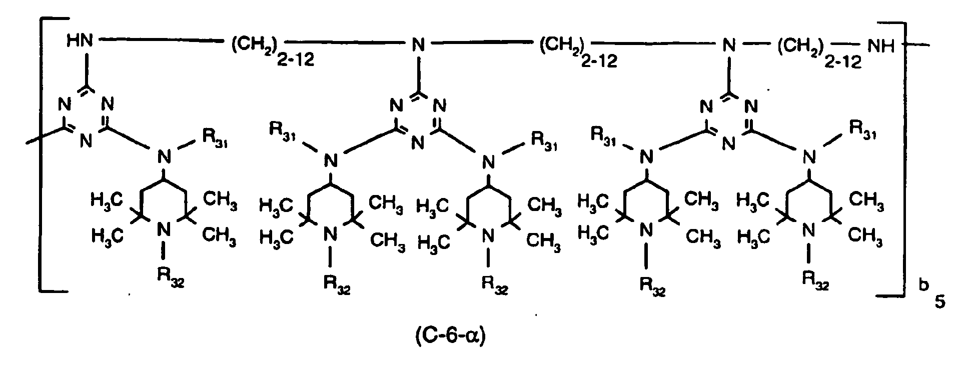

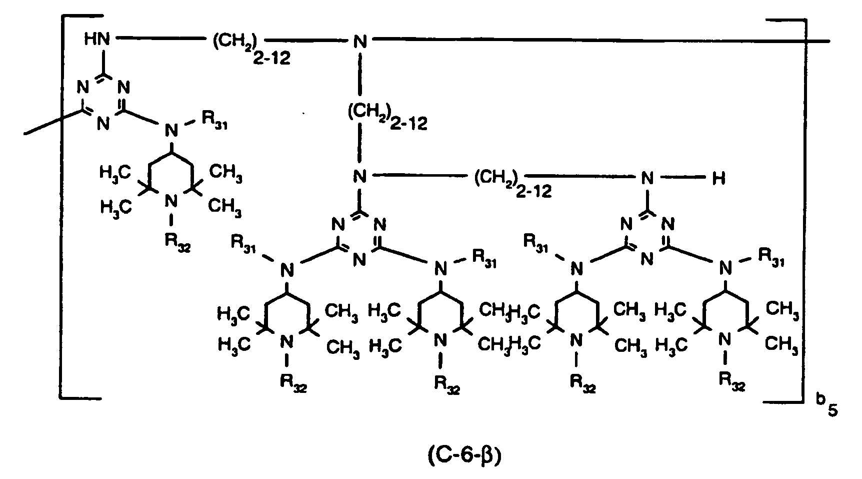

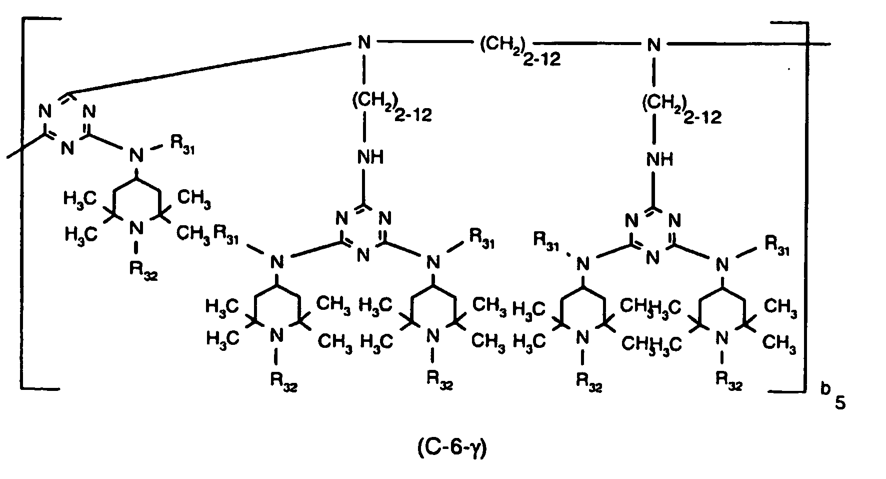

A preferred meaning of the formula (C-6-α) is

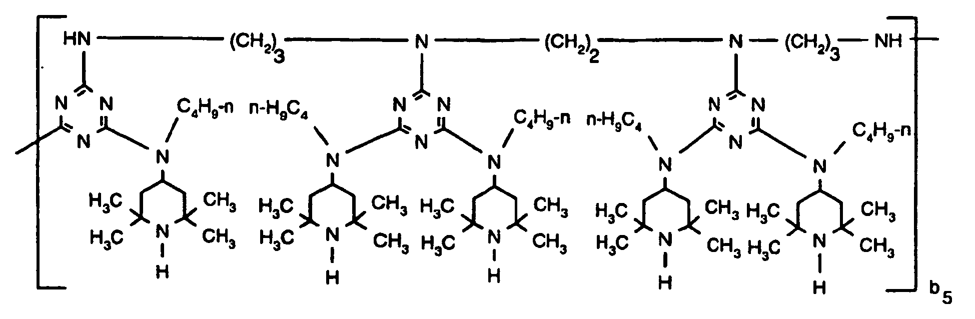

A preferred meaning of the formula (C-6-β) is

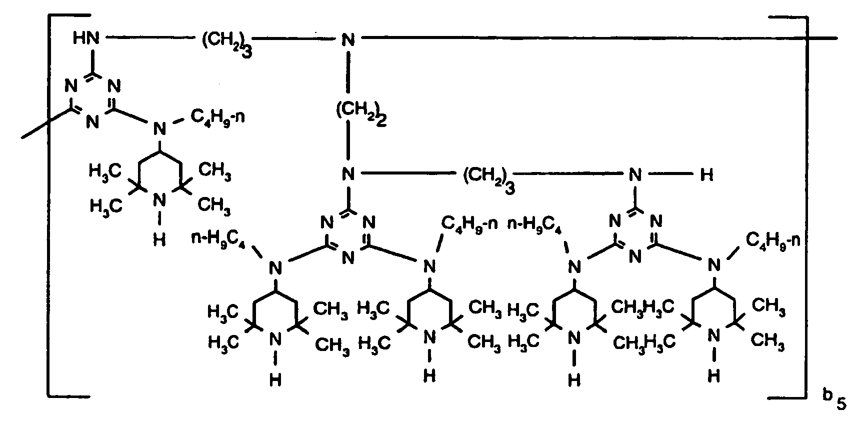

A preferred meaning of the formula (C-6-γ) is

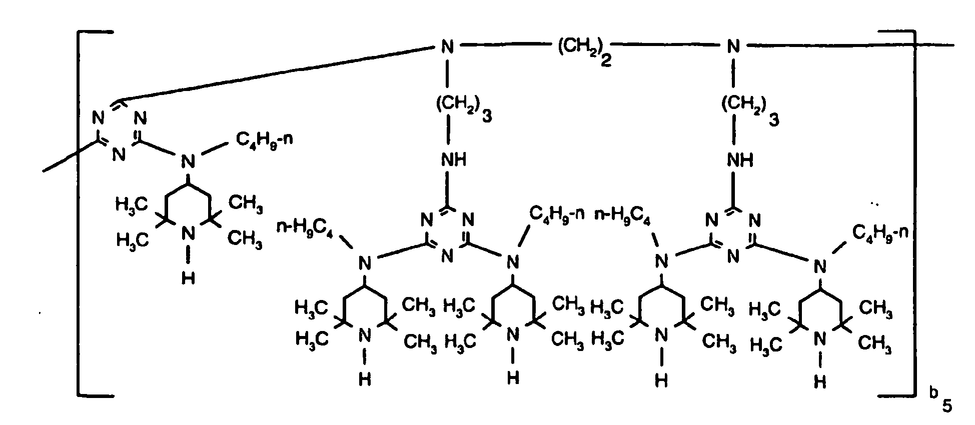

In the above formulae (C-6-α) to (C-6-γ), b₅ is preferably 2 to 20, in particular 2 to 10.

Component (III) is for example TINUVIN 622 (RTM), HOSTAVIN N 30 (RTM), FERRO AM 806 (RTM), DASTIB 845 (RTM), TINUVIN 770 (RTM), TINUVIN 765 (RTM), TINUVIN 144 (RTM), TINUVIN 123 (RTM), ADK STAB LA 52 (RTM), ADK STAB LA 57 (RTM), ADK STAB LA 62 (RTM), ADK STAB LA 67 (RTM), HOSTAVIN N 20 (RTM), HOSTAVIN N 24 (RTM), SANDUVOR 3050 (RTM), DIACETAM 5 (RTM), SUMISORB TM 61 (RTM), UVINUL 4049 (RTM), SANDUVOR PR 31 (RTM), GOODRITE UV 3034 (RTM), GOODRITE UV 3150 (RTM), GOODRITE UV 3159 (RTM), GOODRITE 3110 × 128 (RTM), UVINUL 4050 H (RTM), CHIMASSORB 944 (RTM), CHIMASSORB 2020 (RTM), CYASORB UV 3346 (RTM), CYASORB UV 3529 (RTM), DASTIB 1082 (RTM), CHIMASSORB 119 (RTM), UVASIL 299 (RTM), UVASIL 125 (RTM), UVASIL 2000 (RTM), UVINUL 5050 H (RTM), LICHTSCHUTZSTOFF UV 31 (RTM), LUCHEM HA B 18 (RTM), ADK STAB LA 63 (RTM), ADK STAB LA 68 (RTM), UVASORB HA 88 (RTM).

The meanings of the terminal groups which saturate the free valences in the compounds of the formulae (A-1), (A-2-a), (A-2-b), (A-4), (C-1), (C-3), (C-4), (C-5), (C-6-α), (C-6-β) and (C-6-γ) depend on the processes used for their preparation. The terminal groups can also be modified after the preparation of the compounds.

If the compounds of the formula (A-1) are prepared, for example, by reacting a compound of the formula 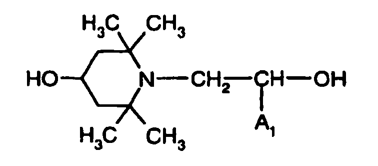 in which A₁ is hydrogen or methyl, with a dicarboxylic acid diester of the formula Y-OOC-A₂-COO-Y, in which Y is, for example, methyl, ethyl or propyl, and A₂ is as defined above, the terminal group bonded to the 2,2,6,6-tetramethyl-4-oxypiperidin-1-yl radical is hydrogen or -CO-A₂-COO-Y, and the terminal group bonded to the diacyl radical is -O-Y or

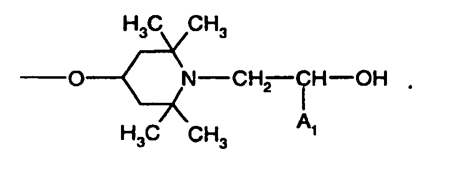

In the compounds of the formula (A-2-a), the terminal group bonded to the nitrogen can be, for example, hydrogen and the terminal group bonded to the 2-hydroxypropylene radical can be, for example, a 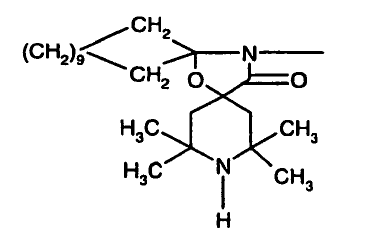 group.

In the compounds of the formula (A-2-b), the terminal group bonded to the dimethylene radical can be, for example, -OH, and the terminal group bonded to the oxygen can be, for example, hydrogen. The terminal groups can also be polyether radicals.

In the compounds of the formula (A-4), the end group bonded to the -CH₂- residue can be, for example, hydrogen and the end group bonded to the -CH(CO₂A₇) residue can be, for example, -CH=CH-COOA₇.

If the compounds of the formula (C-1) are prepared by reacting a compound of the formula 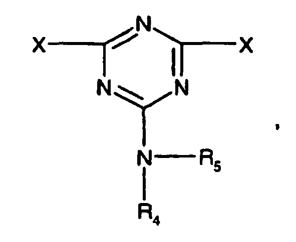 in which X is, for example, halogen, in particular chlorine, and R₄ and R₅ are as defined above, with a compound of the formula 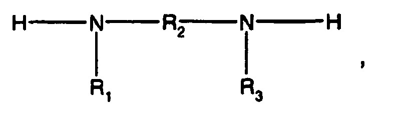 in which R₁, R₂ and R₃ are as defined above, the terminal group bonded to the diamino radical is hydrogen or 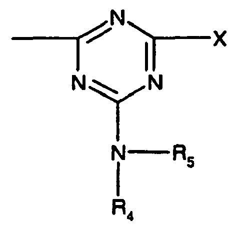 and the terminal group bonded to the triazine radical is X or

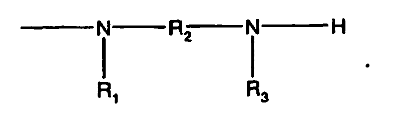

If X is halogen, it is advantageous to replace this, for example, by -OH or an amino group when the reaction is complete. Examples of amino groups which may be mentioned are pyrrolidin-1-yl, morpholino, -NH₂, -N(C₁-C₈)alkyl)₂ and -NR(C₁-C₈alkyl), in which R is hydrogen or a group of the formula (c-I).

The compounds of the formula (C-1) also cover compounds of the formula 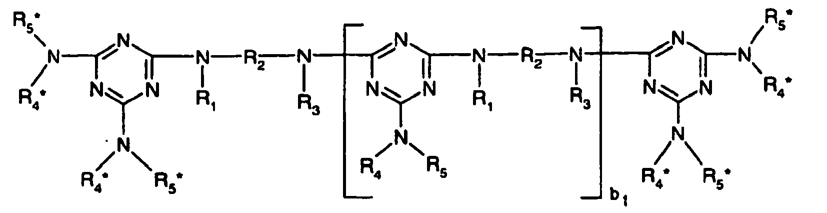 wherein R₁, R₂, R₃, R₄, R₅ and b₁are as defined above and R₄* has one of the meanings of R₄ and R₅* has one of the meanings of R₅.

One of the particularly preferred compounds of the formula (C-1) is

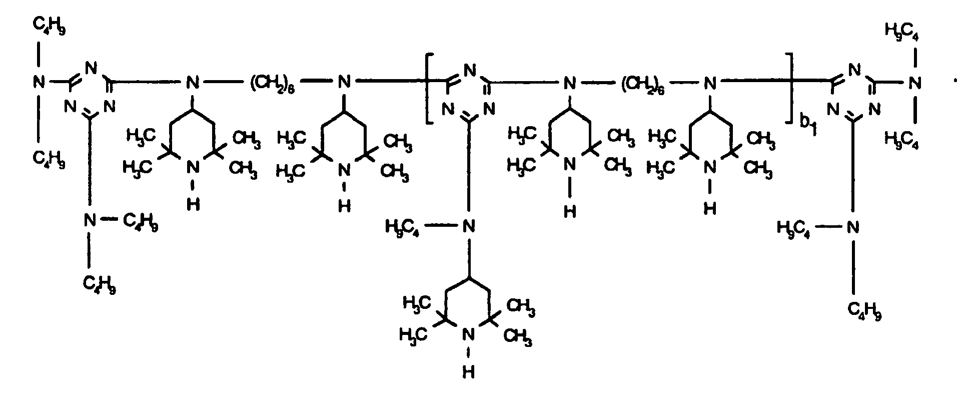

The preparation of this compound is described in Example 10 of US-A-6,046,304.

In the compounds of the formula (C-3), the terminal group bonded to the silicon atom can be, for example, (R₁₄)₃Si-O-, and the terminal group bonded to the oxygen can be, for example, -Si(R₁₄)₃.

The compounds of the formula (C-3) can also be in the form of cyclic compounds if b₂ is a number from 3 to 10, i.e. the free valences shown in the structural formula then form a direct bond.

In the compounds of the formula (C-4), the terminal group bonded to the 2,5-dioxopyrrolidine ring is, for example, hydrogen, and the terminal group bonded to the -C(R₂₃)(R₂₄)- radical is, for example,

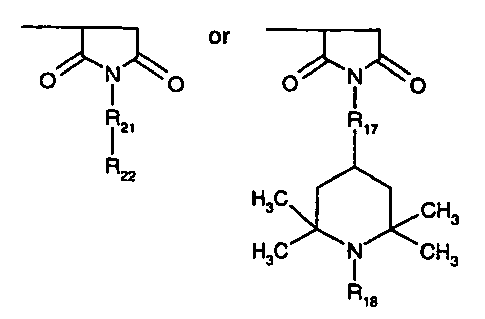

In the compounds of the formula (C-5), the terminal group bonded to the carbonyl radical is, for example, 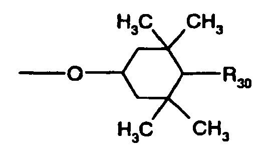 and the terminal group bonded to the oxygen radical is, for example,

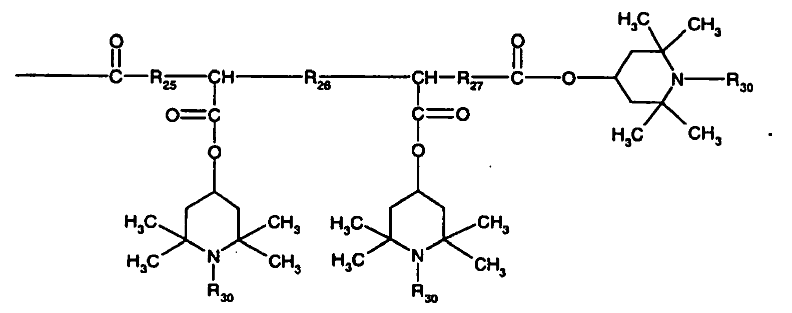

In the compounds of the formulae (C-6-α), (C-6-β) and (C-6-γ), the terminal group bonded to the triazine radical is, for example, Cl or a 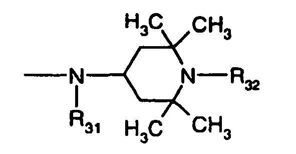 group, and the terminal group bonded to the amino radical is, for example, hydrogen or a 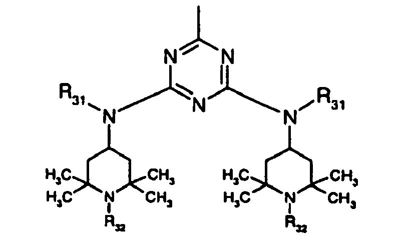 group.

According to a preferred embodiment
A₁ is hydrogen or methyl,
A₂ is a direct bond or C₂-C₆alkylene, and
n₁ is a number from 2 to 25;
n₂ and n₂* are a number from 2 to 25;
A₃ and A₄ independently of one another are hydrogen or C₁-C₄alkyl, or A₃ and A₄ together form a C₉-C₁₃alkylene group, and
the variables n₃ independently of one another are a number from 1 to 25;
n₄ is a number from 2 to 25,
A₅ and A₆ independently of one another are C₁-C₄alkyl, and
A₇ is C₁-C₄alkyl or a group of the formula (a-I)
with the proviso that at least 50 % of the radicals A₇ are a group of the formula (a-I);
m₁ is 1, 2 or 4,
if m₁ is 1, E₂ is C₁₂-C₂₀alkyl,
if m₁ is 2, E₂ is C₂-C₁₀alkylene or a group of the formula (b-1),
E₃ is C₁-C₄alkyl,
E₄ is C₁-C₆alkylene, and
E₅ and E₆ independently of one another are C₁-C₄alkyl, and
if m₁ is 4, E₂ is C₄-C₈alkanetetrayl;
two of the radicals E₇ are -COO-(C₁₀-C₁₅alkyl), and
two of the radicals E₇ are a group of the formula (b-II);
E₉ and E₁₀ together form C₉-C₁₃alkylene,
E₁₁ is hydrogen or a group -Z₁-COO-Z₂,
Z₁ is C₂-C₆alkylene, and
Z₂ is C₁₀-C₁₆alkyl;
E₁₄ is hydrogen, and
E₁₅ is C₂-C₆alkylene or C₃-C₅alkylidene;
E₁₇ is C₁₀-C₁₄alkyl;
E₂₄ is C₁-C₄alkoxy;
m₂ is 1, 2 or 3,
when m₂ is 1, E₂₆ is a group 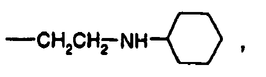 when m₂ is 2, E₂₆ is C₂-C₆alkylene, and
when m₂ is 3, E₂₆ is a group of the formula (b-IV)
the radicals E₂₇ independently of one another are C₂-C₆alkylene, and the radicals E₂₈ independently of one another are C₁-C₄alkyl or C₅-C₈cycloalkyl; and
E₃₀ is C₂-C₈alkylene;
R₁ and R₃ independently of one another are a group of the formula (c-I),
R₂ is C₂-C₈alkylene,
R₄ and R₅ independently of one another are hydrogen, C₁-C₁₂alkyl, C₅-C₆cycloalkyl or a group of the formula (c-I), or the radicals R₄ and R₅, together with the nitrogen atom to which they are bonded, form a 5- to 10-membered heterocyclic ring, and
b₁ is a number from 2 to 25;
R₇ and R₁₁ independently of one another are hydrogen or C₁-C₄alkyl,
R₈, R₉ and R₁₀ independently of one another are C₂-C₄alkylene, and
X₁, X₂, X₃, X₄, X₅, X₆, X₇ and X₈ independently of one another are a group of the formula (c-II),
R₁₂ is hydrogen, C₁-C₄alkyl, C₅-C₈cycloalkyl or a group of the formula (c-1);
R₁₄ is C₁-C₄alkyl,
A₁₅ is C₃-C₆alkylene, and
b₂ is a number from 2 to 25;
R₁₇ and R₂₁ independently of one another are a direct bond or a group -N(X₉)-CO-X₁₀-CO-N(X₁₁)-,
X₉ and X₁₁ independently of one another are hydrogen or C₁-C₄alkyl,
X₁₀ is a direct bond,
R₁₉ and R₂₃ are C₁-C₂₅alkyl or phenyl,
R₂₀ and R₂₄ are hydrogen or C₁-C₄alkyl,
R₂₂ is C₁-C₂₅alkyl or a group of the formula (c-I), and
b₃ is a number from 1 to 25;
R₂₅, R₂₆, R₂₇, R₂₈ and R₂₉ independently of one another are a direct bond or C₁-C₄alkylene, and
b₄ is a number from 1 to 25;
b'₅, b"₅ and b'''₅ independently of one another are a number from 2 to 4, and
R₃₁ is hydrogen, C₁-C₄alkyl, C₅-C₈cycloalkyl, phenyl or benzyl.

A non-agricultural article of interest is one wherein component (III) is one or more sterically hindered amine compounds selected from the group consisting of the compounds of the formulae
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) and (C-5-a) and a product (C-6-a); 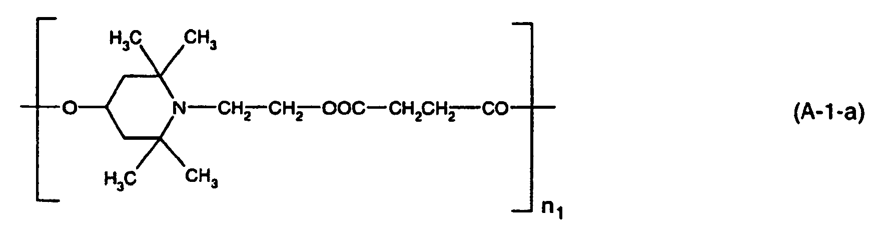 wherein n₁ is a number from 2 to 20; 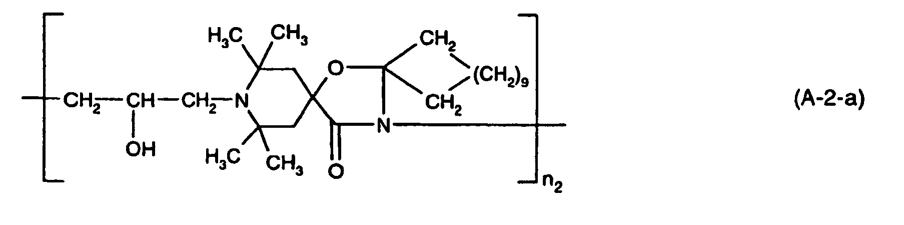 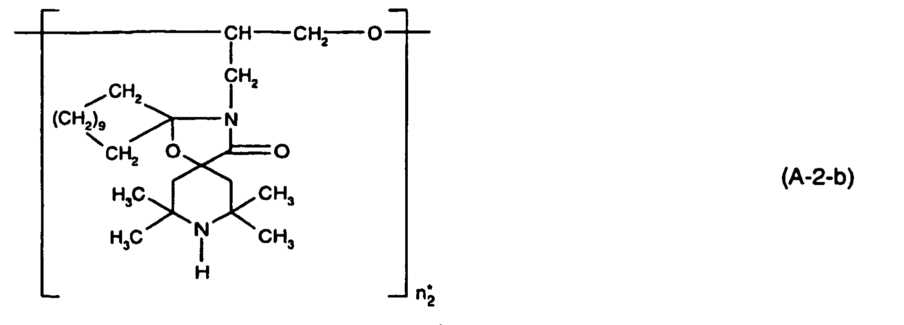 wherein n₂ and n₂* are a number from 2 to 20; 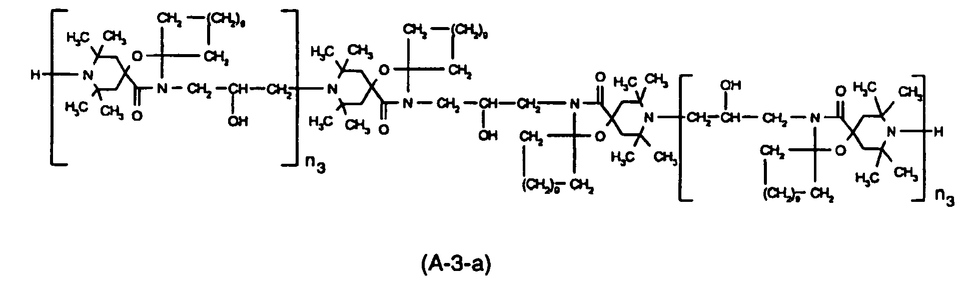 wherein the variables n₃ independently of one another are a number from 1 to 20; 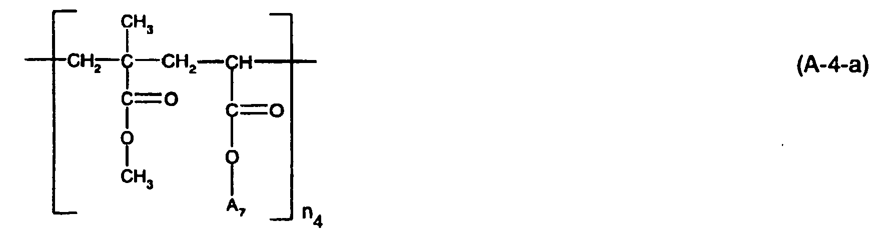 wherein n₄ is a number from 2 to 20, and
at least 50 % of the radicals A₇ are a group of the formula (a-I) 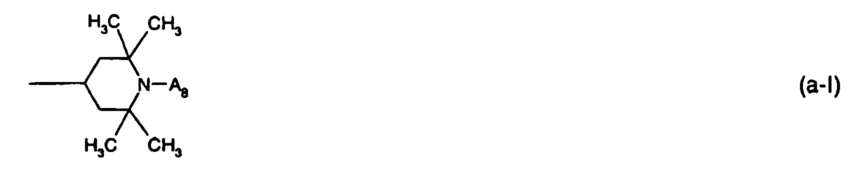 wherein A₈ is hydrogen, C₁-C₈alkyl, O^{·}; -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
and the remaining radicals A₇ are ethyl; 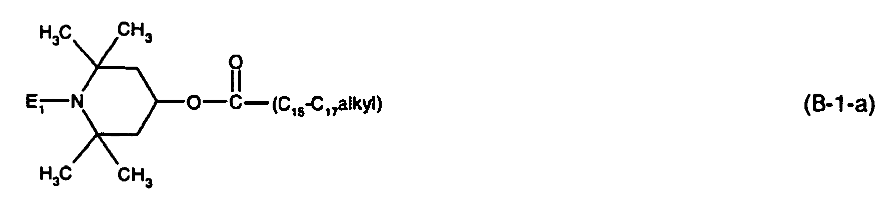 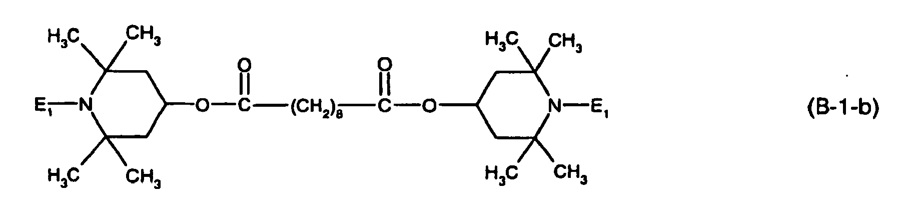 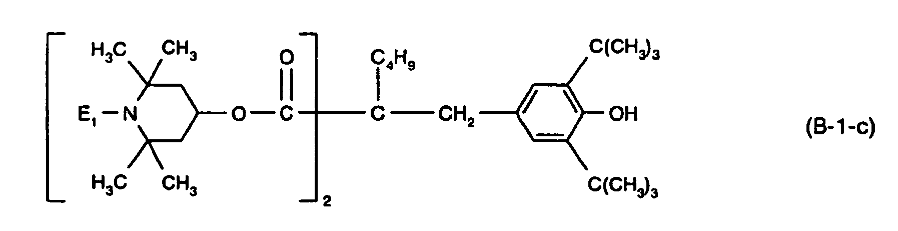 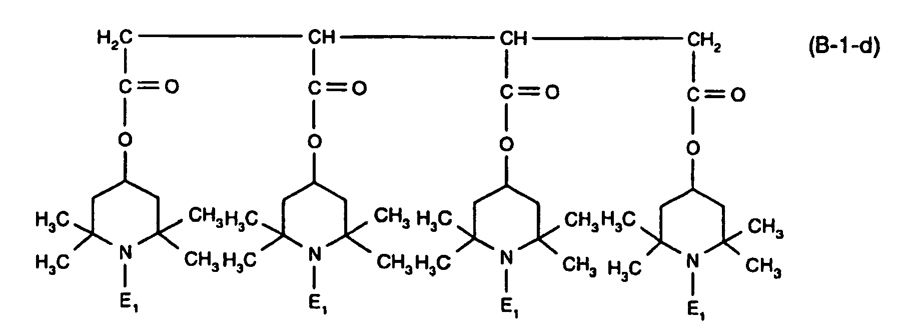 wherein E₁ is hydrogen, C₁-C₈alkyl, O^{·}, -OH, -CH₂CN, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 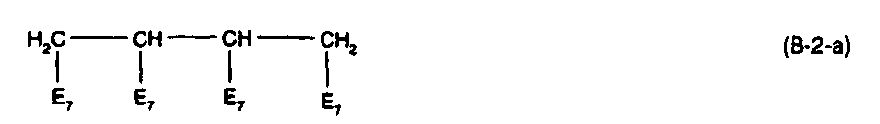 in which two of the radicals E₇ are -COO-C₁₃H₂₇ and
two of the radicals E₇ are 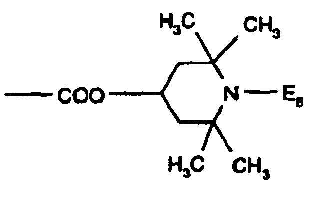 and E₈ being hydrogen, C₁-C₈ alkyl, -O^{·}, -OH, -CH₂CN, C₁-C₁₈ alkoxy, C₈-C₁₂ cycloalkoxy, C₃-C₈ alkenyl, C₇-C₈ phenylalkyl unsubstituted or substituted on the phenyl by 1, 2 or 3 C₁-C₄alkyl ; or C₁-C₈acyl; 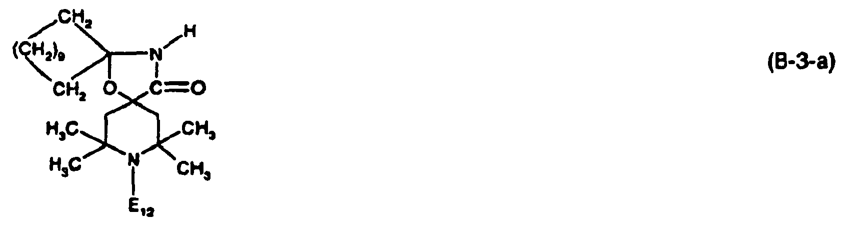 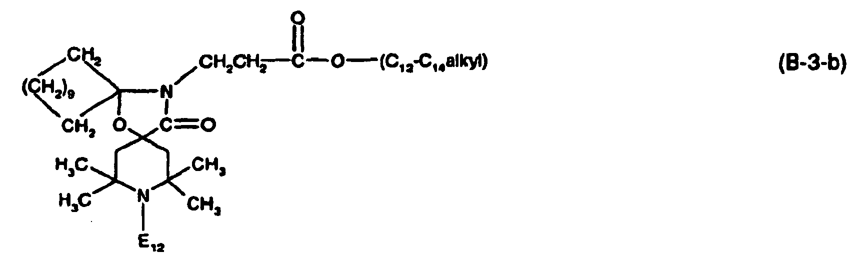 wherein E₁₂ hydrogen, C₁-C₈ alkyl, -O^{·}, -OH, -CH₂CN, C₁-C₁₈ alkoxy, C₈-C₁₂ cycloalkoxy, C₃-C₈ alkenyl, C₇-C₈ phenylalkyl unsubstituted or substituted on the phenyl by 1, 2 or 3 C₁-C₄alkyl ; or C₁-C₈acyl; 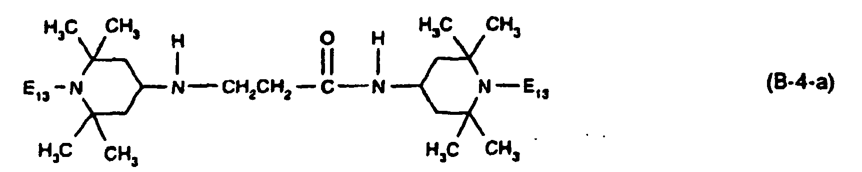 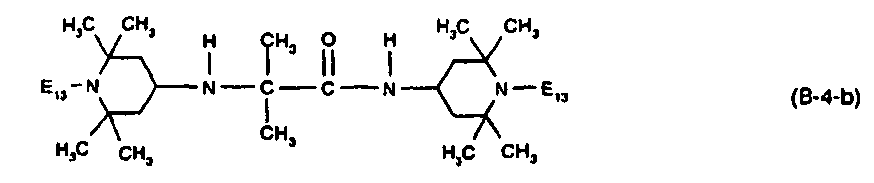 wherein E₁₃ is
hydrogen, C₁-C₈ alkyl, -O^{·}, OH, -CH₂CN, C₁-C₁₈alkoxy, C₅-C₁₂ cycloalkoxy, C₃-C₆ alkenyl, C₇-C₉phenylalkyl unsubstituted or substituted on the phenyl by 1, 2 or 3 C₁-C₄ alkyl ; or C₁-C₈acyl; 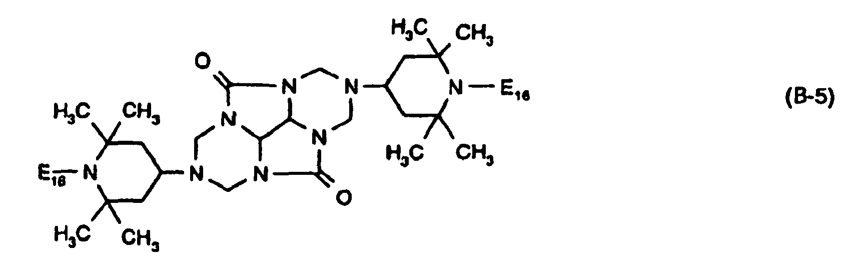 wherein E₁₈ is hydrogen, C₁-C₈ alkyl, -O^{·}, OH, -CH₂CN, C₁-C₁₈alkoxy, C₅-C₁₂ cycloalkoxy, C₃-C₆ alkenyl, C₇-C₉phenylalkyl unsubstituted or substituted on the phenyl by 1, 2 or 3 C₁-C₄ alkyl ; or C₁-C₈acyl; 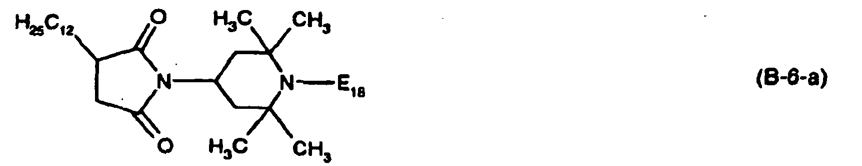 wherein E₁₈ is hydrogen, C₁-C₈ alkyl, -O^{·}, OH, -CH₂CN, C₁-C₁₈alkoxy, C₅-C₁₂ cycloalkoxy, C₃-C₆ alkenyl, C₇-C₉phenylalkyl unsubstituted or substituted on the phenyl by 1, 2 or 3 C₁-C₄ alkyl ; or C₁-C₈acyl; 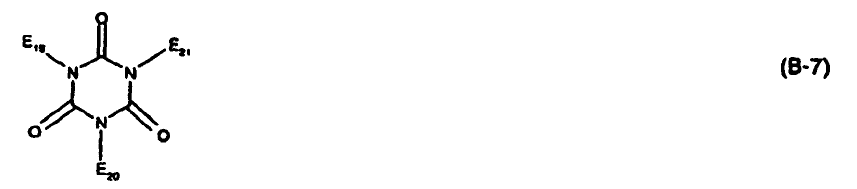 in which E₁₉, E₂₀ and E₂₁ independently of one another are a group of the formula (b-III) 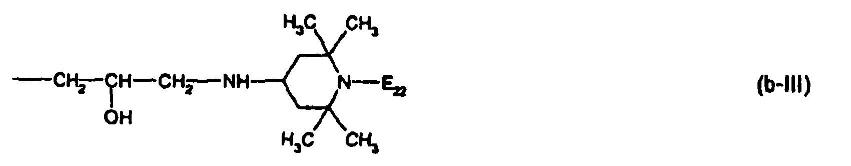 wherein E₂₂ is hydrogen, C₁-C₈ alkyl, -O^{·}, OH, -CH₂CN, C₁-C₁₈alkoxy, C₅-C₁₂ cycloalkoxy, C₃-C₆ alkenyl, C₇-C₉phenylalkyl unsubstituted or substituted on the phenyl by 1, 2 or 3 C₁-C₄ alkyl ; or C₁-C₈acyl; 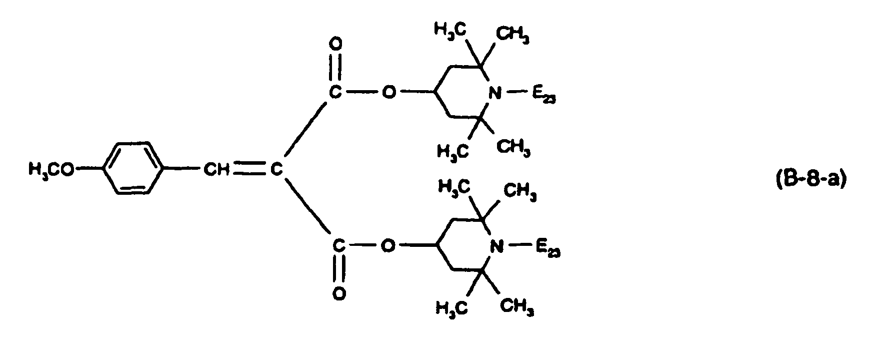 wherein E₂₃ is hydrogen, C₁-C₈alkyl, -O^{·}, -ON, -CH₂CN, C₁-C₁₈alkoxy, C₅-C₁₂ cycloalkoxy, C₃-C₆ alkenyl, C₁-C₉phenylalkyl unsubstituted or substituted on the phenyl by 1, 2 or 3 C₁-C₄alkyl ; or C₁-C₈acyl; 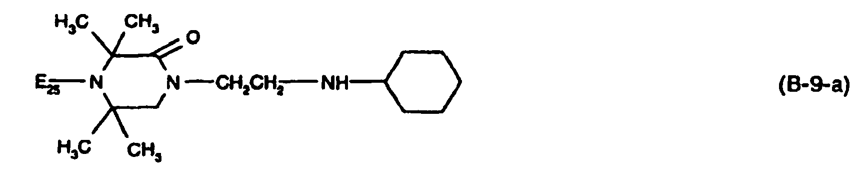 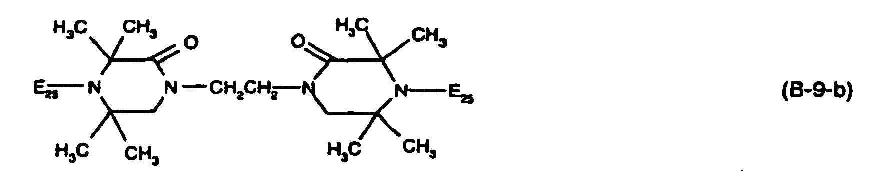 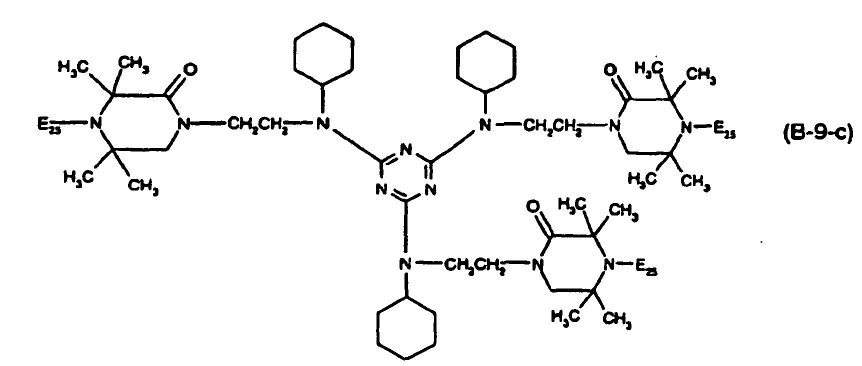 wherein E₂₅ is hydrogen, C₁-C₈alkyl, -O^{·}, -ON, -CH₂CN, C₁-C₁₈alkoxy, C₅-C₁₂ cycloalkoxy, C₃-C₆ alkenyl, C₁-C₉phenylalkyl unsubstituted or substituted on the phenyl by 1, 2 or 3 C₁-C₄alkyl ; or C₁-C₈acyl; 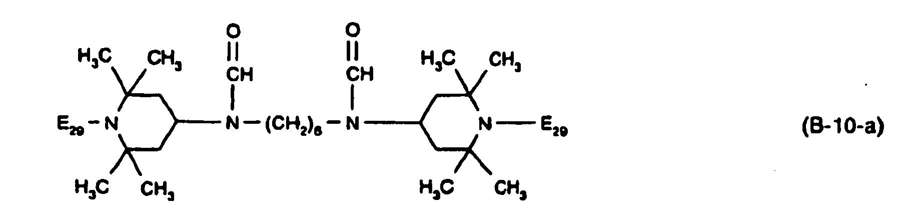 wherein E₂₉ is hydrogen, C₁-C₈ alkyl, -O^{·}, -OH, -CH₂CN, C₁-C₁₈alkoxy, C₅-C₁₂ cycloalkoxy, C₃-C₈ alkenyl, C₇-C₉phenylalkyl unsubstituted or substituted on the phenyl by 1, 2 or 3 C₁-C₄alkyl; or C₁-C₈acyl; 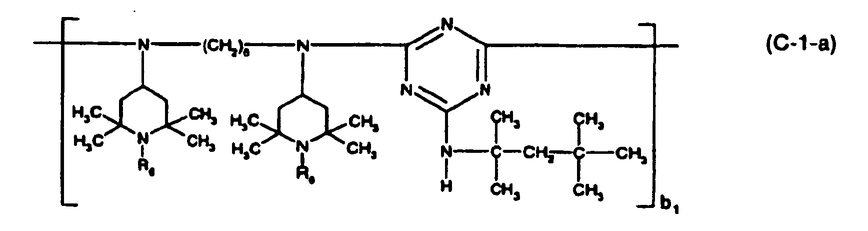 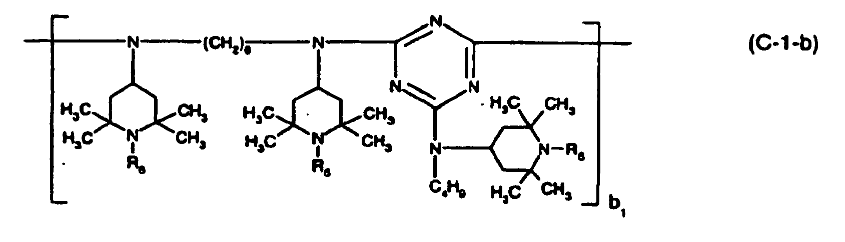 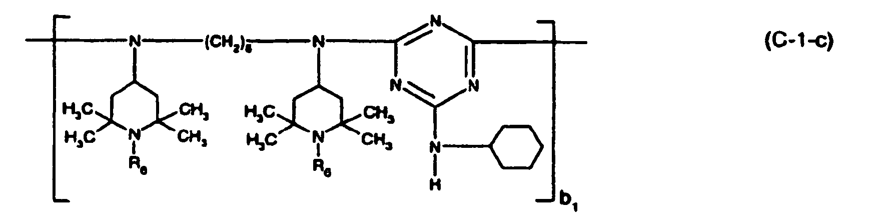 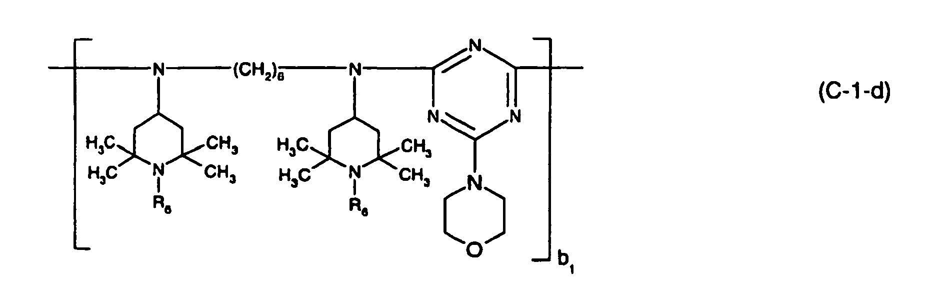 wherein b₁ is a number from 2 to 20 and R₆ is hydrogen, C₁-C₈alkyl, O^{·}, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 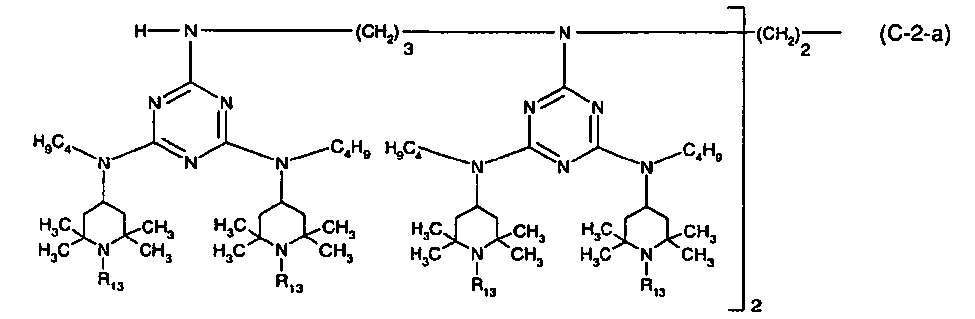 wherein R₁₃ has one of the meanings of R₆, 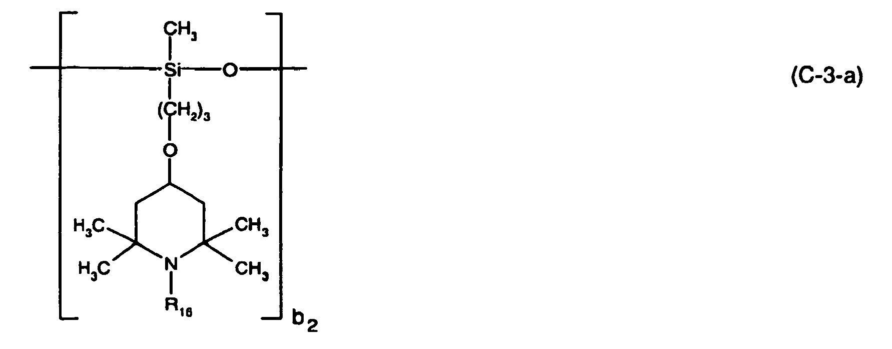 wherein b₂ is a number from 2 to 20 and R₁₆ has one of the meanings of R₆; 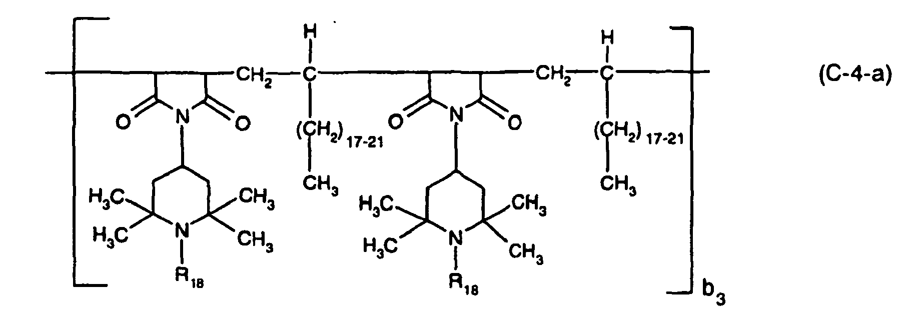 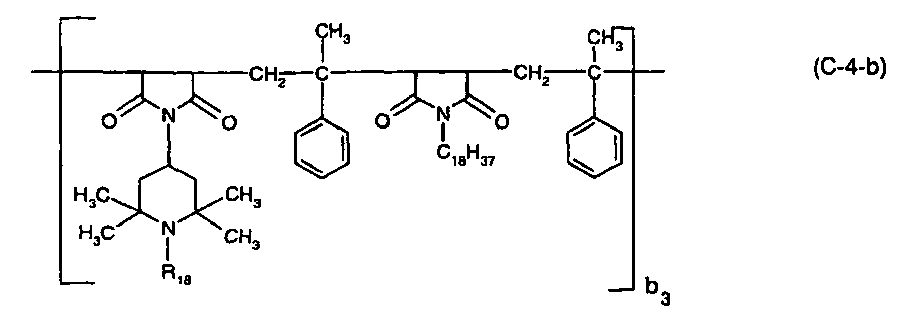 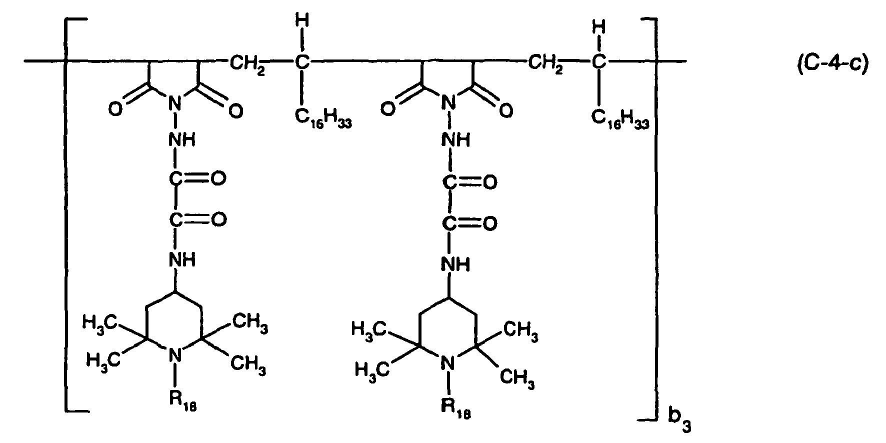 wherein b₃ is a number from 1 to 20 and R₁₈ has one of the meanings of R₆; 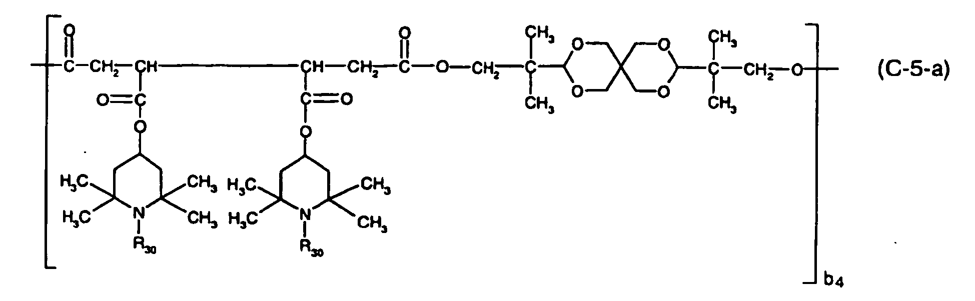 wherein b₄ is a number from 1 to 20 and R₃₀ has one of the meanings of R₆;
a product (C-6-a) obtainable by reacting a product, obtained by reaction of a polyamine of the formula (C-6-1-a) with cyanuric chloride, with a compound of the formula (C-6-2-a) 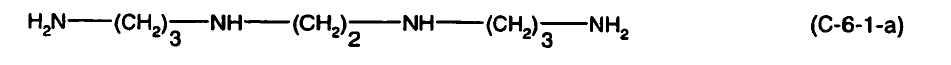 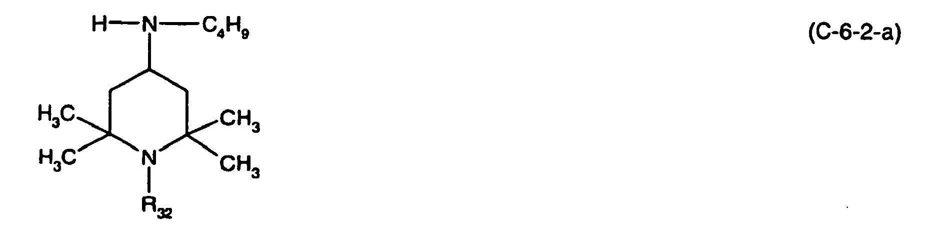 in which R₃₂ has one of the meanings of R₆.

According to a preferred embodiment component (III) is a compound of the formula
(A-1-a), (A-2-a), (A-2-b),
(B-1-a), (B-1-b), (B-1-c), (B-1-d), (B-2-a), (B-3-a), (B-3-b), (B-4-a), (B-4-b), (B-5), (B-6-a), (B-8-a), (B-9-b), (B-10-a),
(C-1-a), (C-1-b), (C-1-c), (C-1-d), (C-2-a), (C-3-a), (C-4-a) or (C-5-a) or a product (C-6-a).

According to a particular preferred embodiment component (III) is a compound of the formula
(A-1-a), (A-2-a), (A-2-b),
(C-1-a), (C-1-b), (C-1-c), (C-1-d), (C-2-a), (C-3-a), (C-4-a) or (C-5-a) or a product (C-6-a).

A non-agricultural article which is of interest contains as component (III) two different sterically hindered amine compounds selected from the group consisting of the compounds of the formulae
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) and (C-5-a) and a product (C-6-a);
with the proviso that the two different sterically hindered amine compounds are not selected from the same generic formula.

Component (III) is particularly preferred a compound of the formula (A-1-a), or
a compound of the formula (C-1-a) wherein R₆ is hydrogen, or
a combination of a compound of the formula (A-1-a) with a compound of the formula (C-1-a) wherein R₆ is hydrogen, or
a combination of a compound of the formula (A-1-a) with a compound of the formula (C-2-a) wherein R₁₃ is methyl, or
a combination of a compound of the formula (B-1-b) wherein E₁ is hydrogen with a compound of the formula (C-1-a) wherein R₆ is hydrogen.

Component (II) is preferably a C₂-C₂₄carboxylate of Fe, Ce, Co, Mn, Cu or V, in particular Ce, Co or Mn.

C₁₀-C₂₀alkanoates of Ce, Co or Mn or C₁₀-C₂₀alkenoates of Ce, Co or Mn are of particular interest.

Examples of component (II) are stearates, oleates, linoleates, linolenates, neodecanoates, behenates, myristates, erucates and naphthenates of Fe, Ce, Co, Mn, Cu or V.
A particular preferred embodiment relates to stearates of Ce, Co or Mn.

Examples of component (I) are :
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-l-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbomene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
6c. Hydrogenated aromatic polymers derived from hydrogenation of polymers mentioned under 6a.).
   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Crosslinked polymers derived from aldehydes on the one hand and phenols, ureas and melamines on the other hand, such as phenol/formaldehyde resins, urea/formaldehyde resins and melamine/formaldehyde resins.
23. Drying and non-drying alkyd resins.
24. Unsaturated polyester resins derived from copolyesters of saturated and unsaturated dicarboxylic acids with polyhydric alcohols and vinyl compounds as crosslinking agents, and also halogen-containing modifications thereof of low flammability.
25. Crosslinkable acrylic resins derived from substituted acrylates, for example epoxy acrylates, urethane acrylates or polyester acrylates.
26. Alkyd resins, polyester resins and acrylate resins crosslinked with melamine resins, urea resins, isocyanates, isocyanurates, polyisocyanates or epoxy resins.
27. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
28. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
29. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPOMIPS, PPO/PA 6.6 and copolymers, PA/HDPE, PA/PP, PA/PPO, PBT/PC/ABS or PBT/PET/PC.

Component (I) is preferably a synthetic polymer, in particular from one of the above groups. Polyolefins are preferred and polyethylene, polypropylene, a polyethylene copolymer or a polypropylene copolymer are particularly preferred.

According to a further preferred embodiment, component (I) is a polyolefin homo- or copolymer, a starch modified polyolefin, a starch based polymer composite or a biopolymer.

According to another preferred embodiment component (I) is a biopolymer selected from the group consisting of polycaprolactone, polylactic acid, polyglycolic acid, polyhydroxybutyrate-valerate, polybutylene succinate, polyvinyl alcohol, polyhydroxyalcanoate and polyethylene adipate.

The non-agricultural article of this invention may contain further one or more conventional additives. Examples are
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-mathylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
   1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
   1.4. Tocopherols, for example α-tocopherol, β-tocopherol, γ-tocopherol, δ-tocopherol and mixtures thereof (vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethytidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra(5-tert-butyl-4-hydroxy-2-methylphenyl)pentane.
   1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
   1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)maionate, di-dodecylmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bis(octylmercapto)-6-(3,5-di-tert-butyl-4-hydroxy-anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
   1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
   1.12. Acylaminophenols, for example 4-hydroxylauranilide, 4-hydroxystearanilide, octyl N-(3,5-di-tert-butyl-4-hydroxyphenyl)carbamate.
   1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylol propane, 4-hydroxymethyl-1-phospha-2,6,7-trioxabicyclo[2.2.2]octane.
   1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.
   1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®}XL-1, supplied by Uniroyal).
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-l-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyl-diphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene, N,N-bis(2,2,6,6-tetramethylpiperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.
2. UV absorbers and light stabilisers
   2.1. 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-yiphenol]; the transesterification product of 2-[3'-tert-butyl-5'-(2-methoxycarbonylethyl)-2'-hydroxyphenyl]-2H-benzotriazole with polyethylene glycol 300; 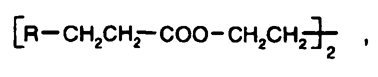 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]-benzotriazole; 2-[2'-hydroxy-3'-(1,1,3,3-tetramethylbutyl)-5'-(α,α-dimethylbenzyl)phenyl]benzotriazole.
   2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
   2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.
   2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.
   2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(t,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine.
   2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
   2.8. 2-(2-Hvdroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3.5-triazine. 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine.
3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicytoyl)thiopropionyl dihydrazide.
4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyt-1,1'-biphenyl-2,2'-diyl)phosphite, 5-butyl-5-ethyl-2-(2,4,6-tri-tert-butylphenoxy)-1,3,2-dioxaphosphirane.
   The following phosphites are especially preferred:
   Tris(2,4-di-tert-butylphenyl) phosphite (Irgafos^{®}168, Ciba-Geigy), tris(nonylphenyl) phosphite, 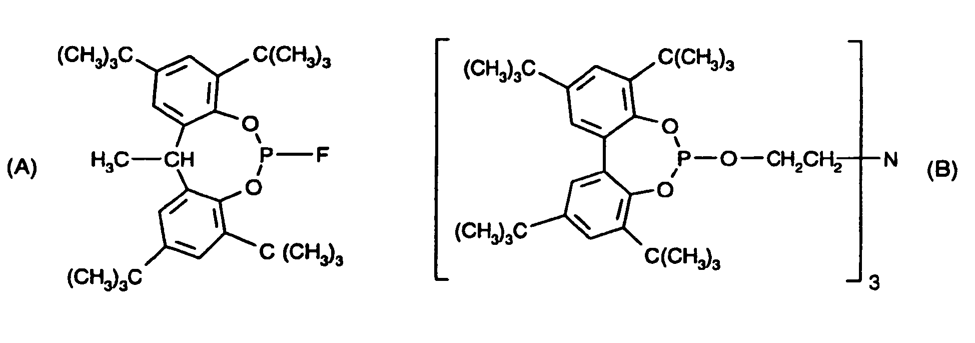 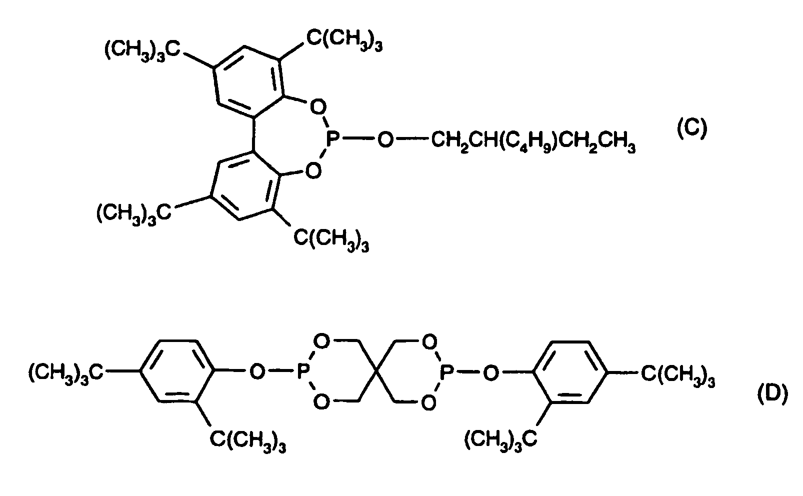 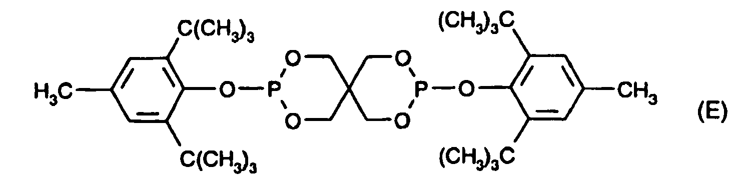 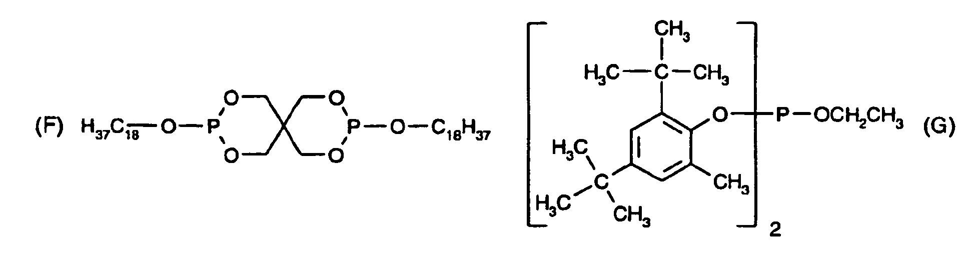
5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.
7. Thiosynergists, for example dilauryl thiodipropionate or distearyl thiodipropionate.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilisers, for example copper salts in combination with iodides and/or phosphorus compounds and salts of divalent manganese.
10. Basic co-stabilisers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.
11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.
12. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.
13. Other additives, for example plasticisers, lubricants, emulsifiers, pigments, rheology additives, catalysts, flow-control agents, optical brighteners, flameproofing agents, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butylbenzofuran-2-one, 5,7-di-tert-butyl-3-[4-(2-stearoyloxyethoxy)phenyl]-benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one.

A preferred non-agricultural article additionally contains an aliphatic poly hydroxy-carboxyl acid, in particular citric acid.

An aliphatic poly hydroxy-carboxyl acid is in particular an aliphatic acid having either more than one -OH or more than one -COOH group in the organic acid. Examples are the aliphatic, dihydroxy, monocarboxyl acids, such as glyoxylic acid and glyceric acid; the aliphatic, polyhydroxy, monocarboxyl acids, such as erythric acid, arabic acid or mannitic acid; the aliphatic, monohydric, dicarboxyl acids, such as tartronic acid or malic acid; the aliphatic, dihydroxy, dicarboxyl acids, such as tartaric acid; the aliphatic, polyhydroxy, dicarboxyl acids, such as trihydroxyglutaric acid and succharic acid; and the aliphatic, monohydroxy, tricarboxyl acids, such as citric acid.

A further preferred embodiment of this invention relates to a non-agricultural article which contains in addition one or more of the following components
(IV) an antioxidant,
(V) an UV absorber,
(VI) a filler,
(VII) a pigment,
(VIII) an inorganic or organic salt of Ca, Mg, Zn or Al.

Preferred antioxidants (component IV)) are those which are described above under item 1.

Suitable examples of fillers (component (VI)) are those described above under item 12. Preferred fillers are inorganic or synthetic carbonates, nepheline syenite, talc, magnesium hydroxide, aluminum trihydrate, diatomaceous earth, mica, natural or synthetic silica and calcinated clay.

Examples of the UV absorber (component (V)) are a 2-(2'-hydroxyphenyl)benzotriazole, a 2-hydroxybenzophenone, an ester of substituted or unsubstituted benzoic acid, an acrylate, an oxamide, a 2-(2-hydroxyphenyl)-1,3,5-triazine, a monobenzoate of resorcinol or a formamidine.

The 2-(2'-hydroxyphenyl)benzotriazole is e.g. 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyt-2'-hydroxyphenyl)benzotriazole, 2-(2'-hydroxy-4'-octyloxyphenyl)benzotriazole, 2-(3',5'-di-tort-amyl-2'-hydroxyphenyl)benzotriazole, 2-(3',5'-bis-(α,α-dimethylbenzyl)-2'-hydroxyphenyl)benzotriazole, mixture of 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol] or the transesterification product of 2-[3'-tert-butyl-5'-(2-methoxycarbonylethyl)-2'-hydroxyphenyl]-2H-benzotriazole with polyethylene glycol 300; [R-CH₂CH₂-COO(CH₂)₃-]₂ where R = 3'-tert-butyl-4'-hydroxy-5'-2H-benzotriazol-2-ylphenyl.

2-(3',5'-Di-tert-butyl-2'-hydroxyphenyl)-5-chloro-benzotriazole, 2-(3'-tert-butyl-2'-hydroxy-5'-methylphenyl)-5-chloro-benzotriazole and 2-(3',5'-di-tert-amyl-2'-hydroxyphenyl)-benzotriazole are preferred.

The 2-hydroxybenzophenone is for example the 4-hydroxy, 4-methoxy, 4-octyloxy, 4-decyloxy, 4-dodecyloxy, 4-benzyloxy, 4,2',4'-trihydroxy or 2'-hydroxy-4,4'-dimethoxy derivatives.

2-Hydroxy-4-octyloxybenzophenone is preferred.

The ester of a substituted or unsubstituted benzoic acid is for example 4-tert-butyl-phenyl salicylate, phenyl salicylate, octylphenyl salicylate, dibenzoyl resorcinol, bis(4-tert-butylbenzoyl) resorcinol, benzoyl resorcinol, 2,4-di-tertbutylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate or 2-methyl-4,6-di-tert-butylphenyl 3,5-di-tert-butyl-4-hydroxybenzoate. 2,4-Di-tert-butylphenyl 3,5-di-tert-butyl-4-hydroxybenzoate and hexadecyl 3,5-di-tert-butyl-4-hydroxybenzoate are preferred.

The acrylate is for example ethyl α-cyano-β,β-diphenytacrytate, isooctyl α-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate or N-(β-carbomethoxy-β-cyanovinyl)-2-methylindoline.

The oxamide is for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide or its mixture with 2-ethoxy-2'-ethyl-5,4'-di-tert-butoxanilide or mixtures of ortho- and para-methoxydisubstituted oxanilides or mixtures of o- and p-ethoxy-disubstituted oxanilides.

The 2-(2-hydroxyphenyl)-1,3,5-triazine is for example 2,4,6-tris(2-hydroxy-4-octyloxyphenyl)-1,3,5-triazine, 2-(2-hydroxy-4-octytoxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2.4-bis(2-hydroxy-4-propyloxyphenyl)-6-(2,4-dimethylphenyl)-1,3,5-triazine, 2-(2-hydroxy-4-octyloxyphenyl)-4,-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2.4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-[2-hydroxy-4-(2-hydroxy-3-dodecyloxy-propoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine or 2-[2-hydroxy-4-(2-ethylhexyloxy)phenyl]-4,6-bis[4-phenylphenyl]-1,3,5-triazine.

2-(2-Hydroxy-4-octyloxyphenyl)-4,6-bis(2,4-dimethylphenyl)-1,3,5-triazine, 2-(2-hydroxy-4-hexyloxy)phenyl-4,6-diphenyl-1,3,5-triazine and 2-[2-hydroxy-4-(2-ethylhexyloxy)phenyl]-4,6-bis[4-phenylphenyl]-1,3,5-triazine are preferred.

The monobenzoate of resorcinol is for example the compound of the formula

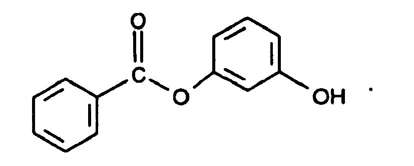

The formamidine is for example the compound of the formula

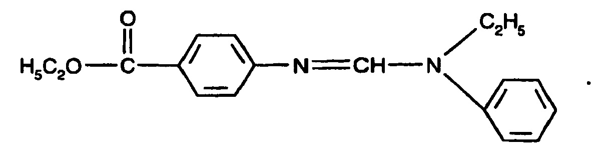

The UV absorber is in particular a 2-(2'-hydroxyphenyl)benzotriazole, a 2-hydroxybenzophenone or a hydroxyphenyltriazine.

The pigment (component (VII)) may be an inorganic or organic pigment.

Examples of inorganic pigments are titanium dioxide, zinc oxide, carbon black, cadmium sulfide, cadmium selenide, chromium oxide, iron oxide, lead oxide and so on.

Examples of organic pigments are azo pigments, anthraquinones, phthalocyanines, tetrachloroisoindolinones, quinacridones, isoindolines, perylenes, pyrrolopyrroles (such as Pigment Red 254) and so on.

All pigments described in "Gächter/Müller: Plastics Additives Handbook, 3rd Edition, Hanser Publishers, Munich Vienna New York", page 647 to 659, point 11.2.1.1 to 11.2.4.2 can be used as component (VII).

Particularly preferred pigments are titanium dioxide or carbon black, optionally in combination with an organic pigment.

Examples of such organic pigments are:
C.I. (Colour Index) Pigment Yellow 93, C.I. Pigment Yellow 95, C.I. Pigment Yellow 138, C.I. Pigment Yellow 139, C.I. Pigment Yellow 155, C.I. Pigment Yellow 162, C.I. Pigment Yellow 168, C.I. Pigment Yellow 180, C.I. Pigment Yellow 183, C.I. Pigment Red 44, C.I. Pigment Red 170, C.I. Pigment Red 202, C.I. Pigment Red 214, C.I. Pigment Red 254, C.I. Pigment Red 264, **C.I.** Pigment Red 272, C.I. Pigment Red 48:2, C.I. Pigment Red 48:3, C.I. Pigment Red 53:1, C.I. Pigment Red 57:1, C.I. Pigment Green 7, C.I. Pigment Blue 15:1, C.I. Pigment Blue 15:3 and C.I. Pigment Violet 19.

The organic salt of calcium, magnesium, zinc or aluminum defined in component (VII) is preferably a compound of the formula MeL₂, in which Me is calcium, magnesium or zinc, or a compound of the formula AlL₃. L is an anion of an organic acid or of an enol. The organic acid can, for example, be a sulfonic acid, sulfinic acid, phosphonic acid or phosphinic acid, but is preferably a carboxylic acid. The acid can be aliphatic, aromatic, araliphatic or cycloaliphatic; it can be linear or branched; it can be substituted by hydroxyl or alkoxy groups; it can be saturated or unsaturated and it preferably contains 1 to 24 carbon atoms.

Examples of carboxylic acids of this type are formic, acetic, propionic, butyric, isobutyric, caprioic, 2-ethylcaproic, caprylic, capric, lauric, palmitic, stearic, behenic, oleic, lactic, ricinoleic, 2-ethoxypropionic, benzoic, salicylic, 4-butylbenzoic, toluic, 4-dodecylbenzoic, phenylacetic, naphthylacetic, cyclohexanecarboxylic, 4-butylcyclohexanecarboxylic or cyclohexylacetic acid. The carboxylic acid can also be a technical mixture of carboxylic acids, for example technical mixtures of fatty acids or mixtures of alkylated benzoic acids.

Examples of organic acids containing sulfur or phosphorus are methanesulfonic, ethanesulfonic, α,α-dimethylethanesulfonic, n-butanesulfonic, n-dodecanesulfonic, benzenesulfonic, toluenesulfonic, 4-nonylbenzenesulfonic, 4-dodecylbenzenesulfonic or cyclohexanesulfonic acid, dodecanesulfinic, benzenesulfinic or naphthalenesulfinic acid, butylphosphonic acid, phenylphosphonic acid, monomethyl or monoethyl phenylphosphonate, monobutyl benzylphosphonate, dibutylphosphinic acid or diphenylphosphinic acid.

If L is an enolate anion, it is preferably an anion of a β-dicarbonyl compound or of an o-acylphenol. Examples of β-dicarbonyl compounds are acetylacetone, benzoylacetone, dibenzoylmethane, ethyl acetoacetate, butyl acetoacetate, lauryl acetoacetate or α-acetylcyclohexanone. Examples of o-acylphenols are 2-acetylphenol, 2-butyroylphenol, 2-acetyl-1-naphthol, 2-benzoylphenol or salicylaldehyde. The enolate is preferably the anion of a β-dicarbonyl compound having 5 to 20 carbon atoms.

Organic salts of zinc or magnesium are preferably an acetylacetonate or an aliphatic monocarboxylate having, for example, 1 to 24 carbon atoms. Magnesium acetate, laurate and stearate, zinc formate, acetate, oenanthate, laurate and stearate as well as zinc acetylacetonate and magnesium acetylacetonate are some of the particular preferred examples.

Zinc stearate, magnesium stearate, zinc acetylacetonate, magnesium acetylacetonate, zinc acetate and magnesium acetate are of special interest.

The inorganic salt of zinc, magnesium or aluminum is for example a carbonate containing compound such as
- Zn-hydroxide-carbonate, Mg-hydroxide-carbonate, dolomite, e.g a Ca/Mg carbonate such as Microdol Super (RTM) from Micro Minerals (RTM); or
- a natural or synthetic hydrotalcite.

The natural hydrotalcite is held to possess a structure Mg₆Al₂(OH)₁₆CO₃ **•** 4 H₂O.
A typical empirical formula of a synthetic hydrotalcite is
Al₂Mg_{4.35}OH_{11.36}CO_{3(1.67)} **•** × H₂O.
Examples of the synthetic product include:
Mg_{0.7}Al_{0.3}(OH)₂(CO₃)_{0.15} **•** 0.54 H₂O,
Mg_{4.5}Al₂(OH)₁₃CO₃ **•** 3.5 H₂O, or
Mg_{4.2}Al(OH)_{12.4}CO₃.

Preferred synthetic hydrotalcites are L-55R II (RTM) from REHEIS (RTM) as well as ZHT-4A (RTM) and DHT-4A (RTM) from Kyowa Chemical Industry Co (RTM).

Component (VII) can also be a mixture of two different Mg- and/or Zn- compounds, for example
- Mg-stearate and hydrotalcite (DHT-4A (RTM)),
- Zn-stearate and hydrotalcite (DHT-4A (RTM)),
- Mg-acetylacetonate and hydrotalcite (DHT-4A (RTM)),
- Mg-oxide and hydrotalcite (DHT-4A (RTM)),
- Mg-hydroxide and hydrotalcite (DHT-4A (RTM)),
- Zn-hydroxide-carbonate and Mg-stearate,
- Zn-hydroxide-carbonate and Zn-stearate,
- Zn-hydroxide-carbonate and Mg-acetylacetonate,
- Zn-hydroxide-carbonate and Mg-oxide,
- Zn-hydroxide-carbonate and Zn-oxide,
- Zn-hydroxide-carbonate and Mg-hydroxide,
- hydrotalcite (REHEIS (RTM)) and Mg-stearate,
- hydrotalcite (REHEIS (RTM)) and Zn-stearate,
- hydrotalcite (REHEIS (RTM)) and Mg-oxide,
- dolomite (Microdol Super (RTM)) and Zn-stearate,
- dolomite (Microdol Super (RTM)) and Mg-stearate,
- dolomite (Microdol Super (RTM)) and Zn-oxide,
- dolomite (Microdol Super (RTM)) and Mg-hydroxide,
- Mg-stearate and Zn-stearate,
- Mg-stearate and Zn-acetylacetonate,
- Mg-stearate and Mg-oxide,
- Mg-stearate and Zn-oxide,
- Mg-stearate and Mg-hydroxide,
- Zn-stearate and Mg-acetate,
- Zn-stearate and Mg-oxide,
- Zn-stearate and Mg-hydroxide,
- Mg-acetylacetonate and Zn-acetylacetonate,
- Mg-acetylacetonate and Mg-oxide,
- Mg-acetylacetonate and Zn-oxide,
- Mg-acetylacetonate and Mg-hydroxide,
- Zn-acetylacetonate and Mg-oxide,
- Zn-acetylacetonate and Zn-oxide, or
- Mg-oxide and Zn-oxide.

In this case, the two different compounds of component (VII) may be present in a weight ratio of 1:10 to 10:1.

According to a preferred embodiment of this invention component (VII) is selected from the group consisting of Mg carboxylates, Zn carboxylates, Al carboxylates, Mg oxides, Zn oxides, Al oxides, Mg hydroxides, Zn hydroxides, Al hydroxides, Mg carbonates, Zn carbonates or Al carbonates.

Preferred examples of component (VII) as an organic salt of Ca are carboxylates such as Ca-stearate, Ca-laurate, Ca-lactate and Ca-stearoyl-lactate.

Examples of component (VII) as an inorganic salt of Ca are CaO, Ca(OH)₂, CaCO₃, CaCl₂, CaF₂, Ca₃(PO₄)₂, CaHPO₄, Ca(PO₃)₂, Ca₂P₂O₇, CaSO₄ and CaSio₃.

According to another preferred embodiment of this invention component (VII) is a Ca carboxylate, a Mg carboxylate, a Zn carboxylate or a hydrotalcite.

Components (II) and (III) and optionally components (IV) to (VIII) may be added to the organic polymer either individually or mixed with one another.

Components (II) and (III) and optionally components (IV) to (VIII) are present in the organic polymer in an amount suitable to obtain a sufficient weathering resistance and to initiate a controlled degradation at a desired moment.

The possibility of lifetime control is fundamental for non-agricultural articles. The article has to keep its properties and its performance during the service and degradation has to take place when the function of the article is finished. Service lifetimes can vary dramatically.

The main components being present in the organic polymer are one or more prodegradant additives (component (II)) and one or more stabilizers (components (III) to (VIII)). By appropriately dosing the amount of prodegradant and the amount of stabilizer, the required service periods and time to disappearance can be obtained.

Component (II) may be present in the organic polymer in an amount of, for example, 0.005 to 10 % or 0.005 to 5 %, preferably 0.005 to 1 %, in particular 0.03 to 0.4 %, relative to the weight of the organic polymer.

Component (III) may be present in the organic polymer in an amount of, for example 0.01 to 20 % or 0.01 to 10 % or 0.01 to 5 %, preferably 0.01 to 1.5%, in particular 0.05 to 1.2 %, relative to the weight of the organic polymer.

Component (IV) may be present in the organic polymer in an amount of preferably 0.005 to 1 %, in particular 0.01 to 0.3 %, relative to the weight of the organic polymer.

Component (V) may be present in the organic polymer in an amount of preferably 0.01 to 5 %, in particular 0.1 to 2 %, relative to the weight of the organic polymer.

Component (VI) may be present in the organic polymer in an amount of preferably 0.05 to 80 %, in particular 0.5 to 70 %, relative to the weight of the organic polymer.

Component (VII) may be present in the organic polymer in an amount of preferably 0.05 to 40 %, in particular 0.5 to 30%, relative to the weight of the organic polymer.

Component (VIII) may be present in the organic polymer in an amount of preferably 0.005 to 5 %, in particular 0.05 to 1%, relative to the weight of the organic polymer.

The total amount of the components (III) to (VIII) being present in the organic polymer is preferably 0.15 to 90 %, in particular 1.2 to 80 %, relative to the weight of the organic polymer.

The weight ratio of the components (II):(III) may be for example 0.0003:1 to 1000:1 or 0.003:1 to 100:1, in particular 0.025:1 to 8:1.

The weight ratio of the components (II):(IV) may be for example 0.005:1 to 200:1, in particular 0.1:1 to 40:1.

The weight ratio of the components (II):(V) may be for example 0.001:1 to 100:1, in particular 0.015:1 to 4:1.

The weight ratio of the components (II):(VI) may be for example 0.0001:1 to 20:1, in particular 0.0004:1 to 1.0:1.

The weight ratio of the components (II):(VII) may be for example 0.001:1 to 200:1, in particular 0.015:1 to 8:1.

The weight ratio of the components (II):(VIII) may be for example 0.001:1 to 200:1, in particular 0.015:1 to 8:1.

The above components can be incorporated into the organic polymer to be stabilized in a controlled form by known methods, for example before or during shaping or by applying the dissolved or dispersed compounds to the organic polymer, if necessary with subsequent evaporation of the solvent. The components can be added to the organic polymer in the form of a powder, granules or a masterbatch, which contains these components in, for example, a concentration of from 2.5 to 25 % by weight.

If desired, the components (II) and (III) and optionally (IV) to (VIII) can be blended with each other before incorporation into the organic polymer. They can be added to the polymer before or during the polymerization or before the crosslinking.

The main components of the present additive system are a prodegradant additive (component (II)) and a weathering stabilizer (component (III)). By appropriately dosing the amount of the prodegradant and the amount of the weathering stabilizer, the required service periods and time to degradation and disappearance can be obtained. Examples of typical life times of non-agricultural articles are 10 to 180 days, lifes up to 24 months can also be required and achieved.

Thus, a further preferred embodiment of the present invention is a non-agricultural article containing the components (I), (II) and (III) as defined above and having a life time of 10 to 720 days.

The example below illustrates the invention in greater detail. All percentages and parts are by weight, unless stated otherwise.

### Example 1:

Each compound of the list reported below is mixed via master batch, in a slow mixer, with low density polyethylene (LDPE) pellets (Riblene FF 29 (RTM), supplied by Polimeri Europa(RTM); characterized by a density of 0.921 g/cm³ and a melt flow index of 0.60 at 190°C and 2.16 Kg), and with linear low density polyethylene (LLDPE) pellets (Clearflex FG308 (RTM), supplied by Polimeri Europa (RTM); characterized by a density of 0.924 g/cm³ and a melt flow index of 0.97 at 190°C and 2.16 Kg). The ratio LDPE/LLDPE is 1:4.

The mixture is blown at 210°C and films of 12 and 25 microns thickness are obtained.

The films are exposed outdoors in Pontecchio Marconi (Bologna, Italy). Total irradiation in the location is 110 Klys/year.

During the exposure, the films are periodically checked visually and the time to start of degradation (fessuration) and to embrittlement (= very fragile film = end of the life time) is registered.

The results are indicated in Tables 1 to 4.

**Table 1:**

| Films without pigment, 25 microns thick. | | | | |
|---|---|---|---|---|
| Cobalt Stearate % | 1:1 Mixture of Stabilizer (A-1-a) and Stabilizer (C-1-a-1) % | Stabilizer (A-1-a) % | Days to fessuration | Days to embrittlement |
| Without | Without | Without | 92 | 350 |
| 0.13 | 0.05 | Without | 39 | 67 |
| 0.13 | Without | 0.2 | 52 | 108 |

**Table 2:**

| Films without pigment, 12 microns thick. | | | |
|---|---|---|---|
| Cobalt Stearate % | 1:1 Mixture of Stabilizer (A-1-a) and Stabilizer (C-1-a-1) % | Days to fessuration | Days to embrittlement |
| 0.13 | 0.05 | 43 | 65 |
| 0.13 | 0.2 | 43 | 128 |

**Table 3:**

| Films with 3 % of carbon black, 25 microns thick. | | | |
|---|---|---|---|
| Cobalt Stearate % | 1:1 Mixture of Stabilizer (A-1-a) and Stabilizer (C-1-a-1) % | Days to fessuration | Days to embrittlement |
| Without | Without | 120 | 410 |
| 0.13 | 0.6 | 57 | 79 |

**Table 4:**

| Films with 3 % of carbon black, 12 microns thick. | | | |
|---|---|---|---|
| Cobalt Stearate % | 1:1 Mixture of Stabilizer (A-1-a) and Stabilizer (C-1-a-1) % | Days to fessuration | Days to embrittlement |
| 0.13 | 0.2 | 36 | 57 |
| 0.13 | 0.6 | 53 | 75 |

### Stabilizer (A-1-a):

### TINUVIN 622 (RTM)

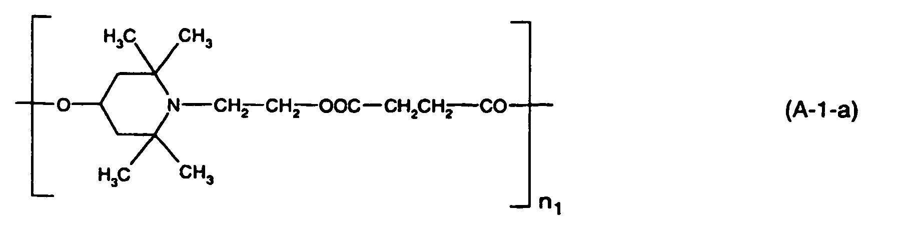

wherein n₁ is a number from 2 to 20.

### Stabilizer (C-1-a-1):

### CHIMASSORB 944 (RTM)

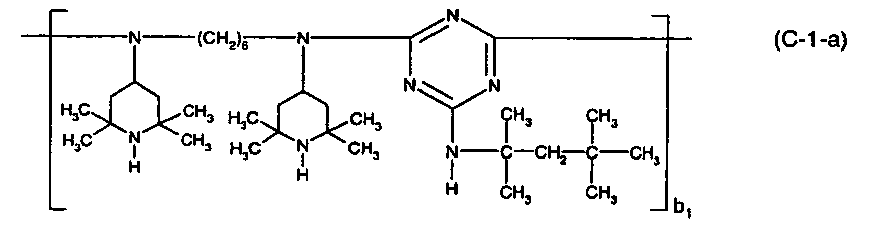

wherein b₁ is a number from 2 to 20.

## Claims

1. A non-agricultural article comprising the components
(I) an organic polymer,
(II) an organic salt of Fe, Ce, Co, Mn, Cu or V, and
(III) one or more sterically hindered amine compounds selected from the group consisting of
a compound of the formula (A-1) 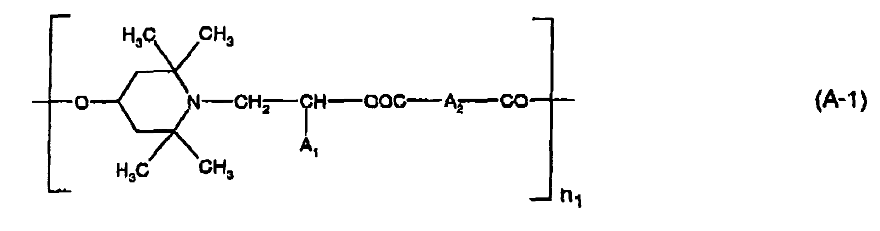 wherein
A₁ is hydrogen or C₁-C₄alkyl,
A₂ is a direct bond or C₁-C₁₀alkylene, and
n₁ is a number from 2 to 50;
at least one compound of the formulae (A-2-a) and (A-2-b) 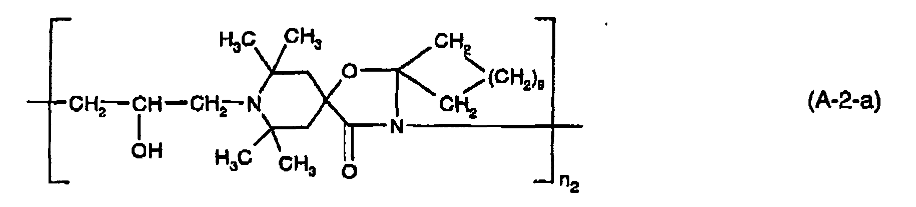 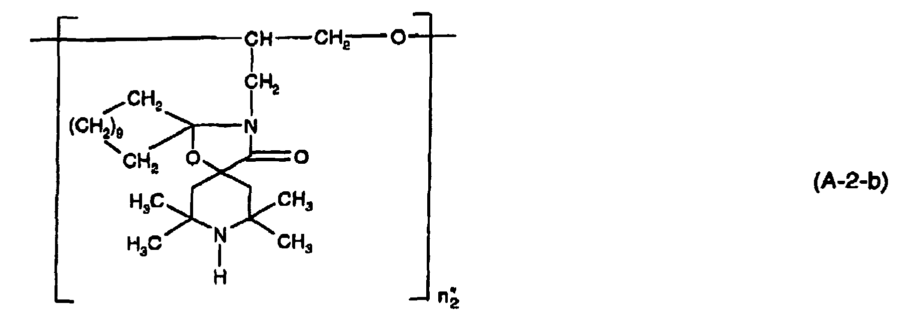 wherein
n₂ and n₂* are a number from 2 to 50;
a compound of the formula (A-3) 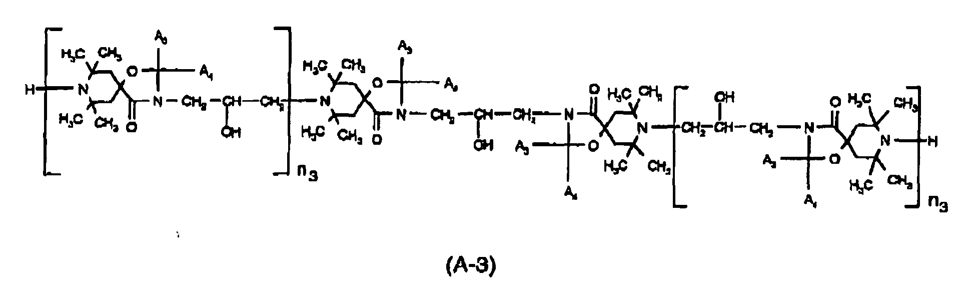 wherein
A₃ and A₄ Independently of one another are hydrogen or C₁-C₈alkyl, or A₃ and A₄ together form a C₂-C₁₄alkylene group, and
the variables n₃ independently of one another are a number from 1 to 50;
a compound of the formula (A-4) 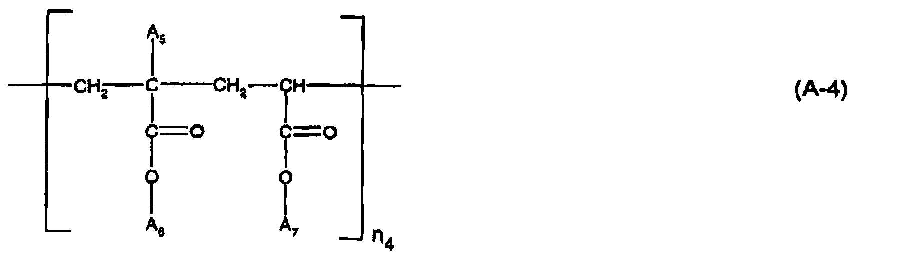 wherein
n₄ is a number from 2 to 50,
A₅ is hydrogen or C₁-C₄alkyl,
the radicals A₆ and A₇ independently of one another are C₁-C₄alkyl or a group of the formula (a-I) 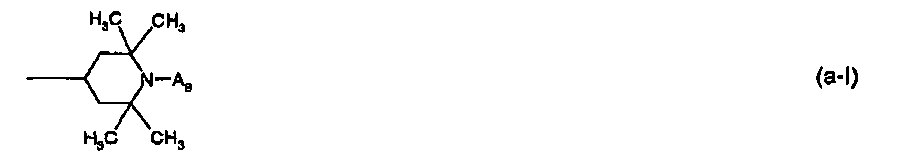 wherein Aₐ is hydrogen, C₁-C₈alkyl, -O^{·}, -OH, -OH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
with the proviso that at least 50 % of the radicals A₇ are a group of the formula (a-I):
a compound of the formula (B-1) 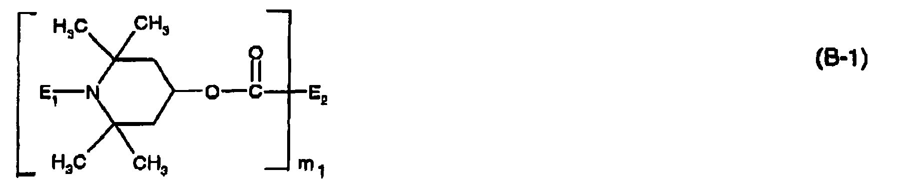 in which
E₁ is hydrogen, C₁-C₈alkyl, -O^{·}, -OH, -CH₂CN, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl, m₁ is 1, 2 or 4,
if m₁ is 1, E₂ is C₁-C₂₅alkyl,
if m₁ is 2, E₂ is C₁-C₁₄alkylene or a group of the formula (b-I) 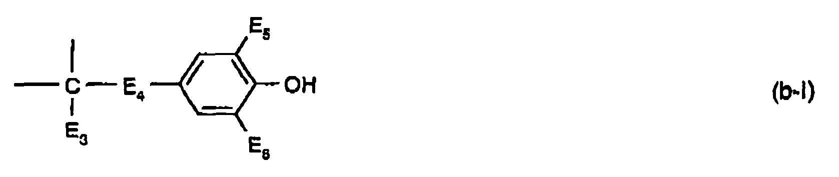 wherein E₃ is C₁-C₁₀alkyl or C₂-C₁₀alkenyl, E₄ is C₁-C₁₀alkylene, and
E₅ and E₆ independently of one another are C₁-C₄alkyl, cyclohexyl or methylcyclohexyl, and
if m₁ is 4, E₂ is C₄-C₁₀alkanotetrayl;
a compound of the formula (B-2) 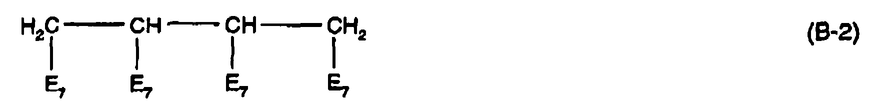 in which
two of the radicals E₇ are -COO-(C₁-C₂₀alkyl), and
two of the radicals E₇ are a group of the formula (b-II) 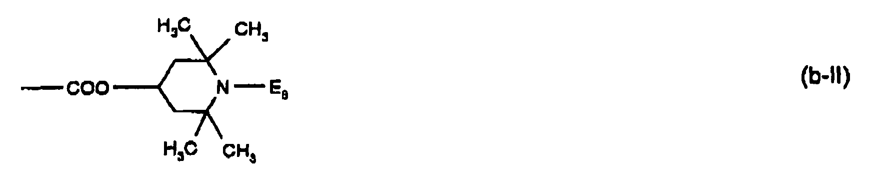 with E₈ being hydrogen, C₁-C₈alkyl, -O^{·}, -OH, -CH₂CN, C₁-C₁₈alkoxy, C₂-C₁₈alkoxy substituted by -OH; C₅-C₁₂cycloalkoxy, C₃-C₈alkenyl, C₇-C₉phenylalkyl unsubstituted or substituted on the phenyl by 1, 2 or 3 C₁-C₄alkyl; or C₁-C₈acyl;
a compound of the formula (B-3) 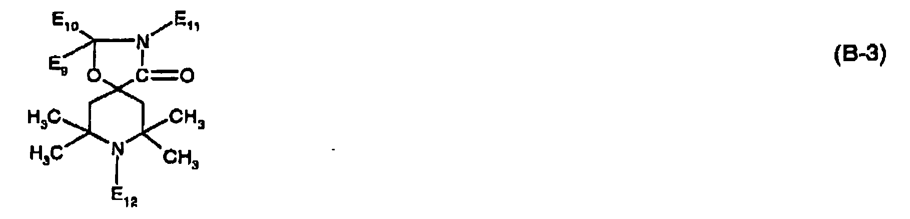 in which
E₉ and E₁₀ together form C₂-C₁₄alkylone,
E₁₁ is hydrogen or a group -Z₁-COO-Z₂,
Z₁ is C₂-C₁₄alkylene, and
Z₂ is C₁-C₂₄alkyl, and
E₁₂ is hydrogen, C₁-C₆alkyl, -O^{·}, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl;
a compound of the formula (B-4) 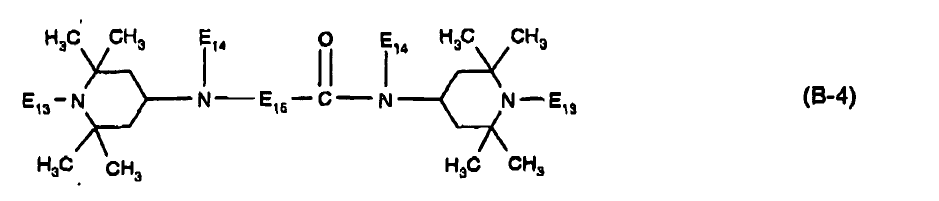 wherein
the radicals E₁₃ independently of one another are hydrogen, C₁-C₈alkyl, -O^{·}, -OH, -CH₂CN, C₁-C₁₈alkoxy, C₂-C₁₆alkoxy substituted by -OH; C₅-C₁₂cycloalkoxy, C₃-C₆alkenyl, C₇-C₈phenylalkyl unsubstituted or substituted on the phenyl by 1, 2 or 3 C₁-C₄alkyl; or C₁-C₈acyl, the radicals E₁₄ independently of one another are hydrogen or C₁-C₁₂alkyl, and E₁₅ is C₁-C₁₀alkylene or C₃-C₁₀alkylidene;
a compound of the formula (B-5) 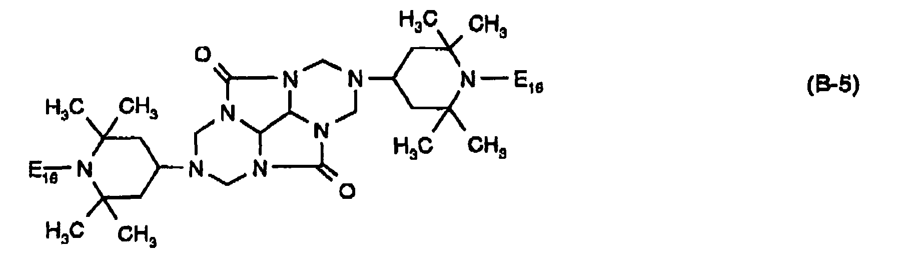 wherein
the radicals E₁₆ independently of one another are hydrogen, C₁-C₆alkyl, -O^{·}, -OH, -CH₂CN, C₁-C₁₀alkoxy, C₂-C₁₈alkoxy substituted by -OH; C₅-C₁₂cycloalkoxy, C₃-C₆alkenyl, C₇-C₉phonylalkyl unsubstituted or substituted on the phenyl by 1, 2 or 3 C₁-C₄alkyl; or C₁-C₈acyl;
a compound of the formula (B-6) 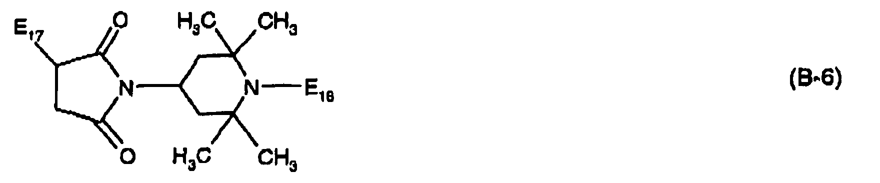 In which
E₁₇ is C₁-C₂₄alkyl, and
E₁₈ is hydrogen, C₁-C₈alkyl, -O^{·}, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylakyl unsubstituted or substituted on the phenyl by 1, 2 or 3 C₁-C₄alkyl; or C₁-C₈acyl;
a compound of the formula (B-7) 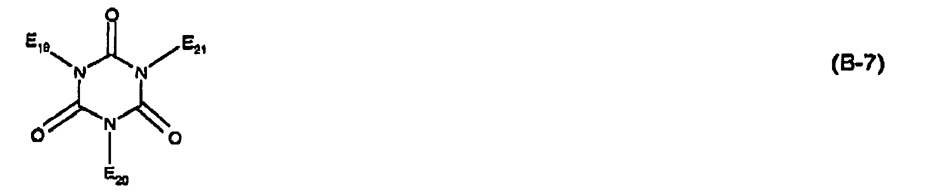 in which
E₁₉, E₂₀ and E₂₁ independently of one another are a group of the formula (b-III) 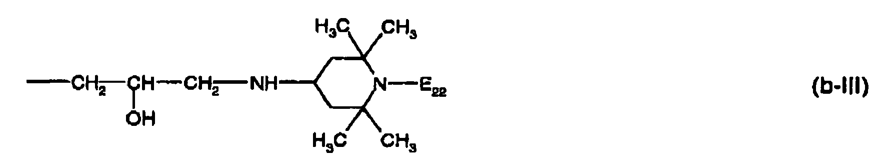 wherein E₂₂ is hydrogen, C₁-C₈alkyl, -O^{·}, -OH, -CH₂CN, C₁-C₁₈alkoxy, C₂-C₁₈alkoxy substituted by -OH; C₆-C₁₂cycloalkoxy, C₃-C₈alkenyl, C₇-C₈phenylalkyl unsubstituted or substituted on the phenyl by 1, 2 or 3 C₁-C₄alkyl; or C₁-C₈acyl;
a compound of the formula (B-8) 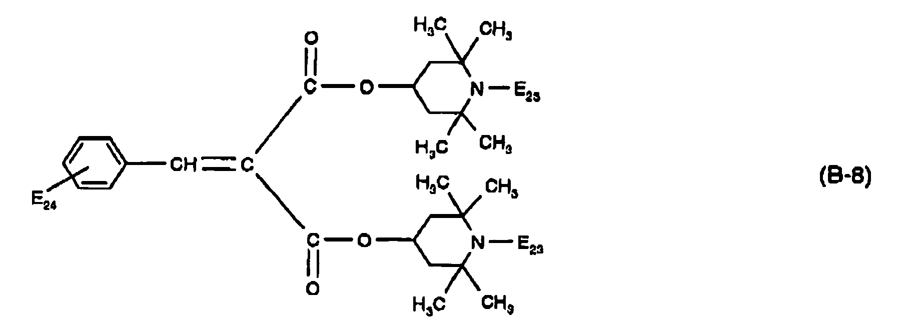 wherein
the radicals E₂₃ independently of one another are hydrogen, C₁-C₈alkyl, O^{·}, -OH, -CH₂CN, C₁-C₁₈alkoxy, C₂-C₁₈alkoxy substituted by OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl, and E₂₄ is hydrogen, C₁-C₁₂alkyl or C₁-C₁₂alkoxy;
a compound of the formula (B-9) 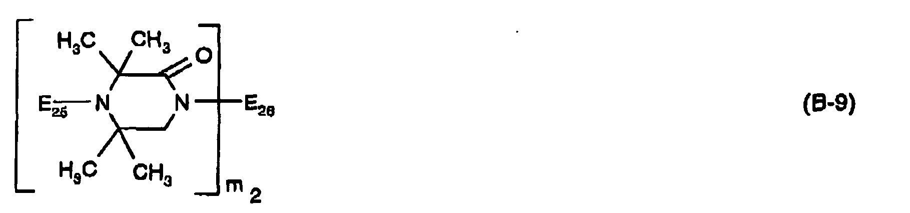 wherein
m₂ is 1, 2 or 3,
E_{2B} is hydrogen, C₁-C₈alkyl, -O^{·}, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl, and
when m₂ is 1, E₂₆ is a group 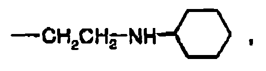 when m₂ is 2, E₂₈ is C₂-C₂₂alkylene, and
when m₂ is 3, E₂₈ is a group of the formula (b-IV) 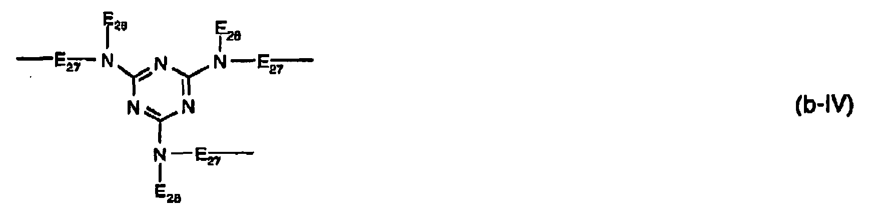 wherein the radicals E₂₇ independently of one another are C₂-C₁₂alkylene, and the radicals E₂₈ independently of one another are C₁-C₁₂alkyl or C₅-C₁₂cycloalkyl;
a compound of the formula (B-1 0) 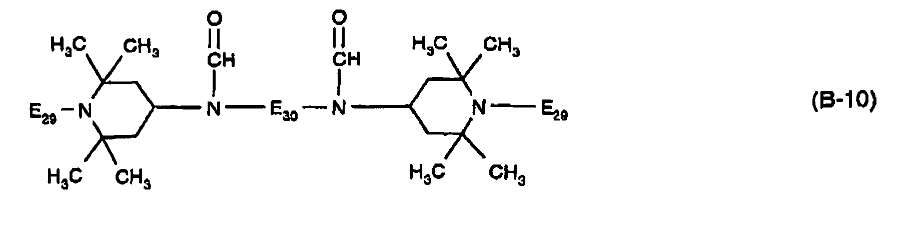 wherein
the radicals E₂₉ independently of one another are hydrogen, C₁-C₆alkyl, -O^{·}, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl: or C₁-C₈acyl, and
E₃₀ is C₂-C₂₂alkylene, C₅-C₇cycloalkylene, C₁-C₄alkylenedi(C₅-C₇cycloalkylene), phenylene or phenylenedi(C₁-C₄alkylene);
a compound of the formula (C-1) 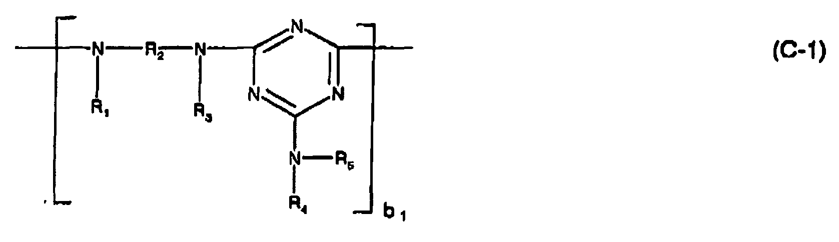 in which
R₁, R₃, R₄ and R₆ independently of one another are hydrogen, C₁-C₁₂alkyl, C₅-C₁₂cycloalkyl, C₁-C₄-alkyl-substituted C₅-C₁₂cycloalkyl, phenyl, phenyl which is substituted by -OH and/or C₁-C₁₀alkyl; C₇-C₉phenylalkyl, C₇-C₉phenylalkyl which is substituted on the phenyl radical by -OH and/or C₁-C₁₀alkyl; or a group of the formula (c-I) 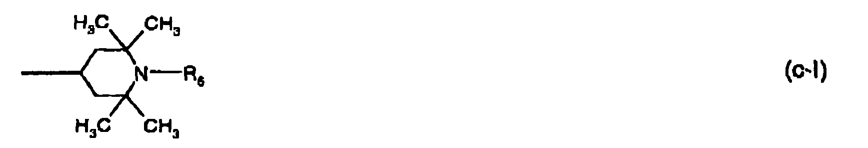 R₂ is C₂-C₁₈alkylene, C₅-C₇cycloalkylene or C₁-C₄alkylenedi(C₅-C₇cycloalkylene), or
the radicals R₁, R₂ and R₃, together with the nitrogen atoms to which they are bonded, perform a 5- to 10-membered heterocyclic ring, or
R₄ and R₅, together with the nitrogen atom to which they are bonded, form a 5- to 10-membered heterocyclic ring,
R₆ is hydrogen, C₁-C₈alkyl, -O^{·}, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl, and
b₁ is a number from 2 to 50,
with the proviso that at least one of the radicals R₁, R₃, R₄ and R₆ is a group of the formula (c-I);
a compound of the formula (C-2) 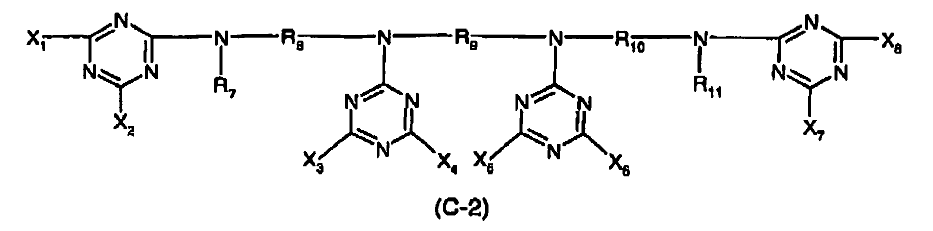 wherein
R₇ and R₁₁ independently of one another are hydrogen or C₁-C₁₂alkyl,
R₈, R₉ and R₁₀ independently of one another are C₂-C₁₀alkylene, and
X₁, X₂, X₃, X₄, X₅, X₆, X₇ and X₈ independently of one another are a group of the formula (c-II), 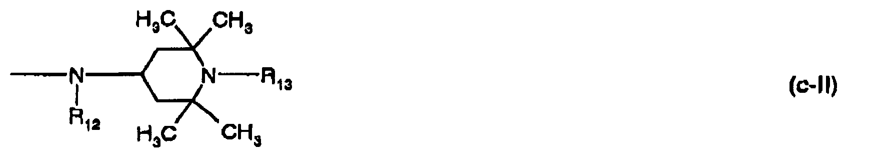 in which R₁₂ is hydrogen, C₁-C₁₂alkyl, C₅-C₁₂cycloalkyl, C₁-C₄alkyl-substituted C₅-C₁₂cycloalkyl, phenyl, -OH- and/or C₁-C₁₀alkyl-substituted phenyl, C₇-C₉phenylalkyl, C₇-C₉phenylalkyl which is substituted on the phenyl radical by -OH and/or C₁-C₁₀alkyl; or a group of the formula (c-I) as defined above, and
R₁₃ has one of the meanings of R₆;
a compound of the formula (C-3) 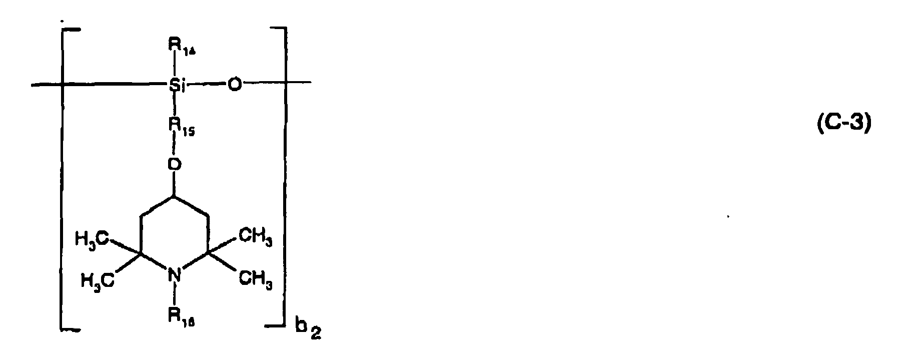 in which
R₁₄ is C₁-C₁₀alkyl, C₅-C₁₂cycloalkyl, C₁-C₄alkyl-substituted C₅-C₁₂cycloalkyl, phenyl or C₁-C₁₀alkyl-substituted phenyl,
R₁₅ is C₃-C₁₀alkylene,
R₁₆ has one of the meanings of R₆, and
b₂ is a number from 2 to 50;
a compound of the formula (C-4) 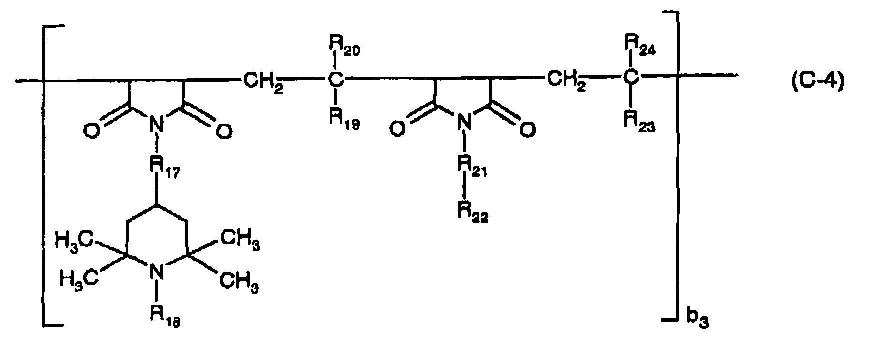 in which
R₁₇ and R₂₁ independently of one another are a direct bond or a -N(X₉)-CO-X₁₀-CO-N(X₁₁)-group, where X₉ and X₁₁ independently of one another are hydrogen, C₁-C₈alkyl, C₅-C₁₂cycloalkyl, phenyl, C₇-C₈phenylalkyl or a group of the formula (c-I),
X₁₀ is a direct bond or C₁-C₄alkylene,
R₁₈ has one of the meanings of R₆,
R₁₉, R₂₀, R₂₃ and R₂₄ independently of one another are hydrogen, C₁-C₃₀alkyl. C₅-C₁₂cycloalkyl or phenyl,
R₂₂ is hydrogen, C₁-C₃₀alkyl, C₅-C₁₂cycloalkyl, phenyl, C₇-C₈phenylalkyl or a group of the formula (c-I), and
b₃ is a number from 1 to 50;
a compound of the formula (C-5) 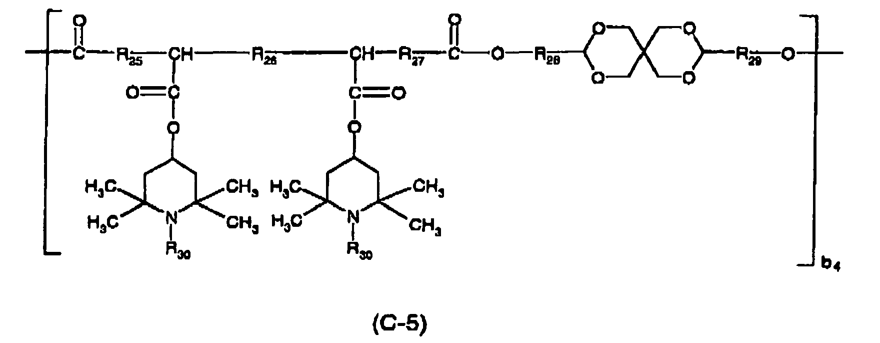 in which
R₂₅, R₂₆, R₂₇, R₂₈ and R₂₉ independently of one another are a direct bond or C₁-C₁₀alkylene,
R₃₀ has one of the meanings of R₆, and
b₄ is a number from 1 to 50; and
a product (C-6) obtainable by reacting a product, obtained by reaction of a polyamine of the formula (C-6-1) with cyanuric chloride, with a compound of the formula (C-6-2) 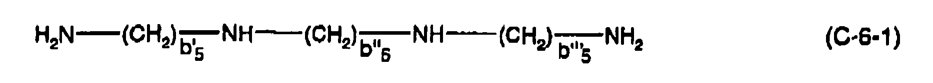 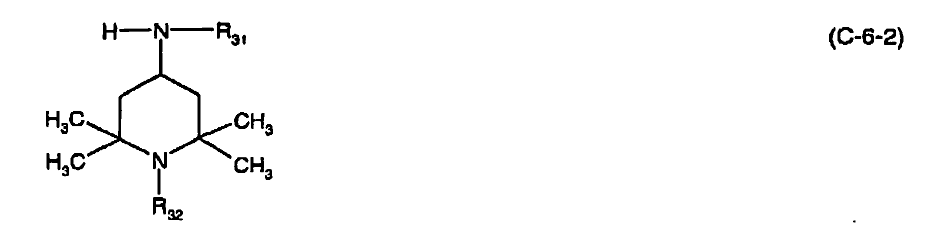 in which
b'₅, b"₅ and b'"₅ independently of one another are a number from 2 to 12,
R₃₁ is hydrogen. C₁-C₁₂alkyl, C₅-C₁₂cycloalkyl, phenyl or C₇-C₈phenylalkyl, and
R₃₂ has one of the meanings of R₆;
with the proviso that when component (I) is a polyolefin, said polyolefin does not contain an oxidizable unsaturated compound selected from the group consisting of natural rubber, styrene butadiene resin, fat and oil.

2. A non-agricultural article according to claim 1 wherein
component (I) is a polyolefin homo- or copolymer, a starch modified polyolefin, a starch based polymer composite or a biopolymer,

3. A non-agricultural article according to claim 1 wherein
component (I) is polyethylene, polypropylene, a polyethylene copolymer or a polypropylene copolymer.

4. A non-agricultural article according to claim 1 wherein
component (I) is a biopolymer selected from the group consisting of polycaprolactone, polylactic acid, polyglycolic acid, polyhydroxybutyrate-valerate, polybutylene succinate, polyvinyl alcohol, polyhydroxyalcanoate and polyethylene adipate.

5. A non-agricultural article according to claim 1 wherein
component (II) is a C₂-C₂₄carboxylate of Fe, Ce, Co, Mn, Cu or V.

6. A non-agricultural article according to claim 1 wherein
component (II) is a C₂-C₂₄carboxylate of Ce, Co or Mn,

7. A non-agricultural article according to claim 1 wherein
component (II) is a C₁₀-C₂₀ alkanoate of Ce, Co or Mn or a C₁₀-C₂₀alkenoate of Ce, Co or Mn.

8. A non-agricultural article according to claim 1 wherein
A₁ is hydrogen or methyl,
A₂ is a direct bond or C₂-C₆alkylene, and
n₁ is a number from 2 to 25;
n₂ and n₂* are a number from 2 to 25;
A₃ and A₄ independently of one another are hydrogen or C₁-C₄alkyl, or A₃ and A₄ together form a C₉-C₁₃alkylene group, and
the variables n₃ independently of one another are a number from 1 to 25;
n₄ is a number from 2 to 25,
A₅ and A₆ independently of one another are C₁-C₄alkyl, and
A₇ is C₁-C₄alkyl or a group of the formula (a-I)
with the proviso that at least 50 % of the radicals A₇ are a group of the formula (a-I);
m₁ is 1, 2 or 4,
if m₁ is 1, E₂ is C₁₂-C₂₀alkyl,
if m₁ is 2, E₂ is C₂-C₁₀ alkylene or a group of the formula (b-1),
E₃ is C₁-C₄alkyl,
E₄ is C₁-C₈alkylene, and
E₅ and E₈ independently of one another are C₁-C₄alkyl, and
if m₁ is 4, E₂ is C₄-C₈alkanetetrayl;
two of the radicals E₇ are -COO-(C₁₀-C₁₅alkyl), and
two of the radicals E₇ are a group of the formula (b-II);
E₉ and E₁₀ together form C₉-C₁₃alkylene,
E₁₁ is hydrogen or a group -Z₁-COO-Z₂,
Z₁ is C₂-C₆alkylene, and
Z₂ is C₁₀-C₁₆alkyl;
E₁₄ is hydrogen, and
E₁₅ is C₂-C₆alkylens or C₃-C₆alkylidene;
E₁₇ is C₁₀-C₁₄alkyl;
E₂₄ is C₁-C₄alkoxy;
m₂ is 1, 2 or 3,
when m₂ is 1, E₂₈ is a group 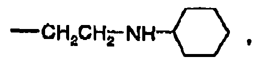 when m₂ is 2, E₂₆ is C₂-C₆alkylene, and
when m₂ is 3, E₂₀ is a group of the formula (b-IV)
the radicals E₂₇ independently of one another are C₂-C₆alkylene, and
the radicals E₂₈ independently of one another are C₁-C₄alkyl or C₅-C₈cycloalkyl; and
E₃₀ is C₂-C₈alkylene;
R₁ and R₃ independently of one another are a group of the formula (c-1),
R₂ is C₂-C₈alkylene,
R₄ and R₅ independently of one another are hydrogen, C₁-C₁₂alkyl, C₅-C₈cycloalkyl or a group of the formula (c-I), or the radicals R₄ and R₅, together with the nitrogen atom to which they are bonded, form a 5- to 10-membered heterocyclic ring, and
b₁ is a number from 2 to 25;
R₇ and R₁₁ independently of one another are hydrogen or C₁-C₄alkyl,
R₈, R₉ and R₁₀ independently of one another are C₂-C₄alkylene, and
X₁, X₂, X₃, X₄, X₅, X₆, X₇ and X₈ independently of one another are a group of the formula (c-II),
R₁₂ is hydrogen, C₁-C₄alkyl, C₅-C₈acycloalkyl or a group of the formula (c-1);
R₁₄ is C₁-C₄alkyl,
R₁₅ is C₃-C₆alkylene, and
b₂ is a number from 2 to 25;
R₁₇ and R₂₁ independently of one another are a direct bond or a group -N(X₉)-CO-X₁₀-CO-N(X₁₁)-,
X₉ and X₁₁ independently of one another are hydrogen or C₁-C₄alkyl,
X₁₀ is a direct bond,
R₁₉ and R₂₃ are C₁-C₂₅alkyl or phenyl,
R₂₀ and R₂₄ are hydrogen or C₁-C₄alkyl,
R₂₂ is C₁-C₂₅alkyl or a group of the formula (c-I), and
b₃ is a number from 1 to 25;
R₂₅, R₂₆, R₂₇, R₂₈ and R₂₉ independently of one another are a direct bond or C₁-C₄alkylone, and
b₄ is a number from 1 to 25;
b'₅, b"₅ and b"'₅ independently of one another are a number from 2 to 4, and
R₃₁ is hydrogen, C₁-C₄alkyl, C₅-C₈cycloalkyl, phenyl or benzyl.

9. A non-agricultural article according to claim 1 wherein
component (III) is one or more sterically hindered amine compounds selected from the group consisting of the compounds of the formulae
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-6), (B-6-a), (B-7), (B-8-a), (B-9-a), (B-9-b), (B-9-c), (B-10-a),
(C-1-a). (C-1-b), (C-1-c), (C-1-d), (C-2-a), (C3-a), (C-4-a), (C-4-b), (C-4-c) and (C-5-a) and a product (C-6-a); 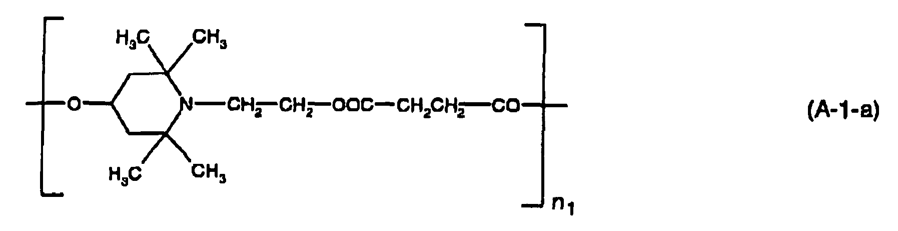 wherein n₁ is a number from 2 to 20; 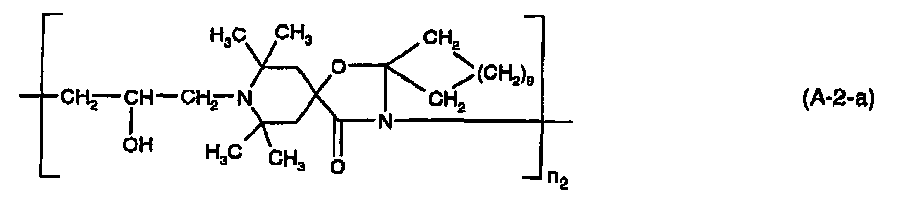 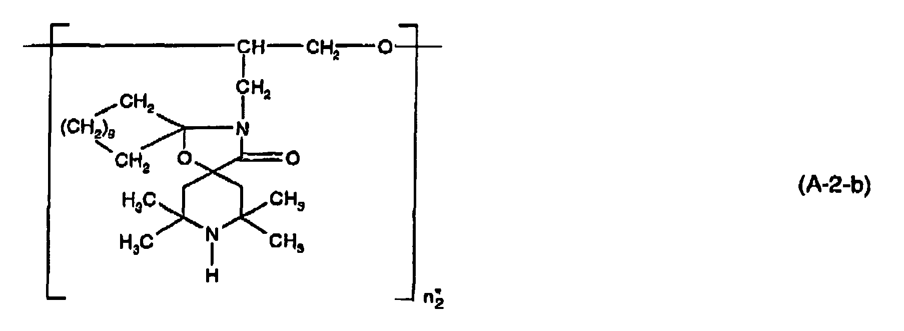 wherein n₂ and n₂* are a number from 2 to 20; 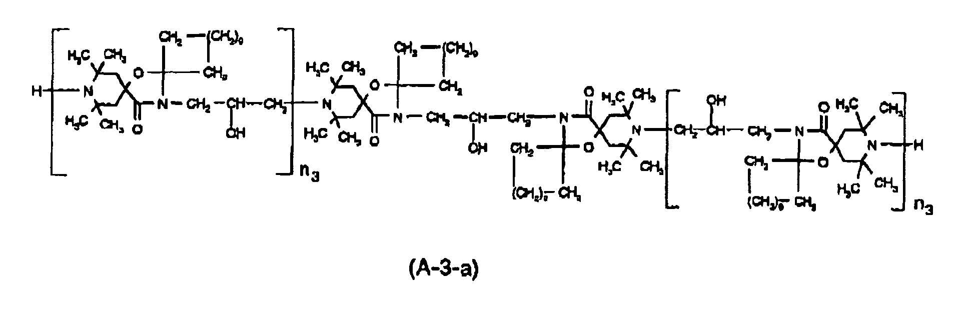 wherein the variables n₃ independently of one another are a number from 1 to 20; 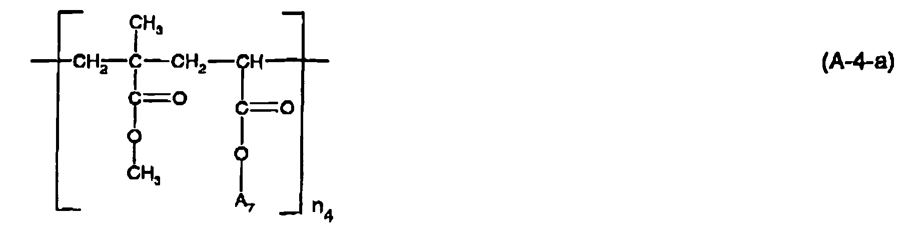 wherein n₄ is a number from 2 to 20, and
at least 50 % of the radicals A₇ are a group of the formula (a-1) 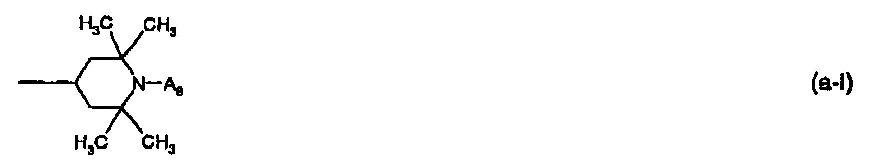 wherein A₈ is hydrogen, C₁-C₆alkyl, O^{·}; -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
and the remaining radicals A₇ are ethyl; 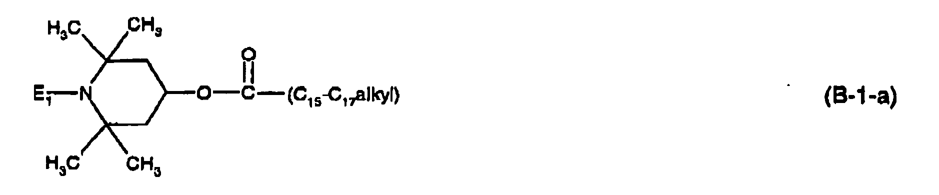 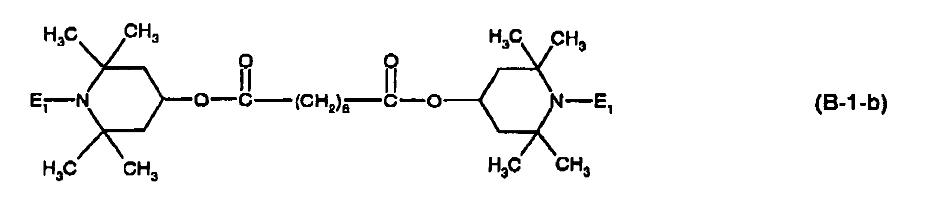 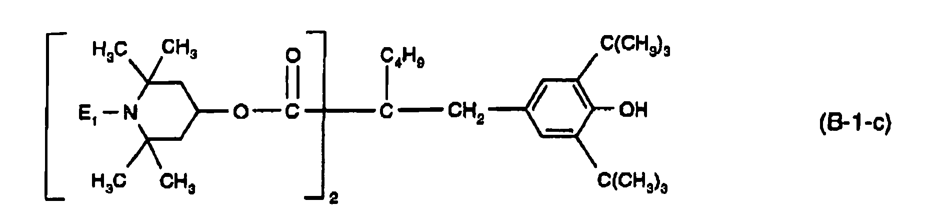 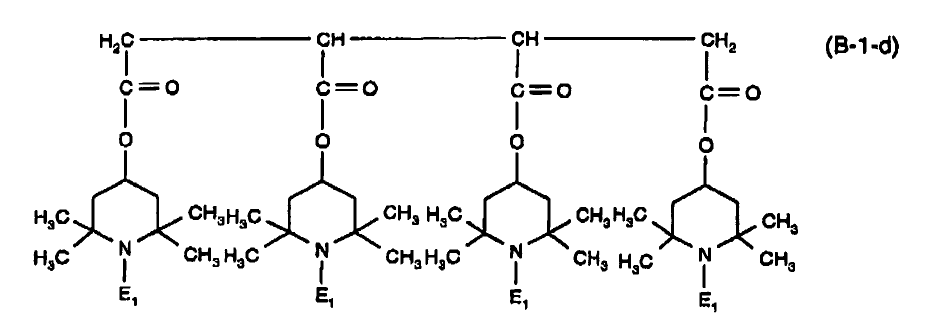 wherein E₁ is hydrogen, C₁-C₈alkyl, O^{·}, -OH, -CH₂CN, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 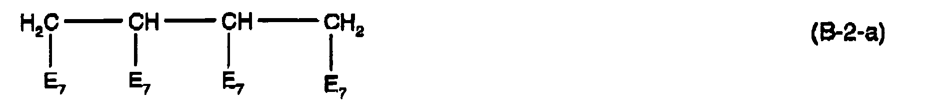 in which two of the radicals E₇ are -COO-C₁₃H₂₇ and
two of the radicals E₇ are 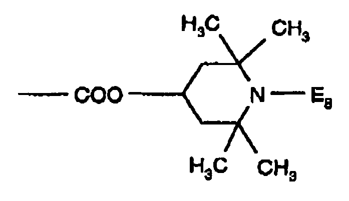 and E₈ is hydrogen, C₁-C₈alkyl,
O^{·}, -OH, -CH₂CN, C₁-C₁₈alkoxy, C₅-C₁₂cycloalkoxy, C₃-C₆alkenyl, C₇-C₈phenylalkyl unsubstituted or substituted on the phenyl by 1, 2 or 3 C₁-C₄alkyl: or C₁-C₈acyl; 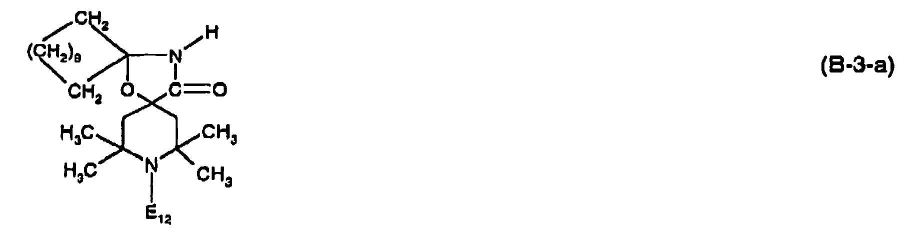 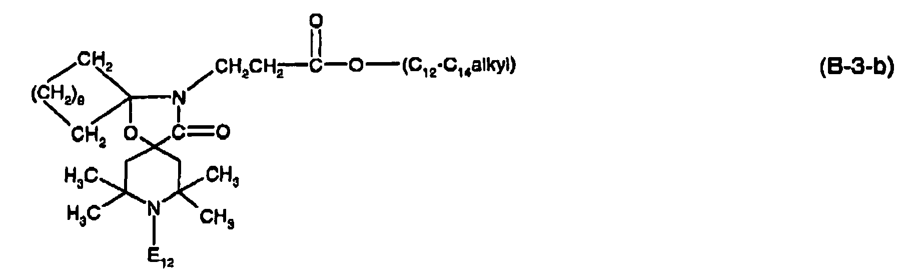 wherein E₁₂ is hydrogen, C₁-C₈alkyl, O^{·}, -OH, -CH₂CN, C₁-C₁₈alkoxy, C₅-C₁₂cycloalkoxy, C₃-C₆alkenyl, C₇-C₈phenylalkyl unsubstituted or substituted on the phenyl by 1, 2 or 3 C₁-C₄alkyl; or C₁-C₈acyl; 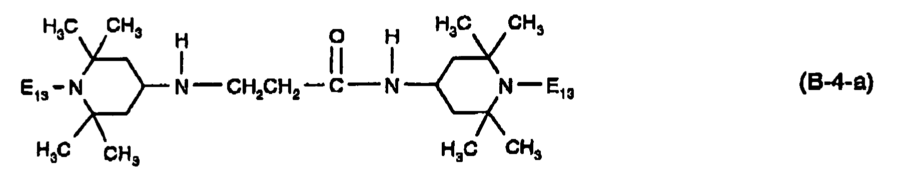 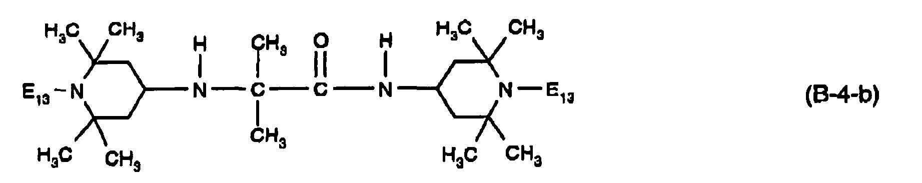 wherein E₁₃ is hydrogen, C₁-C₆alkyl, O^{·}, -OH, -CH₂CN, C₁-C₁₈alkoxy, C₅-C₁₂cycloalkoxy, C₃-C₆alkenyl, C₇-C₈phenylalkyl unsubstituted or substituted on the phenyl by 1, 2 or 3 C₁-C₄alkyl; or C₁-C₈acyl; 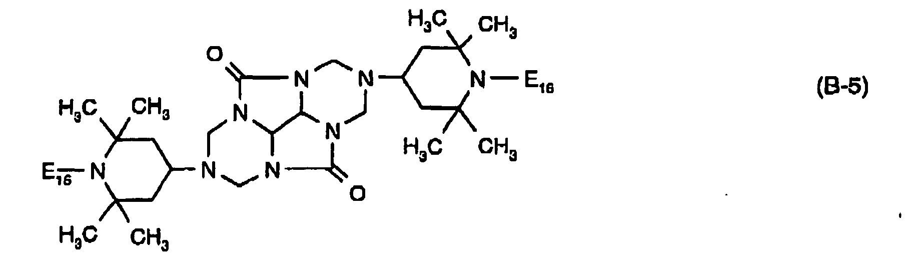 wherein E₁₆ is hydrogen, C₁-C₈alkyl, O^{·}; -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1 , 2 or 3 C₁-C₄alkyl; or C₁-C₈acyl; 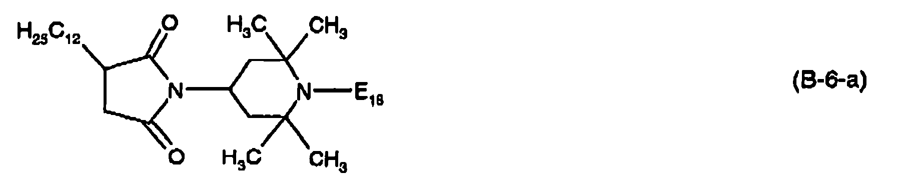 wherein E₁₈ is hydrogen, C₁-C₈alkyl, O^{·}, -OH, -CH₂CN, C₁-C₁₈alkoxy, C₅-C₁₂cycloalkoxy, C₃-C₆alkenyl, C₇-C₈phenylalkyl unsubstituted or substituted on the phenyl by 1, 2 or 3 C₁-C₄alkyl; or C₁-C₈acyl; 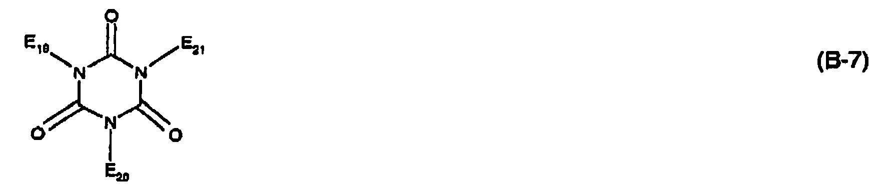 in which E_{19,} E₂₀ and E₂₁ independently of one another are a group of the formula (b-III) 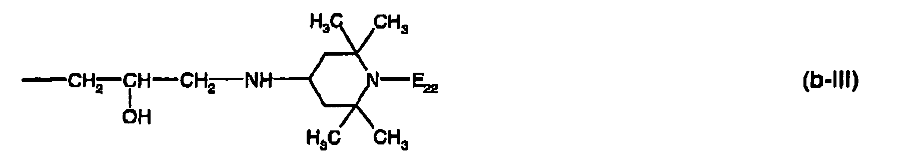 wherein E₂₂ is hydrogen, C₁-C₆alkyl, O^{·}, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 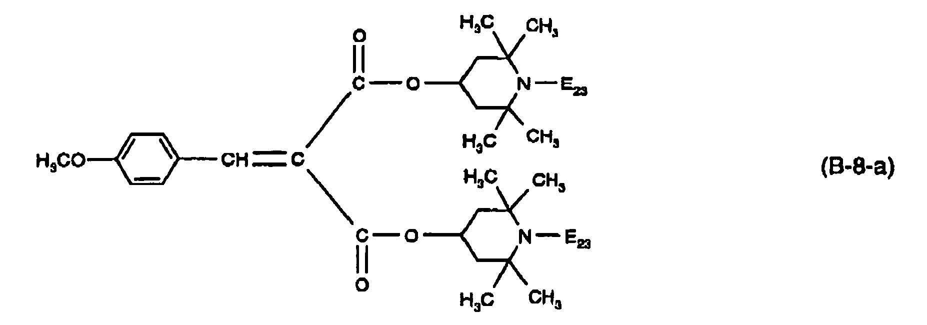 wherein E₂₃ is hydrogen, C₁-C₈alkyl, O^{·}, -OH, -CH₂CN, C₁-C₁₈alkoxy, C₅-C₁₂cycloalkoxy, C₃-C₆alkenyl, C₇-C₈phenylalkyl unsubstituted or substituted on the phenyl by 1, 2 or 3 C₁-C₄alkyl; or C₁-C₈acyl; 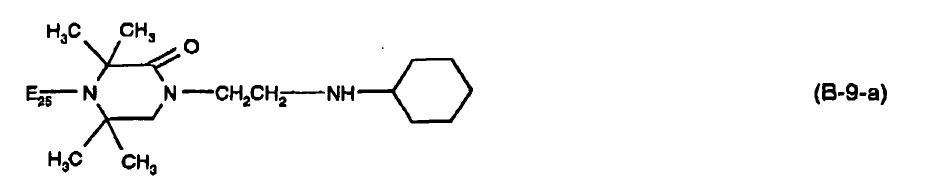 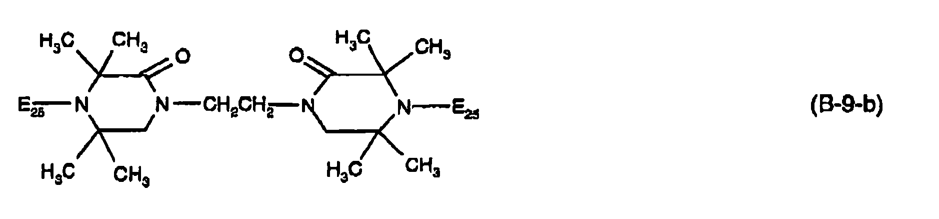 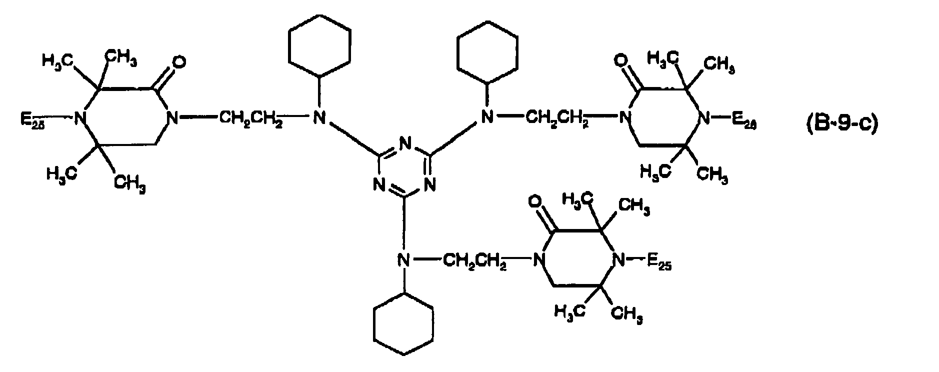 wherein E₂₅ is hydrogen, C₁-C₈alkyl, O^{·}; -OH, -CH₂CN, C₁-C₁₈alkoxy, C₅-C₁₂cycloalkoxy, C₃-C₆alkenyl, C₇-C₈phenylalkyl unsubstituted or substituted on the phenyl by 1, 2 or 3 C₁-C₄alkyl; or C₁-C₈acyl; 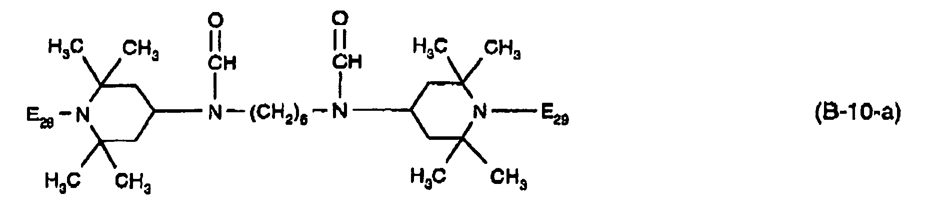 wherein E₂₉ is hydrogen, C₁-C₈alkyl, O^{·}; -OH, -CH₂CN, C₁-C₁₈alkoxy, C₅-C₁₂cycloalkoxy, C₃-C₆alkenyl, C₇-C₈phenylalkyl unsubstituted or substituted on the phenyl by 1, 2 or 3 C₁-C₄alkyl; or C₁-C₈acyl; 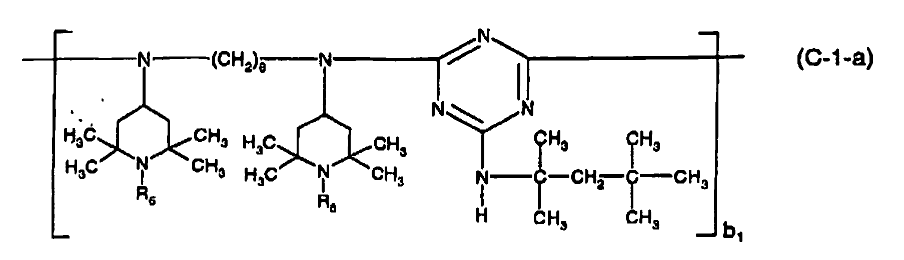 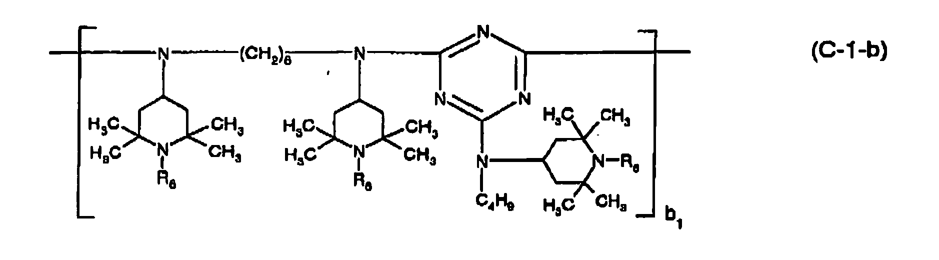 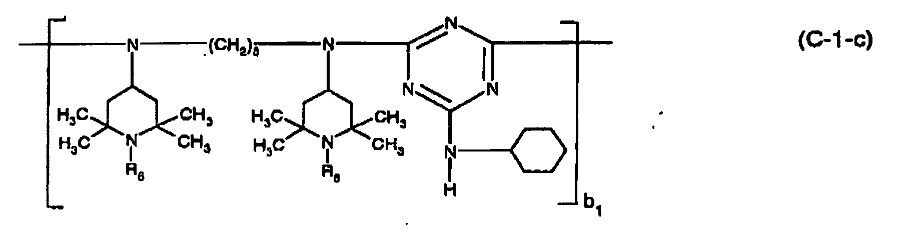 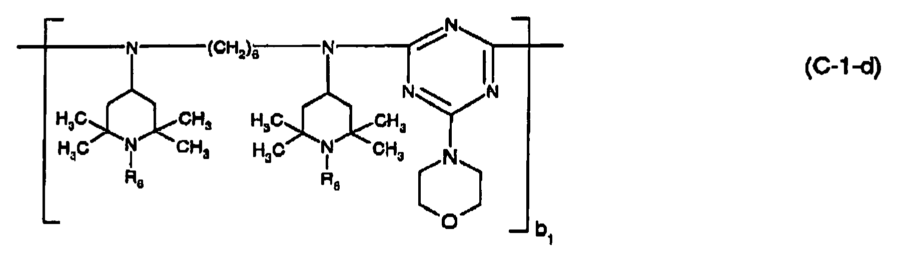 wherein b₁ is a number from 2 to 20 and R₈ is hydrogen, C₁-C₈alkyl, O^{·}, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 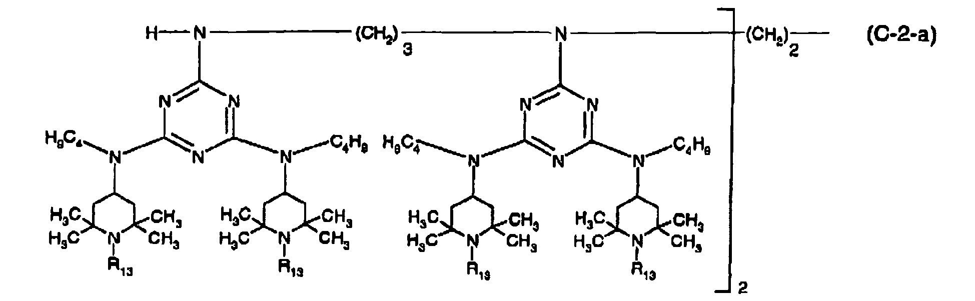 wherein R₁₃ has one of the meanings of R₆, 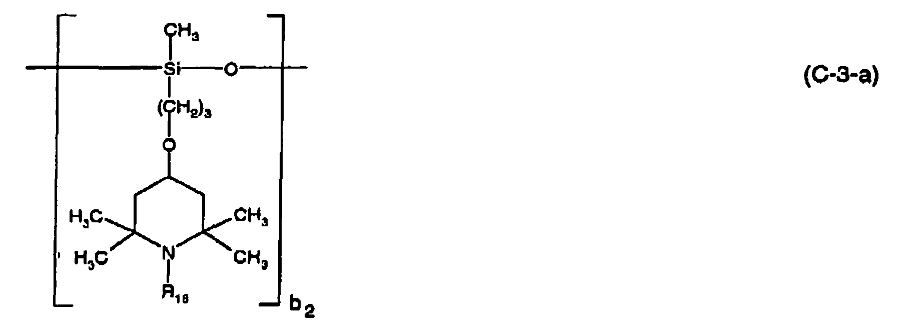 wherein b₂ is a number from 2 to 20 and R₁₆ has one of the meanings of R₆; 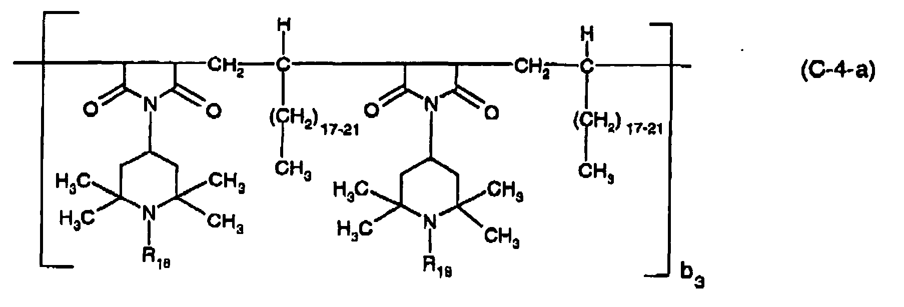 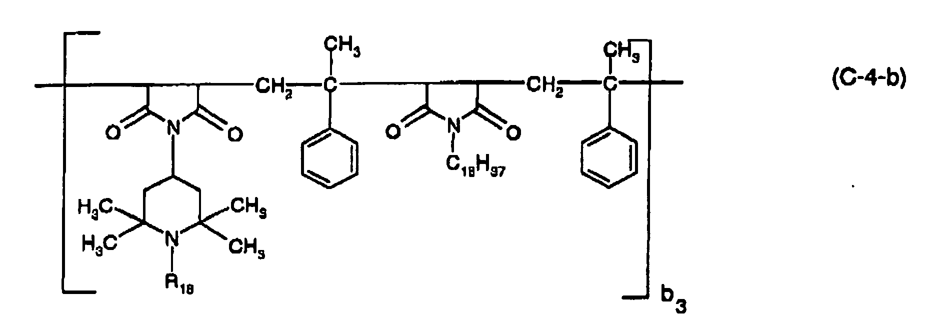 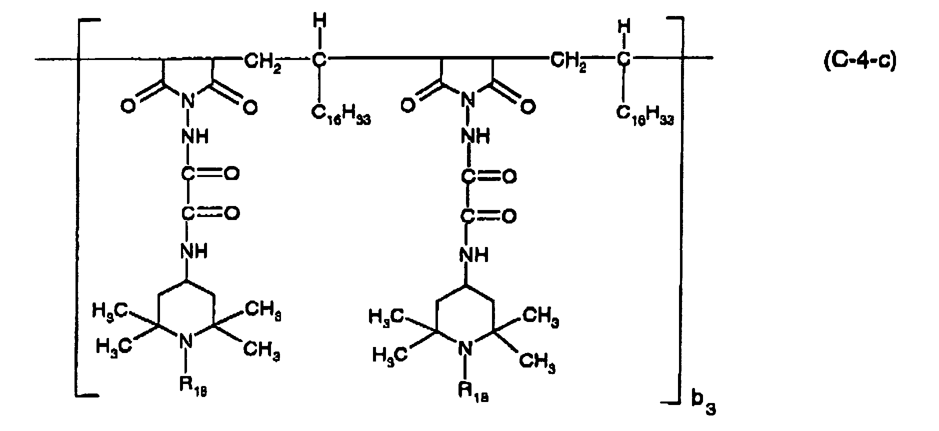 wherein b₃ is a number from 1 to 20 and R₁₈ has one of the meanings of R₆; 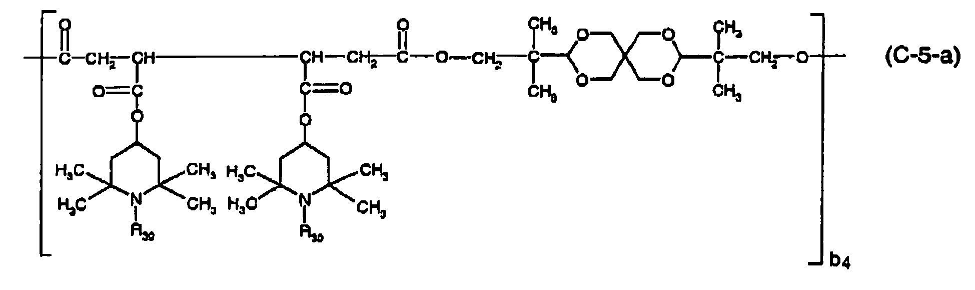 wherein b₄ is a number from 1 to 20 and R₃₀ has one of the meanings of R₆;
a product (C-6-a) obtainable by reacting a product, obtained by reaction of a polyamine of the formula (C-6-1-a) with cyanuric chloride, with a compound of the formula (C-6-2-a) 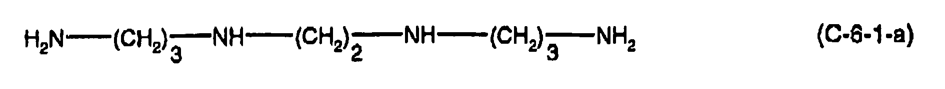 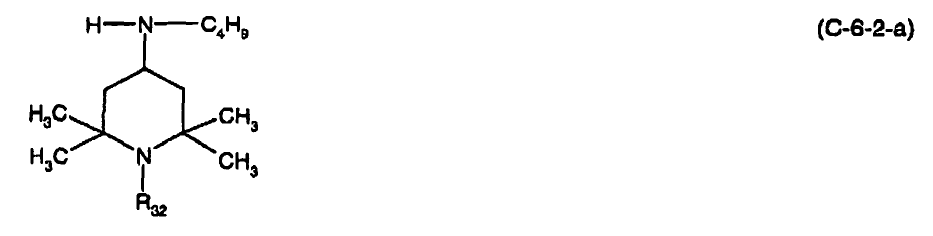 in which R₃₂ has one of the meanings of R₆.

10. A non-agricultural article according to claim 1 wherein
A₈ is hydrogen, C₁-C₄alkyl, C₁-C₁₀alkoxy, cyclohexyloxy, allyl, benzyl or acetyl;
E₁ is hydrogen, C₁-C₄alkyl, cyclohexyloxy, allyl, benzyl or acetyl and
E₈. E₁₂, E₁₃, E₁₆, E₁₈, E₂₂, E₂₃, E₂₆ and E₂₈ are hydrogen, C₁-C₄alkyl, C₁-C₁₀alkoxy, cyclohexyloxy, allyl, benzyl or acetyl;
R₆, R₁₃, R₁₆, R₁₈, R₃₀ and R₃₂ are hydrogen, C₁-C₄alkyl, C₁-C₁₀alkoxy, cyclohexyloxy, allyl, benzyl or acetyl.

11. A non-agricultural article according to claim 9 wherein
A₆, E₁, E₈, E₁₂, E₁₃, E₁₆, E₁₈, E₂₂, E₂₃, E₂₅, E₂₈, R₆, R₁₃, R₁₆, R₁₈, R₃₀ and R₃₂ are hydrogen or methyl and R₆ additionally is C₁-C₈alkoxy.

12. A non-agricultural article according to claim 9 wherein component (III) is a compound of the formula
(A-1-a), (A-2-a), (A-2-b),
(B-1-a), (B-1-b), (B-1-c), (B-1-d), (B-2-a), (B-3-a), (B-3-b), (B-4-a), (B-4-b), (B-5). (B-6-a), (B-8-a), (B-9-b), (B-10-a),
(C-1-a), (C-1-b), (C-1 -c), (C-1 -d), (C-2-a), (c-3-a), (C-4-a) or (C-5-a) or a product (C-6-a).

13. A non-agricultural article according to claim 9 wherein component (III) is a compound of the formula
(A-1-a), (A-2-a), (A-2-b),
(C-1-a), (C-1-b), (C-1-c), (C-t-d), (C-2-a), (C-3-a), (C-4-a) or (C-5-a) or a product (C-6-a).

14. A non-agricultural article according to claim 9 which contains as component (III) two different sterically hindered amine compounds selected from the group consisting of the compounds of the formulae
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) and (C-5-a) and a product (C-6-a);
with the proviso that the two different sterically hindered amine compounds are not selected from the same generic formula.

15. A non-agricultural article according to claim 1 wherein
component (III) is a compound of the formula (A-1-a), or
a compound of the formula (C-1-a) wherein R₆ is hydrogen, or
a combination of a compound of the formula (A-1-a) with a compound of the formula (C-1-a) wherein R₈ is hydrogen, or
a combination of a compound of the formula (A-1-a) with a compound of the formula (C-2-a) wherein R₁₃ is methyl, or
a combination of a compound of the formula (B-1-b) wherein E₁ is hydrogen with a compound of the formula (C-1-a) wherein R₆ is hydrogen.

16. A non-agricultural article according to claim 1 which contains in addition one or more of the following components
(IV) an antioxidant,
(V) an UV absorber,
(VI) a filler,
(VII) a pigment,
(VIII) an inorganic or organic salt of Ca, Mg, Zn or Al.

17. A non-agricultural article according to claim 1 which additionally contains an aliphatic poly hydroxy-oarboxyl acid.

18. A non-agricultural article according to claim 17 wherein the aliphatic poly hydroxy-carboxyl acid is citric acid.

19. A non-agricultural article according to claim 1 which is an article selected from the group consisting of geotextiles, landfill covers, Industrial covers, waste covers, temporary scaffolding sheets, building films, silt fences, flexible packaging wraps, poultry curtains and temporary shelter constructions.

20. A method for controlling the weathering resistance and the degradation of a non-agricultural organic polymer article as defined in claim 1, which comprises incorporating into the organic polymer components (II) and (111) as defined in claim 1.

21. The use of a mixture containing components (II) and (III) as defined in claim 1 for controlling the weathering resistance and the degradation of a non-agricultural organic polymer article as defined in claim 1.

22. A non-agricultural article according to claim 1 with the proviso that when component (I) is a polyolefin, said polyolefin does not contain an oxidizable unsaturated compound.

## Patentansprüche

1. Nicht landwirtschaftlich genutzter Gegenstand, umfassend die Komponenten
(I) ein organisches Polymer,
(II) ein organisches Salz von Fe, Ce, Co, Mn, Cu oder V und
(III) eine oder mehrere sterisch gehinderte Aminverbindungen, ausgewählt aus der Gruppe, bestehend aus
einer Verbindung der Formel (A-1) 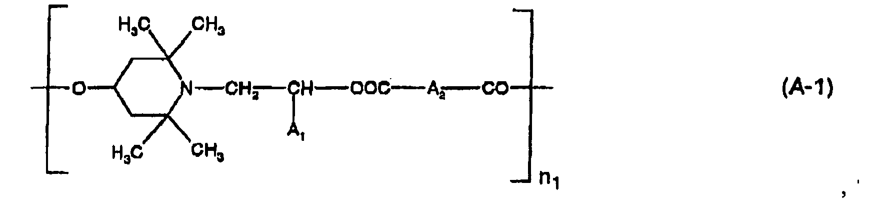 worin
A₁ Wasserstoff oder C₁-C₄-Alkyl ist,
A₂ eine direkte Bindung oder C₁-C₁₀-Alkylen ist und
n₁ eine Zahl von 2 bis 50 ist;
mindestens einer Verbindung der Formeln (A-2-a) und (A-2-b) 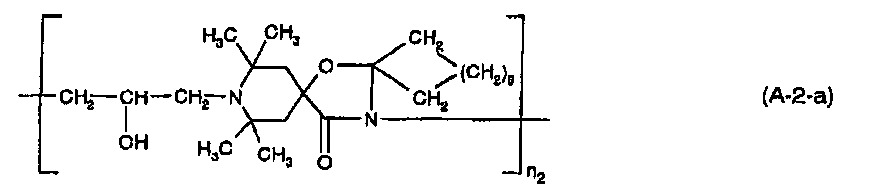 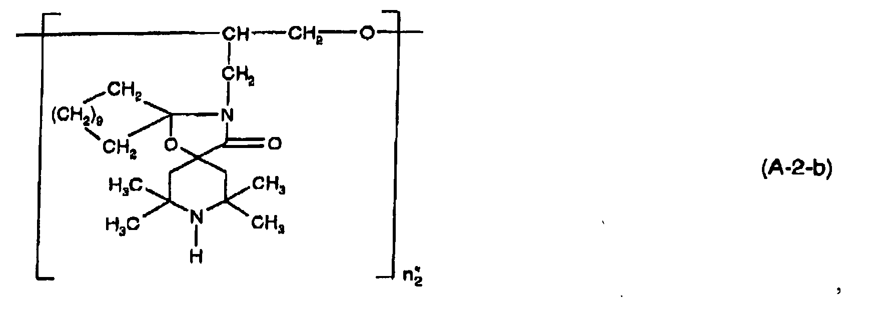 worin
n₂ und n₂* eine Zahl von 2 bis 50 sind;
einer Verbindung der Formel (A-3) 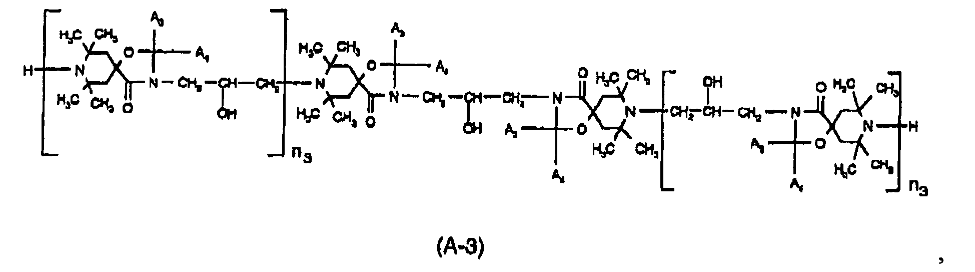 worin
A₃ und A₄ unabhängig voneinander Wasserstoff oder C₁-C₈-Alkyl sind oder A₃ und A₄ zusammen eine C₂-C₁₄-Alkylengruppe bilden und
die Variablen n₃ unabhängig voneinander eine Zahl von 1 bis 50 sind;
einer Verbindung der Formel (A-4) 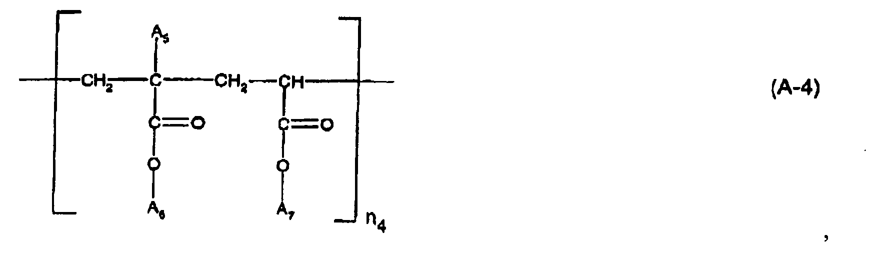 worin
n₄ eine Zahl von 2 bis 50 ist,
A₅ Wasserstoff oder C₁-C₄-Alkyl ist,
die Reste A₆ und A₇ unabhängig voneinander C₁-C₄-Alkyl oder eine Gruppe der Formel (a-I) 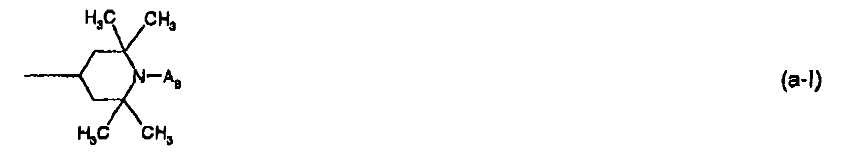 sind,
worin A₈ Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist,
mit der Maßgabe, daß mindestens 50 % der Reste A₇ eine Gruppe der Formel (a-I) sind;
einer Verbindung der Formel (B-1) 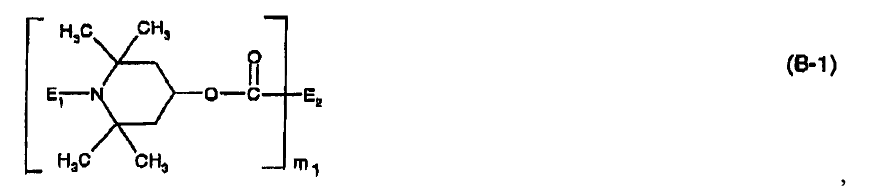 worin
E₁ Wasserstoff, C₁-C₈-Alkyl, -O^{·}, -OH, -CH₂CN, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist,
m₁ 1, 2 oder 4 ist,
wenn m₁ 1 ist, E₂ C₁-C₂₅-Alkyl ist,
wenn m₁ 2 ist, E₂ C₁-C₁₄-Alkylen oder eine Gruppe der Formel (b-I) 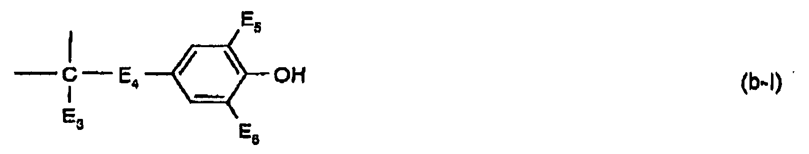 ist,
worin E₃ C₁-C₁₀-Alkyl oder C₂-C₁₀-Alkenyl ist, E₄ C₁-C₁₀-Alkylen ist und E₅ und E₆ unabhängig voneinander C₁-C₄-Alkyl, Cyclohexyl oder Methylcyclohexyl sind, und
wenn m₁ 4 ist, E₂ C₄-C₁₀-Alkantetrayl ist;
einer Verbindung der Formel (B-2) 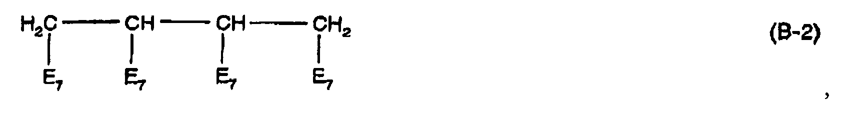 worin
zwei der Reste E₇ -COO-(C₁-C₂₀-Alkyl) sind und
zwei der Reste E₇ eine Gruppe der Formel (b-II) 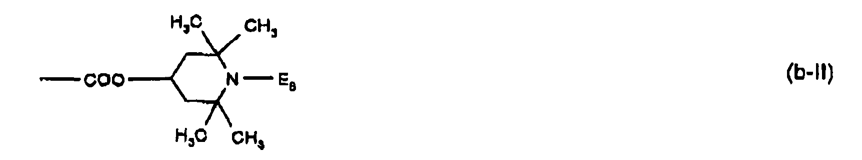 sind,
wobei E₈ Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist;
einer Verbindung der Formel (B-3) 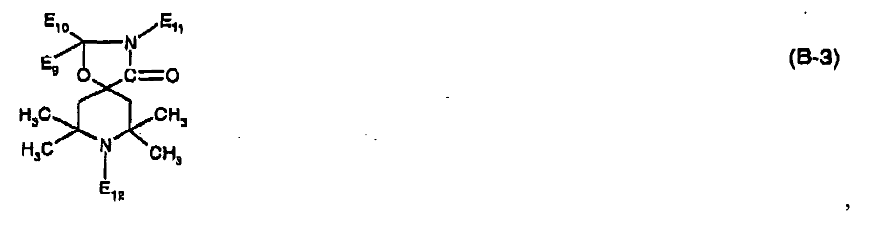 worin
E₉ und E₁₀ zusammen C₂-C₁₄-Alkylen bilden,
E₁₁ Wasserstoff oder eine Gruppe -Z₁-COO-Z₂ ist,
Z₁ C₂-C₁₄-Alkylen ist und
Z₂ C₁-C₂₄-Alkyl ist, und
E₁₂ Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist;
einer Verbindung der Formel (B-4) 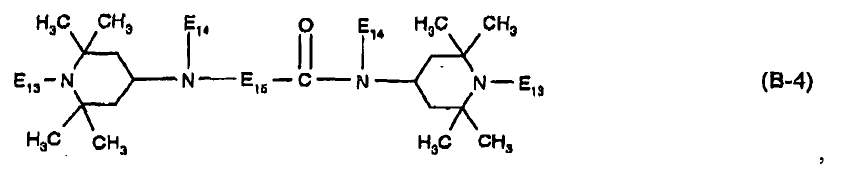 worin
die Reste E₁₃ unabhängig voneinander Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl sind,
die Reste E₁₄ unabhängig voneinander Wasserstoff oder C₁-C₁₂-Alkyl sind und
E₁₅ C₁-C₁₀-Alkylen oder C₃-C₁₀-Alkyliden ist;
einer Verbindung der Formel (B-5) 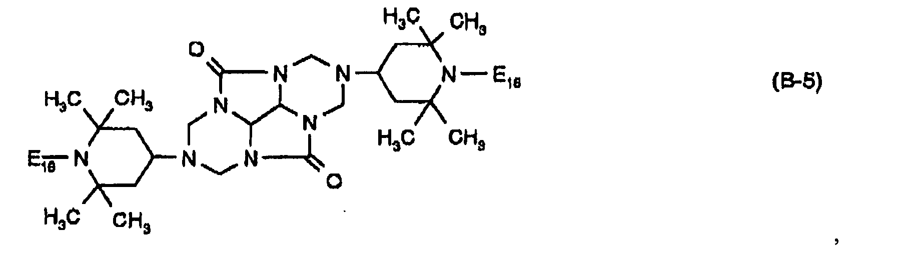 worin
die Reste E₁₆ unabhängig voneinander Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl sind;
einer Verbindung der Formel (B-6) 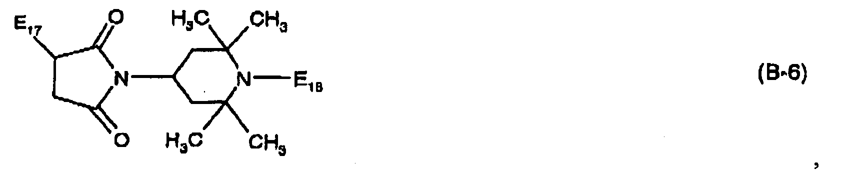 worin
E₁₇ C₁-C₂₄-Alkyl ist und
E₁₈ Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1,2 oder 3 C₁-C₄-Alkyl substituiert; oder C₁-C₈-Acyl ist;
einer Verbindung der Formel (B-7) 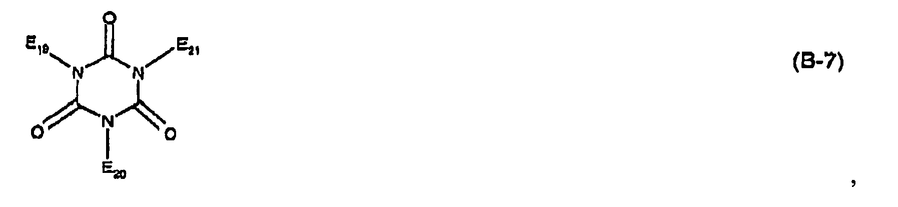 worin
E₁₉, E₂₀ und E₂₁ unabhängig voneinander eine Gruppe der Formel (b-III) 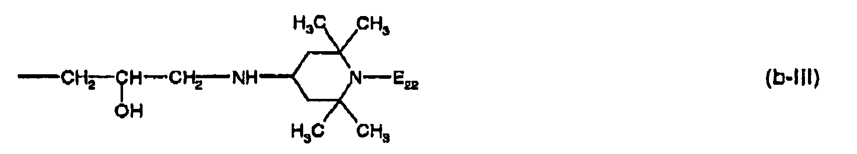 sind,
worin E₂₂ Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist;
einer Verbindung der Formel (B-8) 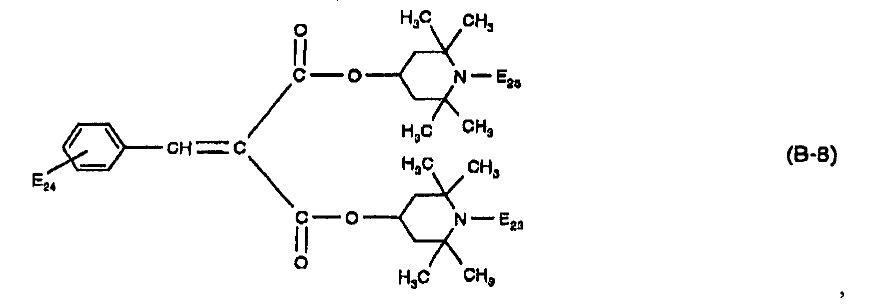 worin
die Reste E₂₃ unabhängig voneinander Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl sind
und E₂₄ Wasserstoff, C₁-C₁₂-Alkyl oder C₁-C₁₂-Alkoxy ist;
einer Verbindung der Formel (B-9) 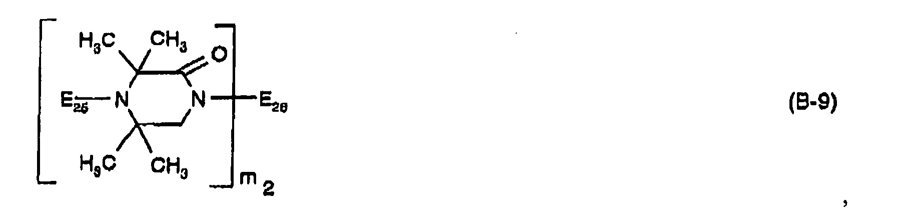 worin
m₂ 1, 2 oder 3 ist,
E₂₅ Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist und
wenn m₂ 1 ist, E₂₆ eine Gruppe 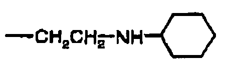 ist,
wenn m₂ 2 ist, E₂₆ C₂-C₂₂-Alkylen ist, und
wenn m₂ 3 ist, E₂₆ eine Gruppe der Formel (b-IV) 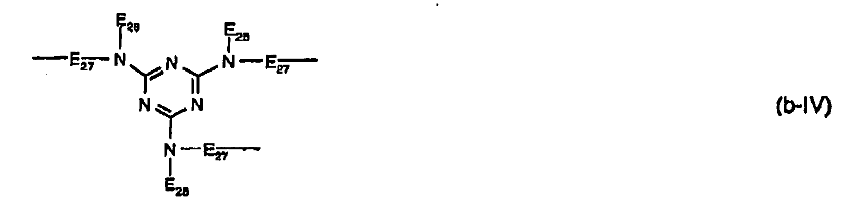 ist,
worin die Reste E₂₇ unabhängig voneinander C₂-C₁₂-Alkylen sind und
die Reste E₂₈ unabhängig voneinander C₁-C₁₂-Alkyl oder C₅-C₁₂-Cycloalkyl sind;
einer Verbindung der Formel (B-10) 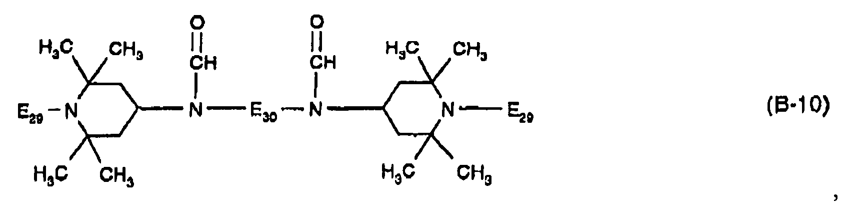 worin
die Reste E₂₉ unabhängig voneinander Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl sind, und
E₃₀ C₂-C₂₂-Alkylen, C₅-C₇-Cycloalkylen, C₁-C₄-Alkylendi(C₅-C₇-cycloalkylen), Phenylen oder Phenylendi(C₁-C₄-alkylen) ist;
einer Verbindung der Formel (C-1) 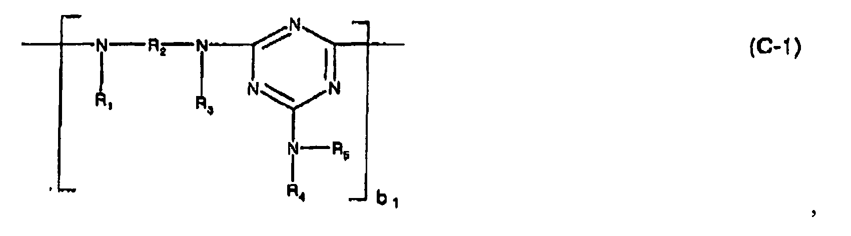 worin
R₁, R₃, R₄ und R₅ unabhängig voneinander Wasserstoff, C₁-C₁₂-Alkyl, C₅-C₁₂-Cycloalkyl, C₁-C₄-Alkyl-substituiertes C₅-C₁₂-Cycloalkyl, Phenyl, Phenyl, das durch -OH und/oder C₁-C₁₀-Alkyl substituiert ist; C₇-C₉-Phenylalkyl, C₇-C₉-Phenylalkyl, das an dem Phenylrest durch -OH und/oder C₁-C₁₀-Alkyl substituiert ist; oder eine Gruppe der Formel (c-I) 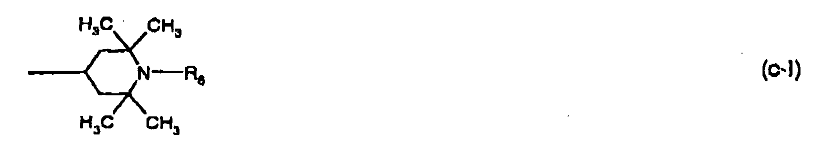 sind,
R₂ C₂-C₁₈-Alkylen, C₅-C₇-Cycloalkylen oder C₁-C₄-Alkylendi(C₅-C₇-cycloalkylen) ist, oder die Reste R₁, R₂ und R₃ zusammen mit den Stickstoffatomen, an die sie gebunden sind, einen 5- bis 10 gliedrigen heterocyclischen Ring bilden oder
R₄ und R₅ zusammen mit dem Stickstoffatom, an das sie gebunden sind, einen 5- bis 10 gliedrigen heterocyclischen Ring bilden,
R₆ Wasserstoff, C₁-C₈-Alkyl, -O^{·}, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist und
b₁ eine Zahl von 2 bis 50 ist,
mit der Maßgabe, daß mindestens einer der Reste R₁, R₃, R₄ und R₅ eine Gruppe der Formel (c-I) ist;
einer Verbindung der Formel (C-2) 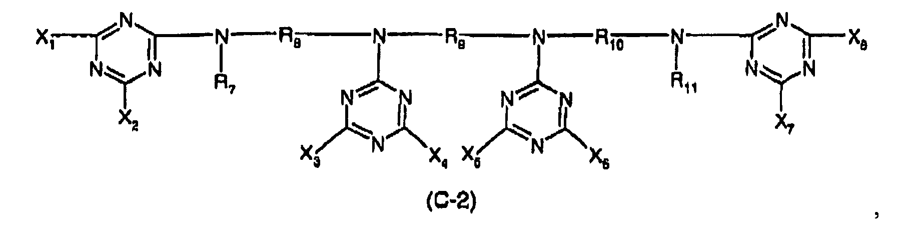 worin
R₇ und R₁₁ unabhängig voneinander Wasserstoff oder C₁-C₁₂-Alkyl sind,
R₈, R₉ und R₁₀ unabhängig voneinander C₂-C₁₀-Alkylen sind und
X₁, X₂, X₃, X₄, X₅, X₆, X₇ und X₈ unabhängig voneinander eine Gruppe der Formel (c-II) 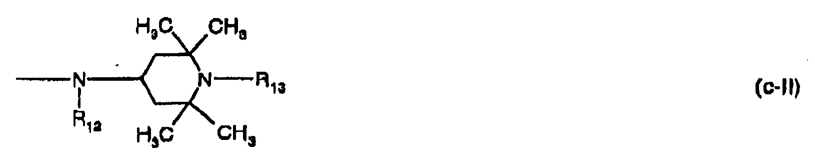 sind,
worin R₁₂ Wasserstoff, C₁-C₁₂-Alkyl, C₅-C₁₂-Cycloalkyl, C₁-C₄-Alkyl-substituiertes C₅-C₁₂-Cycloalkyl, Phenyl, -OH- und/oder C₁-C₁₀-Alkyl-substituiertes Phenyl, C₇-C₉-Phenylalkyl, C₇-C₉-Phenylalkyl, das an dem Phenylrest durch -OH und/oder C₁-C₁₀-Alkyl substituiert ist; oder eine Gruppe der Formel (c-I), wie vorstehend definiert, ist und
R₁₃ eine der Bedeutungen von R₆ hat;
einer Verbindung der Formel (C-3) 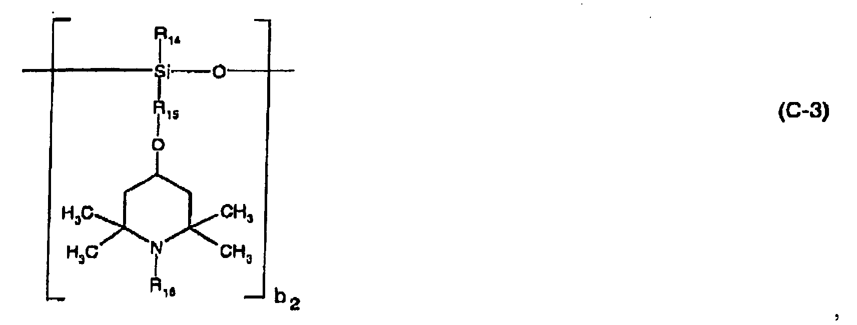 worin
R₁₄ C₁-C₁₀-Alkyl, C₅-C₁₂-Cycloalkyl, C₁-C₄-Alkyl-substituiertes C₅-C₁₂-Cycloalkyl, Phenyl oder C₁-C₁₀-Alkyl-substituiertes Phenyl ist,
R₁₅ C₃-C₁₀-Alkylen ist,
R₁₆ eine der Bedeutungen von R₆ hat und
b₂ eine Zahl von 2 bis 50 ist;
einer Verbindung der Formel (C-4) 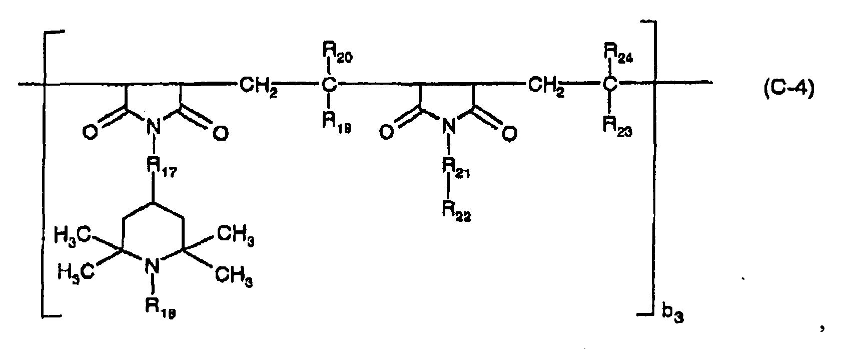 worin
R₁₇ und R₂₁ unabhängig voneinander eine direkte Bindung oder eine -N(X₉)-CO-X₁₀-CO-N(X₁₁)-Gruppe sind, wo X₉ und X₁₁ unabhängig voneinander Wasserstoff, C₁-C₈-Alkyl, C₅-C₁₂-Cycloalkyl, Phenyl, C₇-C₉-Phenylalkyl oder eine Gruppe der Formel (c-I) sind,
X₁₀ eine direkte Bindung oder C₁-C₄-Alkylen ist,
R₁₈ eine der Bedeutungen von R₆ hat,
R₁₉, R₂₀, R₂₃ und R₂₄ unabhängig voneinander Wasserstoff, C₁-C₃₀-Alkyl, C₅-C₁₂-Cycloalkyl oder Phenyl sind,
R₂₂ Wasserstoff, C₁-C₃₀-Alkyl, C₅-C₁₂-Cycloalkyl, Phenyl, C₇-C₉-Phenylalkyl oder eine Gruppe der Formel (c-I) sind und
b₃ eine Zahl von 1 bis 50 ist;
einer Verbindung der Formel (C-5) 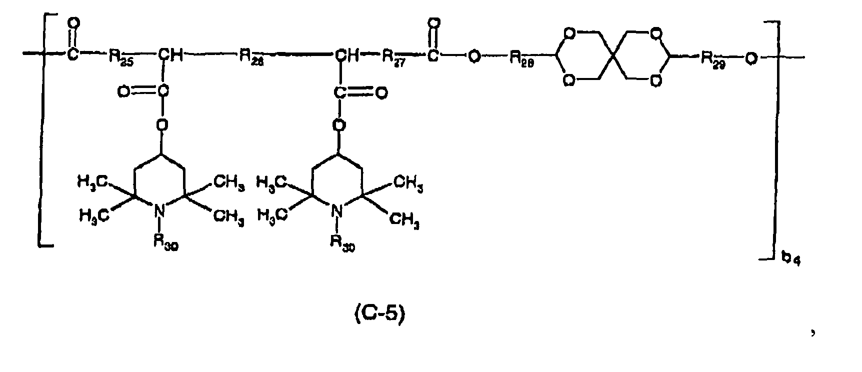 worin
R₂₅, R₂₆, R₂₇, R₂₈ und R₂₉ unabhängig voneinander eine direkte Bindung oder C₁-C₁₀-Alkylen sind,
R₃₀ eine der Bedeutungen von R₆ hat und
b₄ eine Zahl von 1 bis 50 ist; und
einem Produkt (C-6), erhältlich durch Umsetzen eines Produktes, das durch Umsetzen eines Polyamins der Formel (C-6-1) mit Cyanurchlorid erhalten wurde, mit einer Verbindung der Formel (C-6-2) 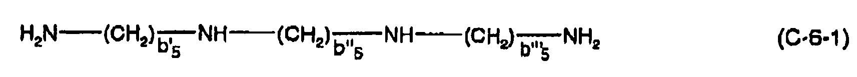 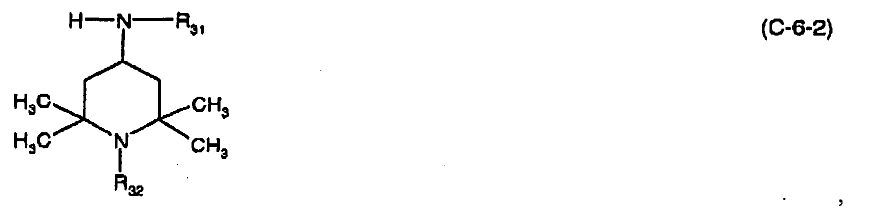 worin
b'₅, b"₅ und b"'₅ unabhängig voneinander eine Zahl von 2 bis 12 sind,
R₃₁ Wasserstoff, C₁-C₁₂-Alkyl, C₅-C₁₂-Cycloalkyl, Phenyl oder C₇-C₉-Phenylalkyl ist und R₃₂ eine der Bedeutungen von R₆ hat;
mit der Maßgabe, daß, wenn Komponente (I) ein Polyolefin ist, das Polyolefin keine oxidierbare ungesättigte Verbindung, ausgewählt aus der Gruppe, bestehend aus Naturkautschuk, Styrolbutadienharz, Fett und Öl, enthält.

2. Nicht landwirtschaftlich genutzter Gegenstand nach Anspruch 1, wobei
die Komponente (I) ein Polyolefinhomo- oder -copolymer, ein Stärke-modifiziertes Polyolefin, ein Stärke-basierender Polymerverbundstoff oder ein Biopolymer ist.

3. Nicht landwirtschaftlich genutzter Gegenstand nach Anspruch 1, wobei
die Komponente (I) Polyethylen, Polypropylen, ein Polyethylencopolymer oder ein Polypropylencopolymer ist.

4. Nicht landwirtschaftlich genutzter Gegenstand nach Anspruch 1, wobei
die Komponente (I) ein Biopolymer ist, ausgewählt aus der Gruppe, bestehend aus Polycaprolacton, Polymilchsäure, Polyglycolsäure, Polyhydroxybutyrat-valerat, Polybutylensuccinat, Polyvinylalkohol, Polyhydroxyalkanoat und Polyethylenadipat.

5. Nicht landwirtschaftlich genutzter Gegenstand nach Anspruch 1, wobei
die Komponente (II) ein C₂-C₂₄-Carboxylat von Fe, Ce, Co, Mn, Cu oder V ist.

6. Nicht landwirtschaftlich genutzter Gegenstand nach Anspruch 1, wobei
die Komponente (II) ein C₂-C₂₄-Carboxylat von Ce, Co oder Mn ist.

7. Nicht landwirtschaftlich genutzter Gegenstand nach Anspruch 1, wobei
die Komponente (II) ein C₁₀-C₂₀-Alkanoat von Ce, Co oder Mn oder ein C₁₀-C₂₀-Alkenoat von Ce, Co oder Mn ist.

8. Nicht landwirtschaftlich genutzter Gegenstand nach Anspruch 1, wobei
A₁ Wasserstoff oder Methyl ist,
A₂ eine direkte Bindung oder C₂-C₆-Alkylen ist und
n₁ eine Zahl von 2 bis 25 ist;
n₂ und n₂* eine Zahl von 2 bis 25 sind;
A₃ und A₄ unabhängig voneinander Wasserstoff oder C₁-C₄-Alkyl sind, oder A₃ und A₄ zusammen eine C₉-C₁₃-Alkylengruppe bilden, und
die Variablen n₃ unabhängig voneinander eine Zahl von 1 bis 25 sind;
n₄ eine Zahl von 2 bis 25 ist,
A₅ und A₆ unabhängig voneinander C₁-C₄-Alkyl sind und
A₇ C₁-C₄-Alkyl oder eine Gruppe der Formel (a-I) ist,
mit der Maßgabe, daß mindestens 50 % der Reste A₇ eine Gruppe der Formel (a-I) sind;
m₁ 1, 2 oder 4 ist,
wenn m₁ 1 ist, E₂ C₁₂-C₂₀-Alkyl ist,
wenn m₁ 2 ist, E₂ C₂-C₁₀-Alkylen oder eine Gruppe der Formel (b-I) ist,
E₃ C₁-C₄-Alkyl ist,
E₄ C₁-C₆-Alkylen ist und
E₅ und E₆ unabhängig voneinander C₁-C₄-Alkyl sind, und,
wenn m₁ 4 ist, E₂ C₄-C₈-Alkantetrayl ist;
zwei der Reste E₇ -COO-(C₁₀-C₁₅-Alkyl) sind und
zwei der Reste E₇ eine Gruppe der Formel (b-II) sind;
E₉ und E₁₀ zusammen ein C₉-C₁₃-Alkylen bilden,
E₁₁ Wasserstoff oder eine Gruppe -Z₁-COO-Z₂ ist,
Z₁ C₂-C₆-Alkylen ist und
Z₂ C₁₀-C₁₆-Alkyl ist;
E₁₄ Wasserstoff ist und
E₁₅ C₂-C₆-Alkylen oder C₃-C₅-Alkyliden ist;
E₁₇ C₁₀-C₁₄-Alkyl ist;
E₂₄ C₁-C₄-Alkoxy ist;
m₂ 1, 2 oder 3 ist,
wenn m₂ 1 ist, E₂₆ eine Gruppe 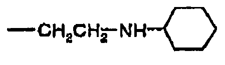 ist,
wenn m₂ 2 ist, E₂₆ C₂-C₆-Alkylen ist, und,
wenn m₂ 3 ist, E₂₆ eine Gruppe der Formel (b-IV) ist,
die Reste E₂₇ unabhängig voneinander C₂-C₆-Alkylen sind und
die Reste E₂₈ unabhängig voneinander C₁-C₄-Alkyl oder C₅-C₈-Cycloalkyl sind und E₃₀ C₂-C₈-Alkylen ist;
R₁ und R₃ unabhängig voneinander eine Gruppe der Formel (c-I) sind,
R₂ C₂-C₈-Alkylen ist,
R₄ und R₅ unabhängig voneinander Wasserstoff, C₁-C₁₂-Alkyl, C₅-C₈-Cycloalkyl oder eine Gruppe der Formel (c-I) sind, oder die Reste R₄ und R₅ zusammen mit dem Stickstoffatom, an das sie gebunden sind, einen 5- bis 10gliedrigen heterocyclischen Ring bilden und
b₁ eine Zahl von 2 bis 25 ist;
R₇ und R₁₁ unabhängig voneinander Wasserstoff oder C₁-C₄-Alkyl sind,
R₈, R₉ und R₁₀ unabhängig voneinander C₂-C₄-Alkylen sind und
X₁, X₂, X₃, X₄, X₅, X₆, X₇ und X₈ unabhängig voneinander eine Gruppe der Formel (c-II) sind,
R₁₂ Wasserstoff, C₁-C₄-Alkyl, C₅-C₈-Cycloalkyl oder eine Gruppe der Formel (c-I) ist;
R₁₄ C₁-C₄-Alkyl ist,
R₁₅ C₃-C₆-Alkylen ist und
b₂ eine Zahl von 2 bis 25 ist;
R₁₇ und R₂₁ unabhängig voneinander eine direkte Bindung oder eine Gruppe -N(X₉)-CO-X₁₀-CO-N(X₁₁)- sind,
X₉ und X₁₁ unabhängig voneinander Wasserstoff oder C₁-C₄-Alkyl sind,
X₁₀ eine direkte Bindung ist,
R₁₉ und R₂₃ C₁-C₂₅-Alkyl oder Phenyl sind,
R₂₀ und R₂₄ Wasserstoff oder C₁-C₄-Alkyl sind,
R₂₂ C₁-C₂₅-Alkyl oder eine Gruppe der Formel (c-I) ist und
b₃ eine Zahl von 1 bis 25 ist;
R₂₅, R₂₆, R₂₇, R₂₈ und R₂₉ unabhängig voneinander eine direkte Bindung oder C₁-C₄-Alkylen sind und
b₄ eine Zahl von 1 bis 25 ist;
b'₅, b"₅ und b"'₅ unabhängig voneinander eine Zahl von 2 bis 4 sind und
R₃₁ Wasserstoff, C₁-C₄-Alkyl, C₅-C₈-Cycloalkyl, Phenyl oder Benzyl ist.

9. Nicht landwirtschaftlich genutzter Gegenstand nach Anspruch 1, wobei
die Komponente (III) eine oder mehrere sterisch gehinderte Aminverbindung(en) ist, ausgewählt aus der Gruppe, bestehend aus den Verbindungen der Formeln
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) und (C-5-a) und einem Produkt (C-6-a); 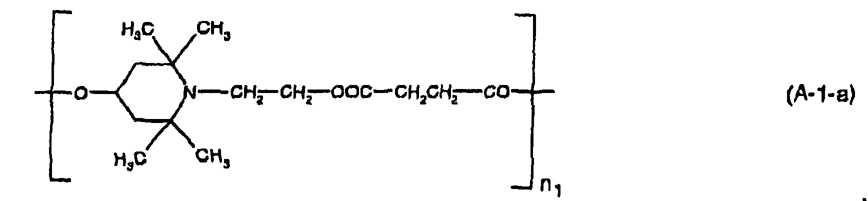 worin n₁ eine Zahl von 2 bis 20 ist; 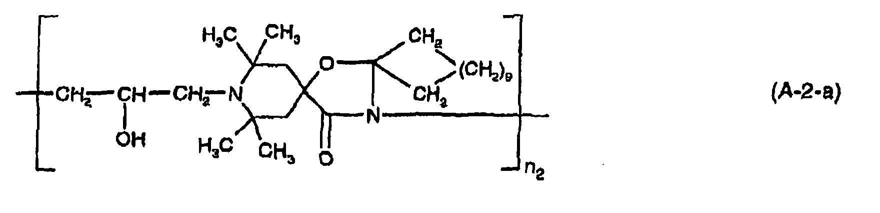 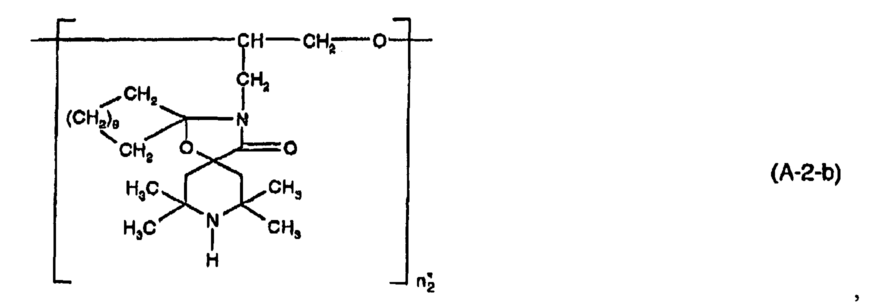 worin n₂ und n₂* eine Zahl von 2 bis 20 sind; 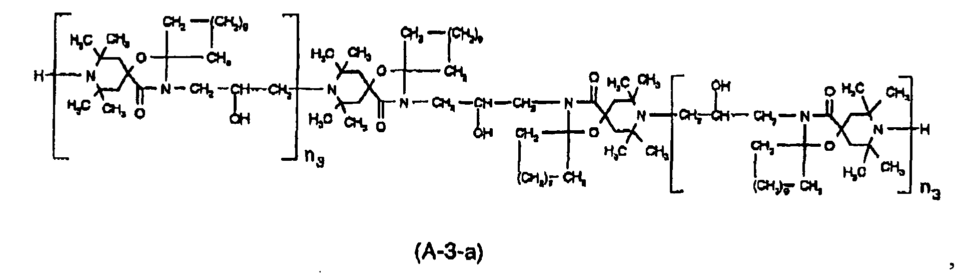 worin die Variablen n₃ unabhängig voneinander eine Zahl von 1 bis 20 sind; 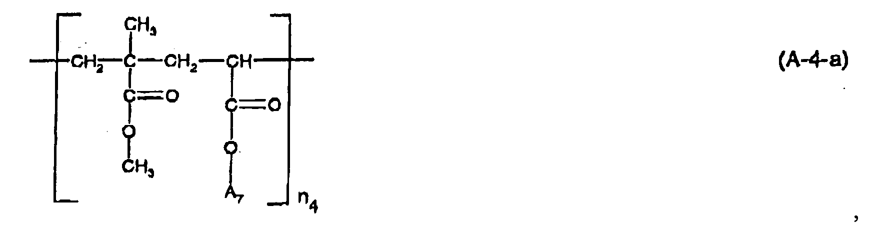 worin n₄ eine Zahl von 2 bis 20 ist und
mindestens 50 % der Reste A₇ eine Gruppe der Formel (a-I) 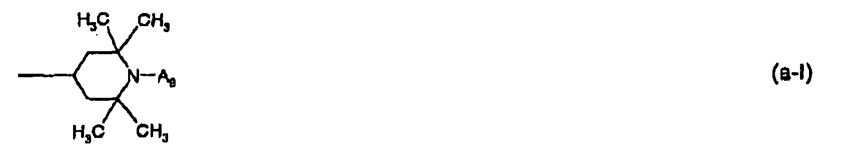 sind,
worin A₈ Wasserstoff, C₁-C₈-Alkyl, O^{·}, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist,
und die verbleibenden Reste A₇ Ethyl sind; 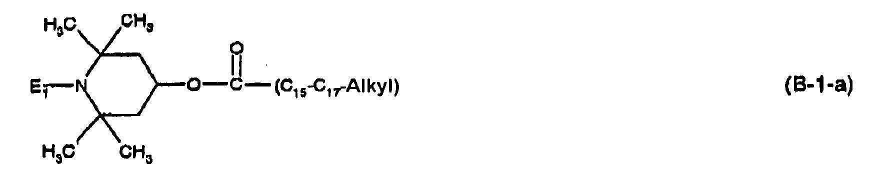 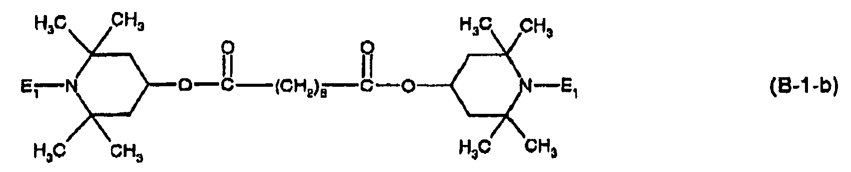 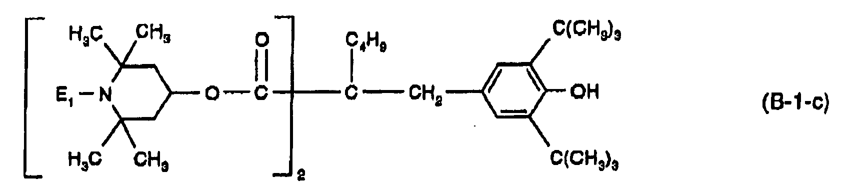 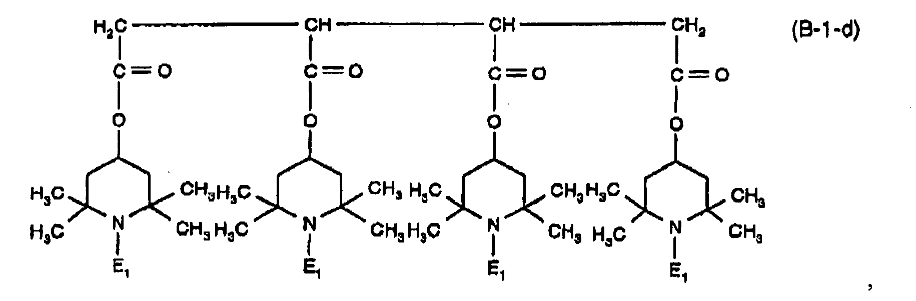 worin E₁ Wasserstoff, C₁-C₈-Alkyl, O^{·}, -OH, -CH₂CN, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 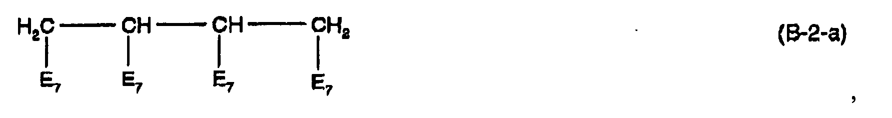 worin zwei der Reste E₇ -COO-C₁₃H₂₇ sind und
zwei der Reste E₇ 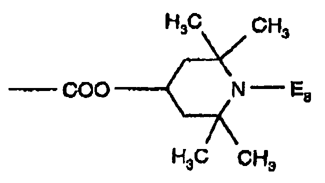 sind und E₈ Wasserstoff, C₁-C₈-Alkyl,
O^{·}, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 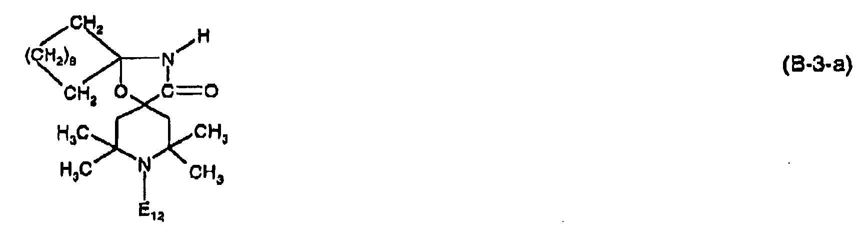 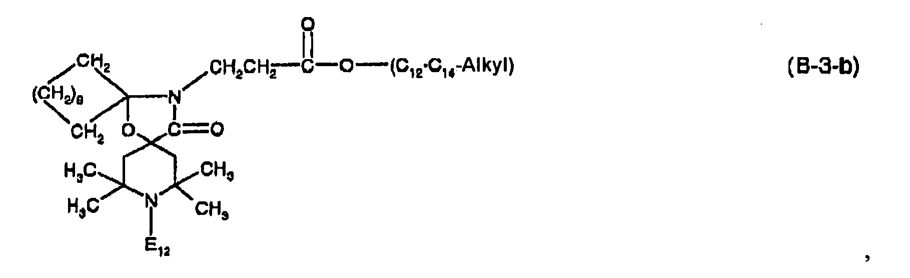 worin E₁₂ Wasserstoff, C₁-C₈-Alkyl, O^{·}, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 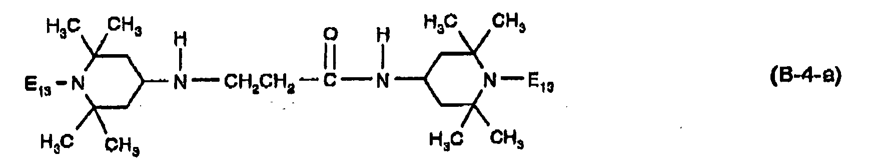 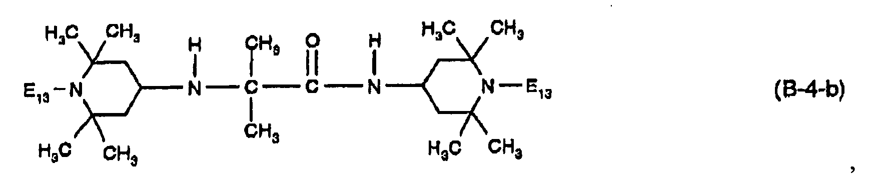 worin E₁₃ Wasserstoff, C₁-C₈-Alkyl, O^{·}, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 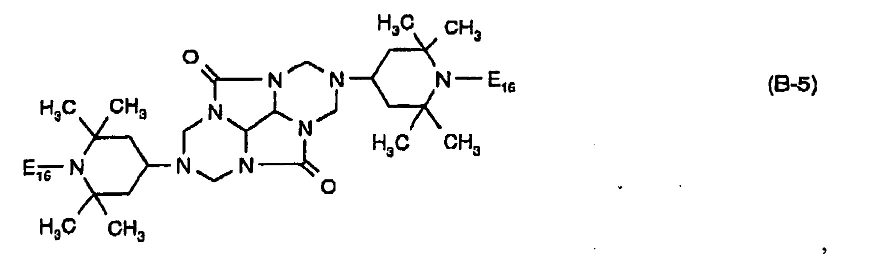 worin E₁₆ Wasserstoff, C₁-C₈-Alkyl, O^{·}, -OH, -CH₂CN, C₁-C₁₈-Alkoxy, C₅-C₁₂-Cycloalkoxy C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 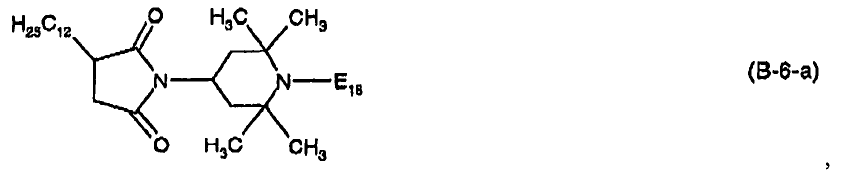 worin E₁₈ Wasserstoff, C₁-C₈-Alkyl, O^{·}, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 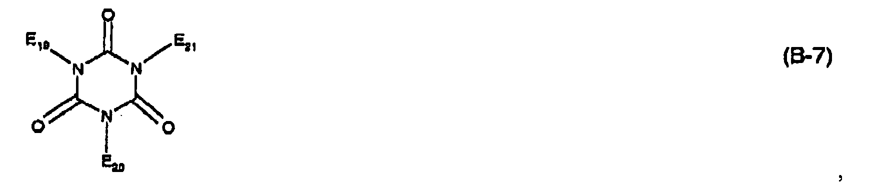 worin E₁₉, E₂₀ und E₂₁ unabhängig voneinander eine Gruppe der Formel (b-III) 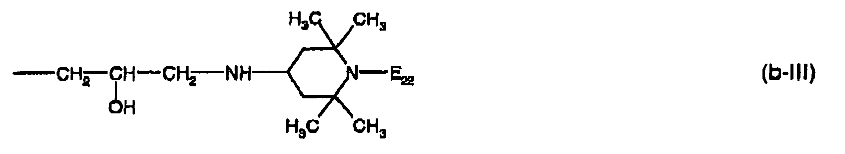 sind,
worin E₂₂ Wasserstoff, C₁-C₈-Alkyl, O^{·}, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 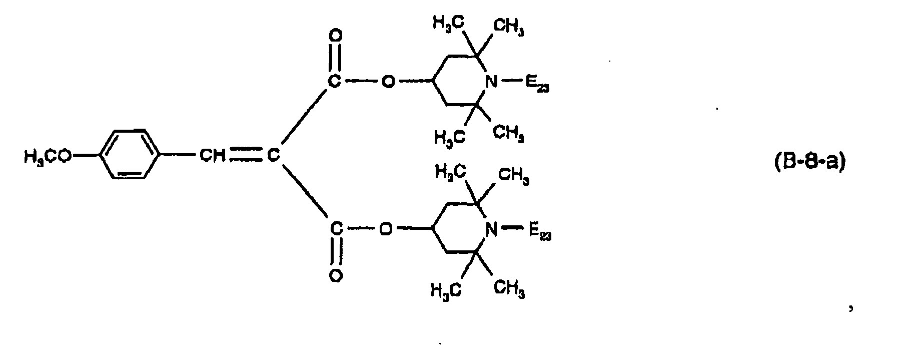 worin E₂₃ Wasserstoff, C₁-C₈-Alkyl, O^{·}, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 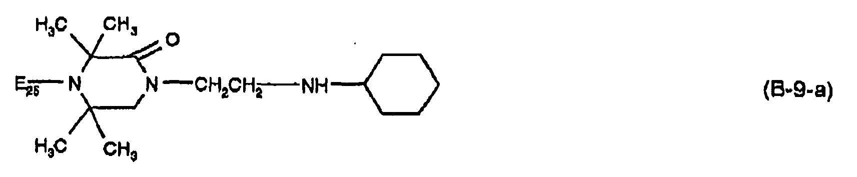 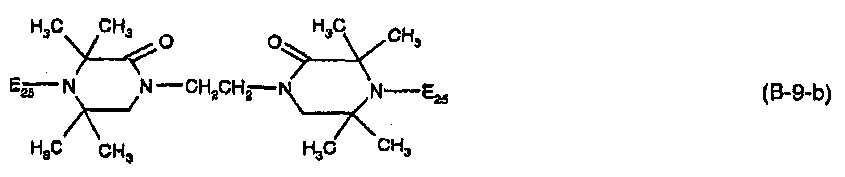 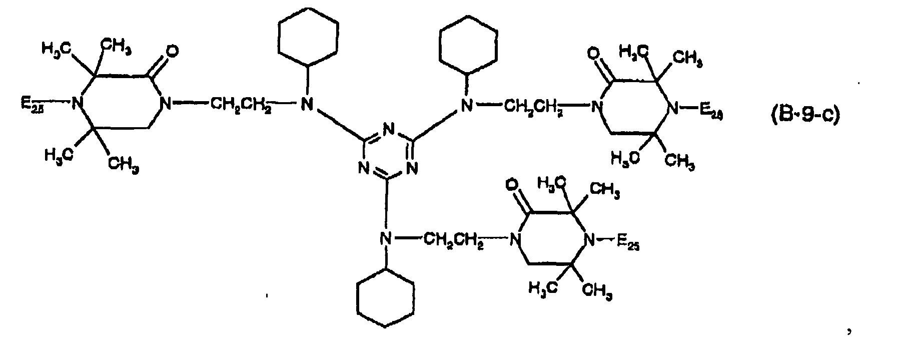 worin E₂₅ Wasserstoff, C₁-C₈-Alkyl, O^{·}, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 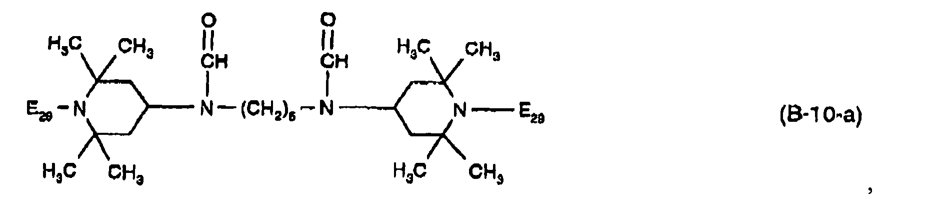 worin E₂₉ Wasserstoff, C₁-C₈-Alkyl, O^{·}, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 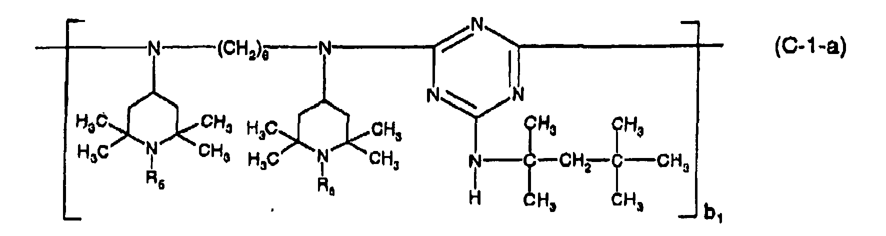 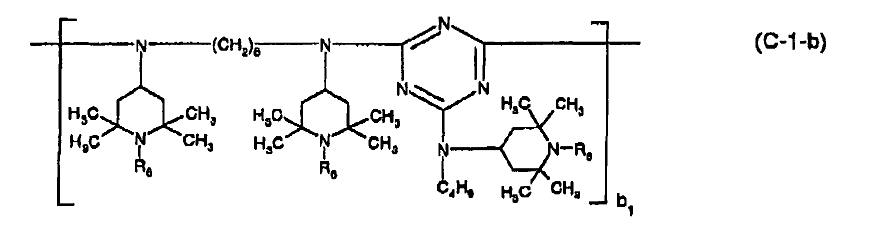 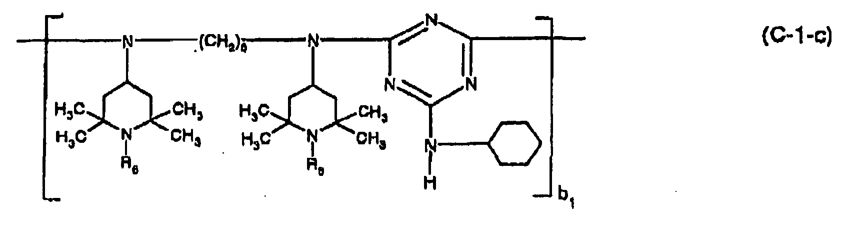 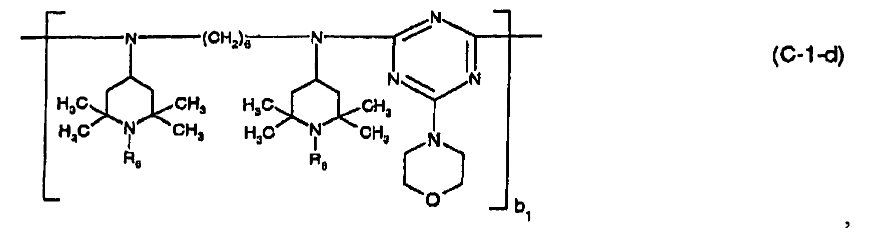 worin b₁ eine Zahl von 2 bis 20 ist und R₆ Wasserstoff, C₁-C₈-Alkyl, O^{·}, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder an dem Phenyl durch 1, 2 oder 3 C₁-C₄-Alkyl substituiert; oder C₁-C₈-Acyl ist; 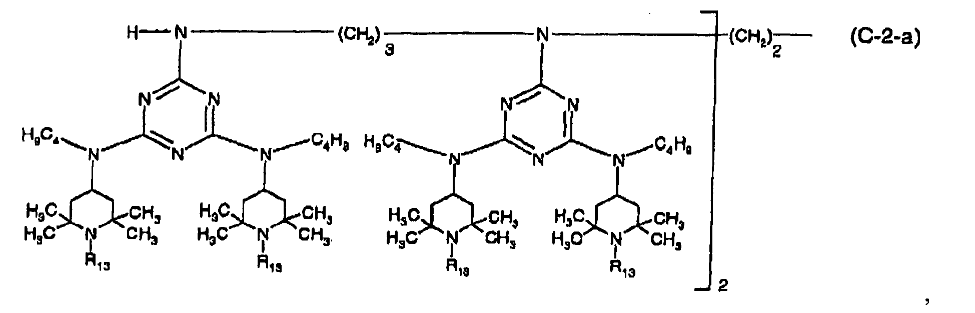 worin R₁₃ eine der Bedeutungen von R₆ hat, 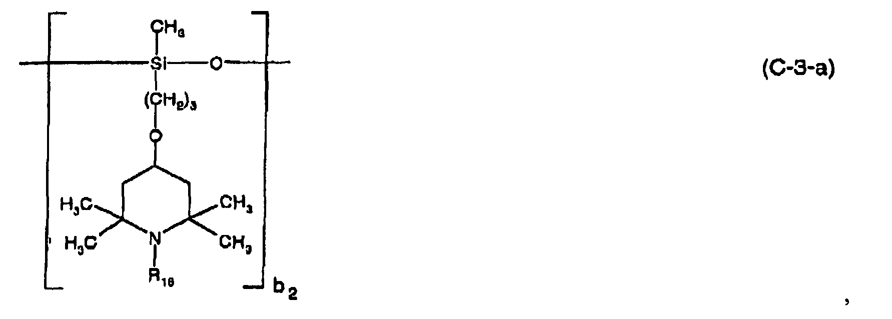 worin b₂ eine Zahl von 2 bis 20 ist und R₁₆ eine der Bedeutungen von R₆ hat; 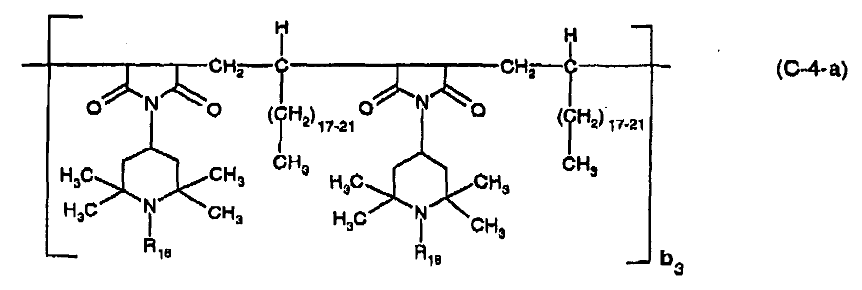 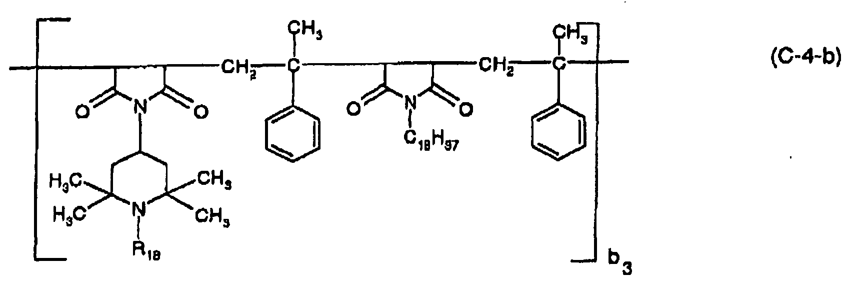 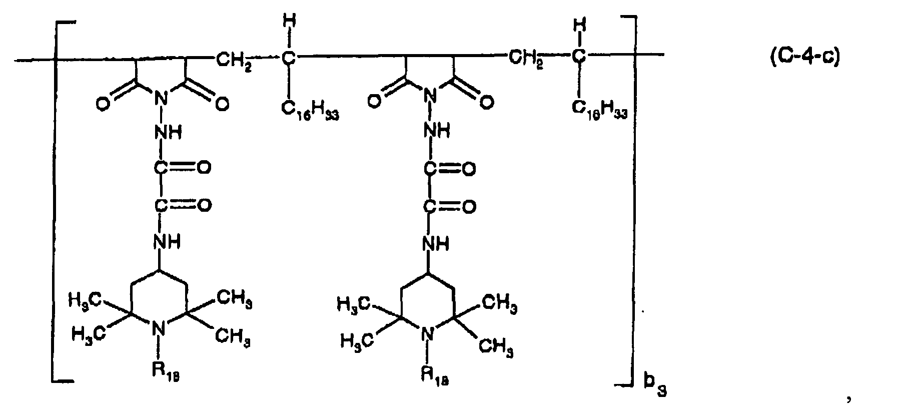 worin b₃ eine Zahl von 1 bis 20 ist und R₁₈ eine der Bedeutungen von R₆ hat; 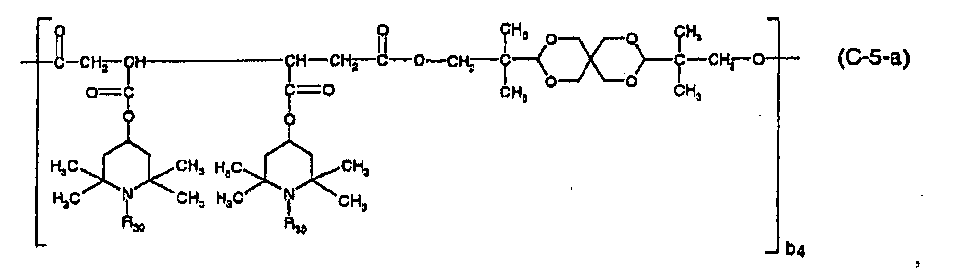 worin b₄ eine Zahl von 1 bis 20 ist und R₃₀ eine der Bedeutungen von R₆ hat;
ein Produkt (C-6-a), erhältlich durch Umsetzen eines Produktes, das durch Umsetzen eines Polyamins der Formel (C-6-1-a) mit Cyanurchlorid erhalten wurde, mit einer Verbindung der Formel (C-6-2-a) 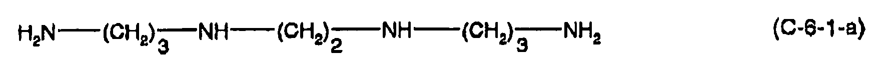 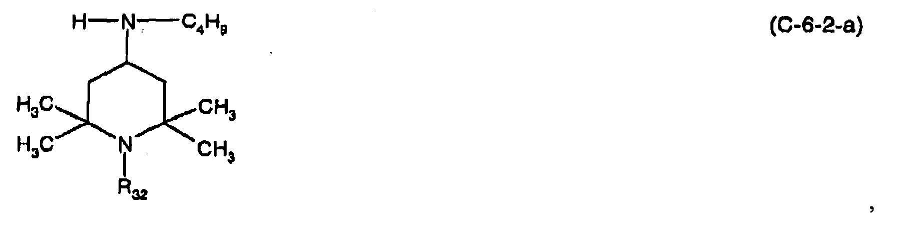 worin R₃₂ eine der Bedeutungen von R₆ hat.

10. Nicht landwirtschaftlich genutzter Gegenstand nach Anspruch 1, wobei
A₈ Wasserstoff, C₁-C₄-Alkyl, C₁-C₁₀-Alkoxy, Cyclohexyloxy, Allyl, Benzyl oder Acetyl ist;
E₁ Wasserstoff, C₁-C₄-Alkyl, Cyclohexyloxy, Allyl, Benzyl oder Acetyl ist und E₈, E₁₂, E₁₃, E₁₆, E₁₈, E₂₂, E₂₃, E₂₅ und E₂₉ Wasserstoff, C₁-C₄-Alkyl, C₁-C₁₀-Alkoxy, Cyclohexyloxy, Allyl, Benzyl oder Acetyl sind;
R₆, R₁₃, R₁₆, R₁₈, R₃₀ und R₃₂ Wasserstoff, C₁-C₄-Alkyl, C₁-C₁₀-Alkoxy, Cyclohexyloxy, Allyl, Benzyl oder Acetyl sind.

11. Nicht landwirtschaftlich genutzter Gegenstand nach Anspruch 9, wobei
A₈, E₁, E₈, E₁₂, E₁₃, E_{16,} E₁₈, E₂₂, E₂₃, E₂₅, E₂₉, R₆, R₁₃, R₁₆, R₁₈, R₃₀ und R₃₂ Wasserstoff oder Methyl sind und R₆ außerdem C₁-C₆-Alkoxy ist.

12. Nicht landwirtschaftlich genutzter Gegenstand nach Anspruch 9, wobei
die Komponente (III) eine Verbindung der Formel
(A-1-a), (A-2-a), (A-2-b),
(B-1-a), (B-1-b), (B-1-c), (B-1-d), (B-2-a), (B-3-a), (B-3-b), (B-4-a), (B-4-b), (B-5), (B-6-a), (B-8-a), (B-9-b), (B-10-a),
(C-1-a), (C-1-b), (C-1-c), (C-1-d), (C-2-a), (C-3-a), (C-4-a) oder (C-5-a) oder ein Produkt (C-6-a) ist.

13. Nicht landwirtschaftlich genutzter Gegenstand nach Anspruch 9, wobei
die Komponente (III) eine Verbindung der Formel
(A-1-a), (A-2-a), (A-2-b),
(C-1-a), (C-1-b), (C-1-c), (C-1-d), (C-2-a), (C-3-a), (C-4-a) oder (C-5-a) oder ein Produkt (C-6-a) ist.

14. Nicht landwirtschaftlich genutzter Gegenstand nach Anspruch 9, welcher als Komponente (III) zwei unterschiedliche sterisch gehinderte Aminverbindungen enthält, ausgewählt aus der Gruppe, bestehend aus den Verbindungen der Formeln
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) und (C-5-a) und einem Produkt (C-6-a);
mit der Maßgabe, daß die zwei unterschiedlichen sterisch gehinderten Aminverbindungen nicht aus derselben generischen Formel ausgewählt sind.

15. Nicht landwirtschaftlich genutzter Gegenstand nach Anspruch 1, wobei
die Komponente (III) eine Verbindung der Formel (A-1-a) oder
eine Verbindung der Formel (C-1-a), worin R₆ Wasserstoff ist, oder
eine Kombination einer Verbindung der Formel (A-1-a) mit einer Verbindung der Formel (C-1-a), worin R₆ Wasserstoff ist, oder
eine Kombination einer Verbindung der Formel (A-1-a) mit einer Verbindung der Formel (C-2-a), worin R₁₃ Methyl ist, oder
eine Kombination einer Verbindung der Formel (B-1-b), worin E₁ Wasserstoff ist, mit einer Verbindung der Formel (C-1-a), worin R₆ Wasserstoff ist, ist.

16. Nicht landwirtschaftlich genutzter Gegenstand nach Anspruch 1, welcher ferner eine oder mehrere der folgenden Komponenten enthält
(IV) ein Antioxidationsmittel,
(V) einen UV-Absorber,
(VI) einen Füllstoff,
(VII) ein Pigment,
(VIII) ein anorganisches oder organisches Salz von Ca, Mg, Zn oder Al.

17. Nicht landwirtschaftlich genutzter Gegenstand nach Anspruch 1, welcher ferner eine aliphatische Polyhydroxy-carbonsäure enthält.

18. Nicht landwirtschaftlich genutzter Gegenstand nach Anspruch 17, wobei die aliphatische Polyhydroxy-carbonsäure Zitronensäure ist.

19. Nicht landwirtschaftlich genutzter Gegenstand nach Anspruch 1, welcher ein Gegenstand ist, ausgewählt aus der Gruppe, bestehend aus Geotextilien, Deponieabdeckungen, Industrieabdeckungen, Abfallabdeckungen, provisorischen Gerüstfolien, Gebäudefolien, Schlickzäunen, flexiblen Verpackungsumwickelungen, Vorhängen in der Geflügelhaltung und provisorischen Schutzkonstruktionen.

20. Verfahren zur Kontrolle der Witterungsbeständigkeit und der Zersetzung eines nicht landwirtschaftlich genutzten organischen Polymergegenstandes, wie in Anspruch 1 definiert, welches das Einführen der Komponenten (II) und (III), wie in Anspruch 1 definiert, in das organische Polymer umfaßt.

21. Verwendung eines Gemisches, enthaltend die Komponenten (II) und (III), wie in Anspruch 1 definiert, zur Kontrolle der Witterungsbeständigkeit und der Zersetzung eines nicht landwirtschaftlich genutzten organischen Polymergegenstandes, wie in Anspruch 1 definiert.

22. Nicht landwirtschaftlich genutzter Gegenstand nach Anspruch 1, mit der Maßgabe, daß, wenn die Komponente (I) ein Polyolefin ist, das Polyolefin keine oxidierbare ungesättigte Verbindung enthält.

## Revendications

1. Article non agricole, comprenant les composants:
(i) un polymère organique,
(ii) un sel organique de Fe, Ce, Co, Mn, Cu ou V, et
(iii) un ou plusieurs composés d'amines à empêchement stérique, choisis dans le groupe constitué par
un composé de formule (A-1) 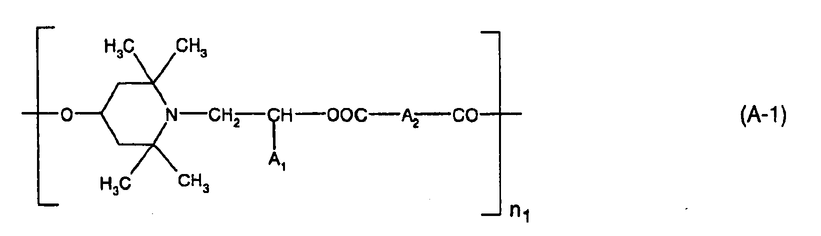 dans laquelle
A₁ est un hydrogène ou un alkyle en C₁-C₄,
A₂ est une liaison directe ou un alkylène en C₁-C₁₀, et
n₁ est un nombre allant de 2 à 50 ;
au moins un composé de formules (A-2-a) et (A-2-b) 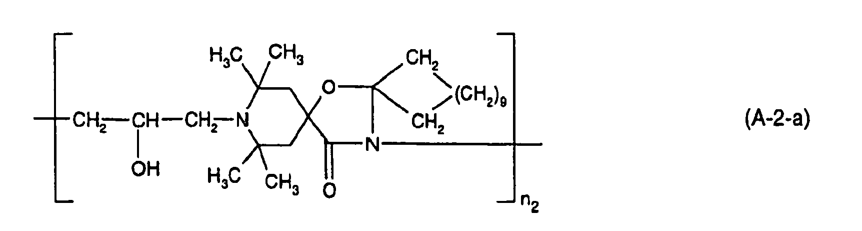 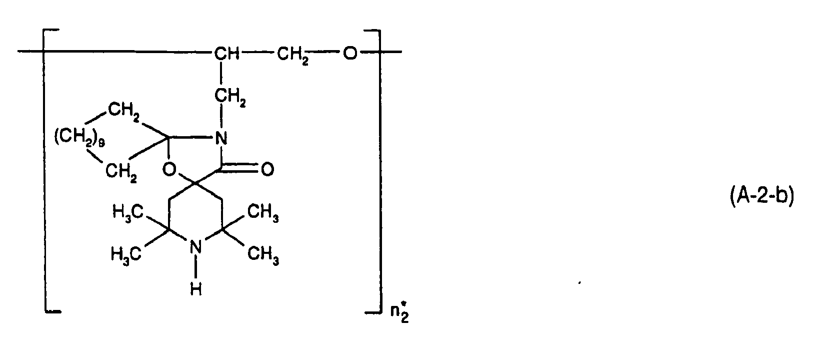 dans lesquelles
n₂ et n₂* sont un nombre allant de 2 à 50;
un composé de formule (A-3) 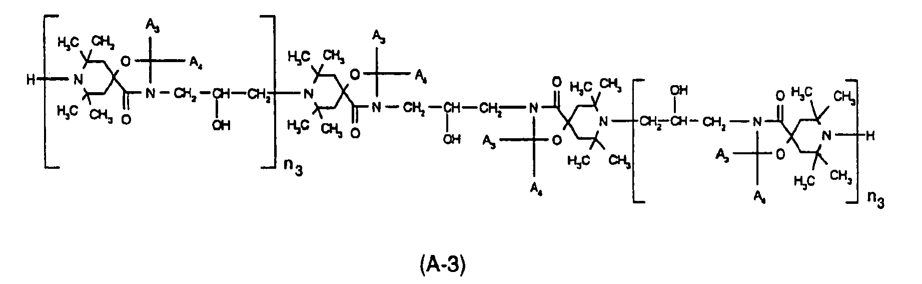 dans laquelle
A₃ et A₄ sont, indépendamment l'un de l'autre, un hydrogène ou un alkyle en C₁-C₈ ou A₃ et A₄ forment conjointement un groupe alkylène en C₂-C₁₄, et
les variables n₃ sont, indépendamment les unes des autres, un nombre entre 1 et 50 ;
un composé de formule (A-4) 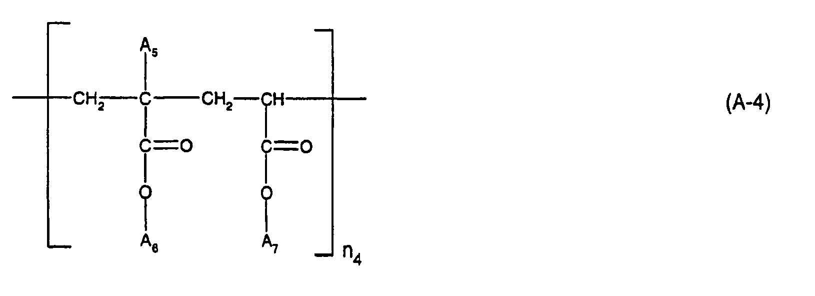 dans laquelle
n₄ est un nombre de 2 à 50,
A₅ est un hydrogène ou un alkyle en C₁-C₄,
les radicaux A₆ et A₇ sont, indépendamment l'un de l'autre, un alkyle en C₁-C₄ ou un groupe de formule (a-I) 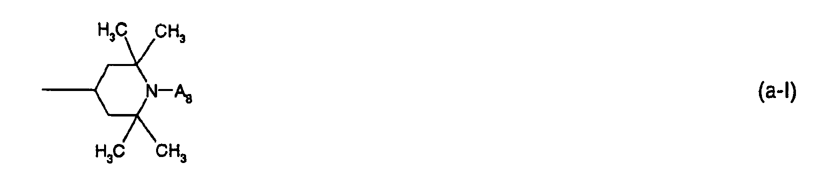 dans laquelle A₈ est un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈,
à la condition qu'au moins 50 % des radicaux A₇ soient un groupe de formule (a-I) ;
un composé de formule (B-1) 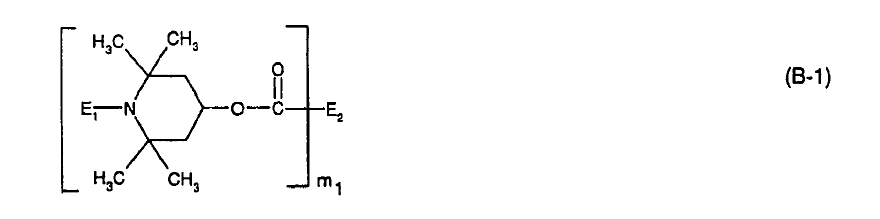 dans laquelle E₁ est un hydrogène, un alkyle en C₁-C₈, -O-, -OH, -CH₂CN, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈,
m₁ est égal à 1, 2 ou 4,
si m₁ est égal à 1, E₂ est un alkyle en C₁-C₂₅,
si m₁ est égal à 2, E₂ est un alkylène en C₁-C₁₄ ou un groupe de formule (b-I) 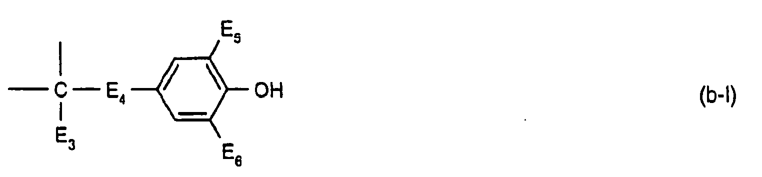 dans laquelle E₃ est un alkyle en C₁-C₁₀ ou un alcényle en C₂-C₁₀, E₄ est un alkylène en C₁-C₁₀ et
E₅ et E₆ sont, indépendamment l'un de l'autre, un alkyle en C₁-C₄, un cyclohexyle ou un méthylcyclohexyle, et
si m₁ est égal à 4, E₂ est un alcanetétrayle en C₄-C₁₀;
un composé de formule (B-2) 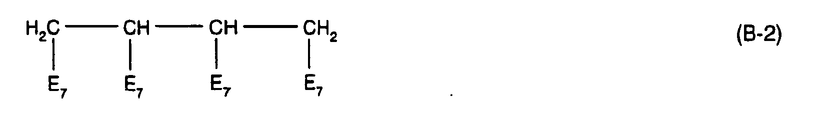 dans laquelle
deux des radicaux E₇ sont -COO- (alkyle en C₁-C₂₀) et
deux des radicaux E₇ sont un groupe de formule (b-II) 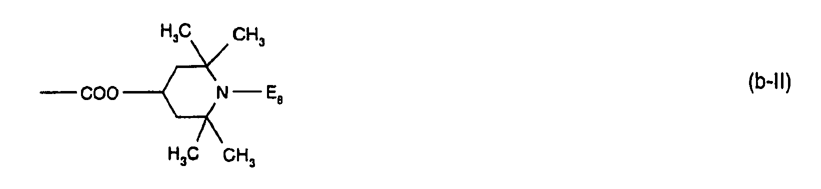 avec E₈ qui est un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ;
un composé de formule (B-3) 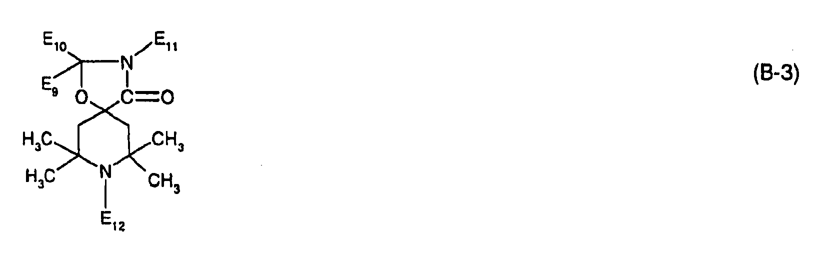 dans laquelle
E₉ et E₁₀ forment conjointement un alkylène en C₂-C₁₄,
E₁₁ est un hydrogène ou un groupe -Z₁-COO-Z₂,
Z₁ est un alkylène en C₂-C₁₄, et
Z₂ est un alkyle en C₁-C₂₄, et
E₁₂ est un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ;
un composé de formule (B-4) 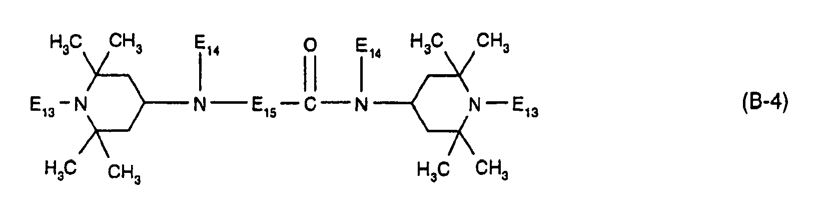 dans laquelle
les radicaux E₁₃ sont, indépendamment l'un de l'autre, un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈,
les radicaux E₁₄ sont, indépendamment l'un de l'autre, un hydrogène ou un alkyle en C₁-C₁₂, et
E₁₅ est un alkylène en C₁-C₁₀ ou un alkylidène en C₃-C₁₀ ;
un composé de formule (B-5) 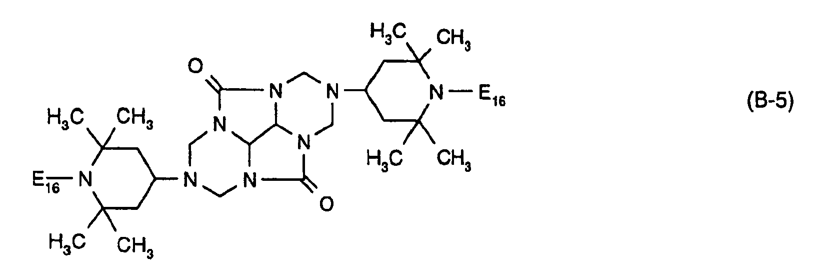 dans laquelle
les radicaux E₁₆ sont, indépendamment l'un de l'autre, un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ;
un composé de formule (B-6) 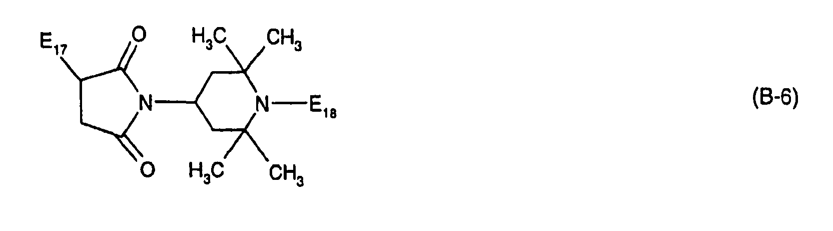 dans laquelle
E₁₇ est un alkyle en C₁-C₂₄, et
E₁₈ est un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ;
un composé de formule (B-7) 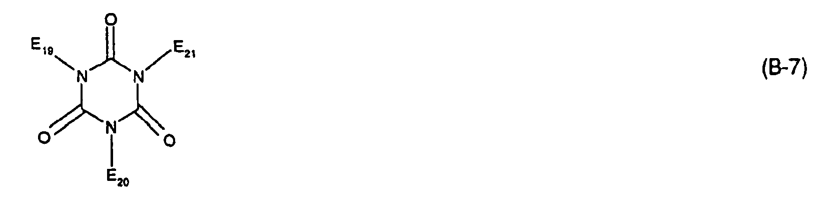 dans laquelle
E₁₉, E₂₀ et E₂₁ sont, indépendamment les uns des autres, un groupe de formule (b-III) 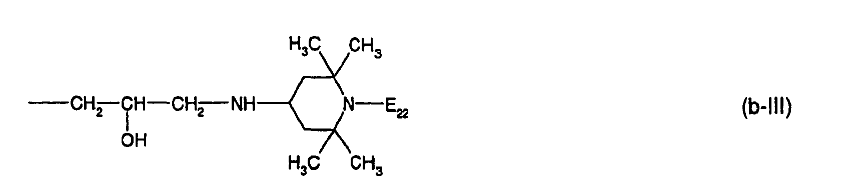 dans laquelle E₂₂ est un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ;
un composé de formule (B-8) 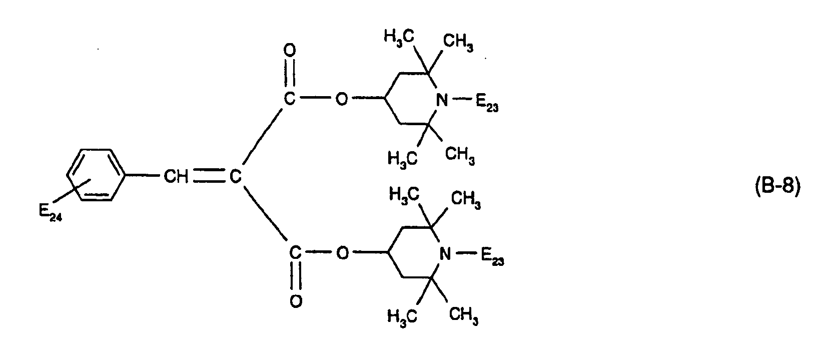 dans laquelle
les radicaux E₂₃ sont, indépendamment les uns des autres, un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈,
et E₂₄ est un hydrogène, un alkyle en C₁-C₁₂ ou un alcoxy en C₁-C₁₂ ;
un composé de formule (B-9) 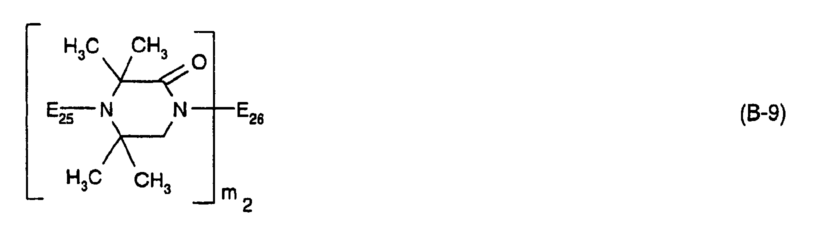 dans laquelle
m₂ est égal à 1, 2 ou 3,
E₂₅ est un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈, et
quand m₂ est égal à 1, E₂₆ est un groupe 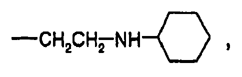 quand m₂ est égal à 2, E₂₆ est un alkylène en C₂-C₂₂, et
quand m₂ est égal à 3, E₂₆ est un groupe de formule (b-IV) 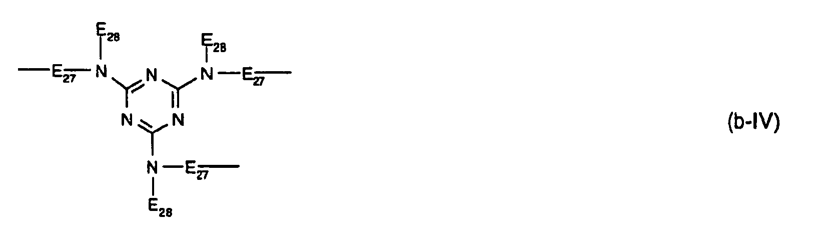 dans laquelle les radicaux E₂₇ sont, indépendamment l'un de l'autre, un alkylène en C₂-C₁₂, et les radicaux E₂₈ sont, indépendamment les uns des autres, un alkyle en C₁-C₁₂ ou un cycloalkyle en C₅-C₁₂ ;
un composé de formule (B-10) 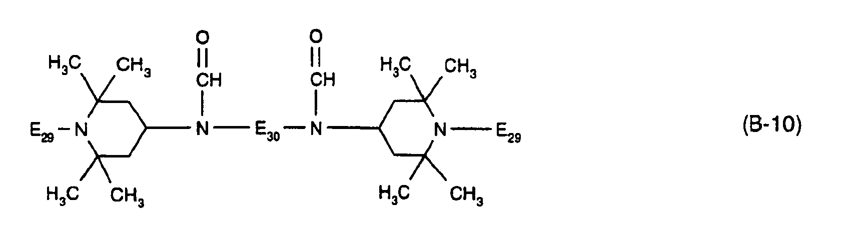 dans laquelle
les radicaux E₂₉ sont, indépendamment l'un de l'autre, un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈, et
E₃₀ est un alkylène en C₂-C₂₂, un cycloalkylène en C₅-C₇, un alkylène en C₁-C₄di(cycloalkylène en C₅-C₇), un phénylène ou un phénylènedi (alkylène en C₁-C₄) ;
un composé de formule (C-1) 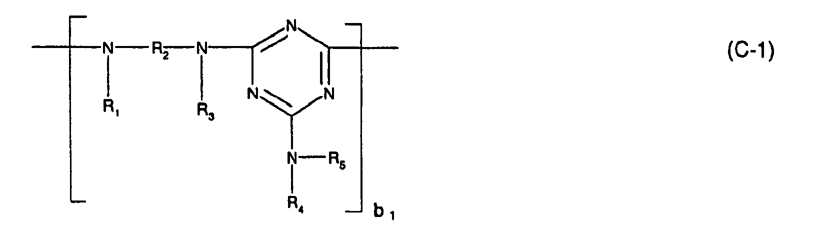 dans laquelle
R₁, R₃, R₄ et R₅ sont, indépendamment les uns des autres, un hydrogène, un alkyle en C₁-C₁₂, un cycloalkyle en C₅-C₁₂, un cycloalkyle en C₅-C₁₂ substitué par un alkyle en C₁-C₄, un phényle, un phényle qui est substitué par -OH et/ou un alkyle en C₁-C₁₀ ; un phénylalkyle en C₇-C₉, un phénylalkyle en C₇-C₉ qui est substitué sur le radical phényle par -OH et/ou un alkyle en C₁-C₁₀ ; ou un groupe de formule (c-I) 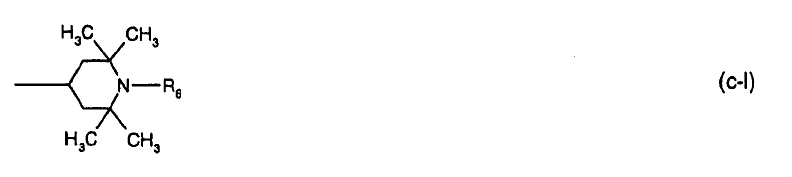 R₂ est un alkylène en C₂-C₁₈, un cycloalkylène en C₅-C₇, un alkylène en C₁-C₄di (cycloalkylène en C₅-C₇),
ou
les radicaux R₁, R₂ et R₃ forment, conjointement avec les atomes d'azote auxquels ils sont reliés, un cycle hétérocyclique de 5 à 10 membres, ou
R₄ et R₅ forment, conjointement avec les atomes d'azote auxquels ils sont reliés, un cycle hétérocyclique de 5 à 10 membres,
R₆ est un hydrogène, un alkyle en C₁-C₈, -O-, -OH, -CH₂CN, un alcoxy en C₁-C₁₈, un alcoxy en C₂-C₁₈ substitué par -OH ; un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈, et
b₁ est un nombre allant de 2 à 50,
à la condition qu'au moins un des radicaux R₁, R₃, R₄ et R₅ soit un groupe de formule (c-I) ;
un composé de formule (C-2) 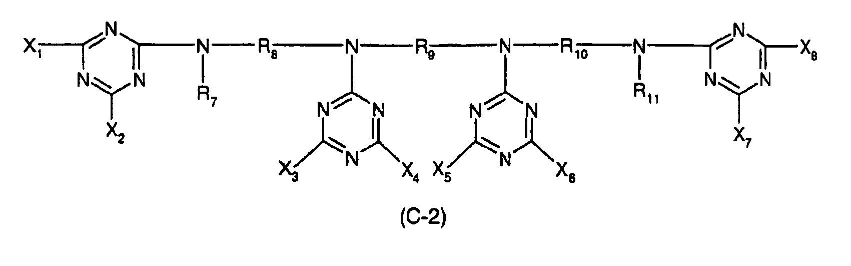 dans laquelle
R₇ et R₁₁ sont, indépendamment l'un de l'autre, un hydrogène ou un alkyle en C₁-C₁₂,
R₈, R₉ et R₁₀ sont, indépendamment les uns des autres, un alkylène en C₂-C₁₀, et
X₁, X₂, X₃, X₄, X₅, X₆, X₇ et X₈ sont, indépendamment les uns des autres, un groupe de formule (c-II), 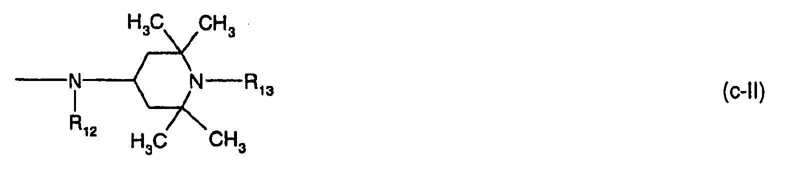 dans laquelle R₁₂ est un hydrogène, un alkyle en C₁-C₁₂, un cycloalkyle en C₅-C₁₂, un cycloalkyle en C₅-C₁₂ substitué par un alkyle en C₁-C₄, un phényle, un phényle qui est substitué par -OH et/ou un alkyle en C₁-C₁₀, un phénylalkyle en C₇-C₉, un phénylalkyle en C₇-C₉ qui est substitué sur le radical phényle par -OH et/ou un alkyle en C₁-C₁₀ ; ou un groupe de formule (c-I) tel qu'il est défini ci-dessus, et
R₁₃ possède une des significations de R_{6 ;}
un composé de formule (C-3) 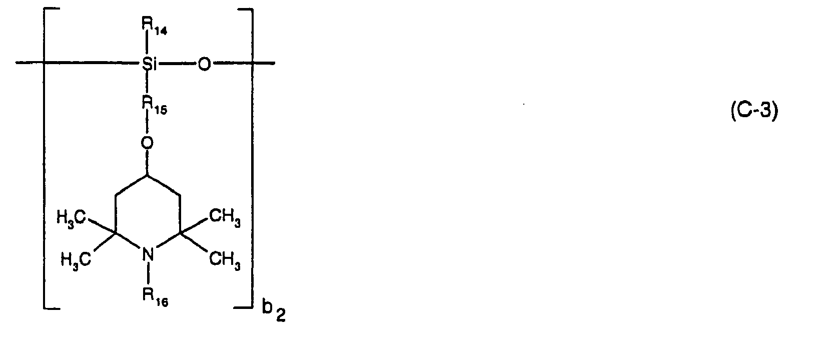 dans laquelle
R₁₄ est un alkyle en C₁-C₁₀, un cycloalkyle en C₅-C₁₂, un cycloalkyle en C₅₋C₁₂ substitué par un alkyle en C₁-C₄, un phényle ou un phényle qui est substitué par un alkyle en C₁-C₁₀,
R₁₅ est un alkylène en C₃-C₁₀,
R₁₆ possède une des significations de R₆, et
b₂ est un nombre de 2 à 50 ;
un composé de formule (C-4) 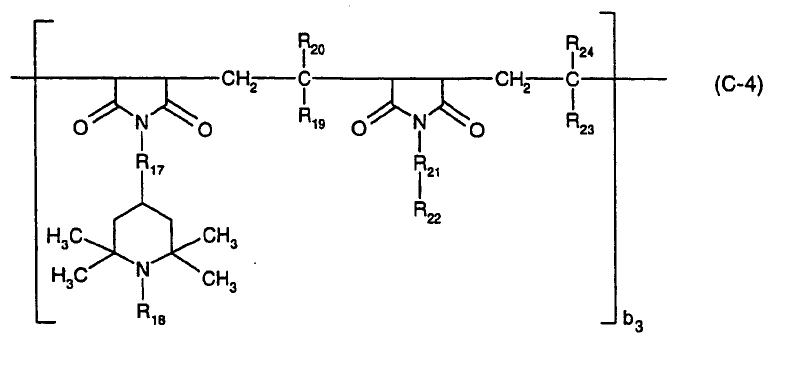 dans laquelle
R₁₇ et R₂₁ sont, indépendamment l'un de l'autre, une liaison directe ou un groupe -N(X₉)-CO-X₁₀-CO-N(X₁₁)-, où X₉ et X₁₁ sont, indépendamment l'un de l'autre, un hydrogène, un alkyle en C₁-C₈, un cycloalkyle en C₅-C₁₂, un phényle, un phénylalkyle en C₇-C₉ ou un groupe de formule (c-I),
X₁₀ est une liaison directe ou un alkylène en C₁-C₄,
R₁₈ possède une des significations de R₆,
R₁₉, R₂₀, R₂₃ et R₂₄ sont, indépendamment les uns des autres, un hydrogène, un alkyle en C₁-C₃₀, un cycloalkyle en C₅-C₁₂ ou un phényle,
R₂₂ est un hydrogène, un alkyle en C₁-C₃₀, un cycloalkyle en C₅-C₁₂, un phényle, un phénylalkyle en C₇-C₉ ; ou un groupe de formule (c-I), et
b₃ est un nombre de 1 à 50 ;
un composé de formule (C-5) 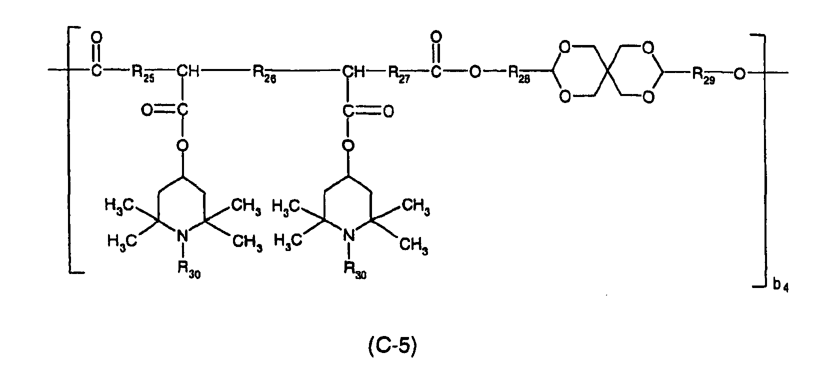 dans laquelle
R₂₅, R₂₆, R₂₇, R₂₈ et R₂₉ sont, indépendamment les uns des autres, une liaison directe ou un alkylène en C₁-C₁₀,
R₃₀ possède une des significations de R₆, et
b₄ est un nombre de 1 à 50 ; et
un produit (C-6) pouvant être obtenu en faisant réagir un produit, obtenu par la réaction d'une polyamine de formule (C-6-1) avec un chlorure cyanurique, avec un composé de formule (C-6-2) 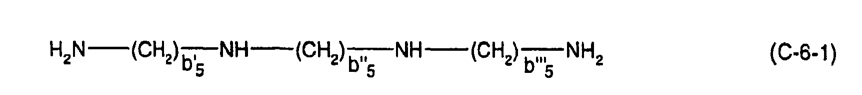 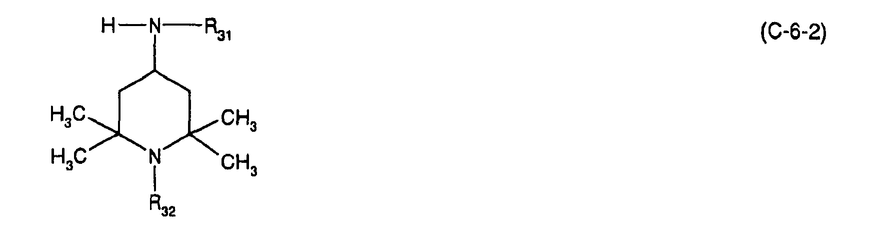 dans laquelle
b'₅, b"₅ et b"'₅ sont, indépendamment les uns des autres, un nombre allant de 2 à 12,
R₃₁ est un hydrogène, un alkyle en C₁-C₁₂, un cycloalkyle en C₅-C₁₄₂, un phényle ou un phénylalkyle en C₇-C₉, et
R₃₂ possède une des significations de R₆ ;
à la condition que, quand le composant (I) est une polyoléfine, ladite polyoléfine ne contient pas de composé insaturé oxydable choisi dans le groupe constitué par le caoutchouc naturel, la résine de butadiène styrène, la graisse et l'huile.

2. Article non agricole selon la revendication 1, dans lequel le composant (I) est un homo- ou copolymère de polyoléfine, une polyoléfine modifiée par un amidon, un composite de polymère à base d'amidon ou un biopolymère.

3. Article non agricole selon la revendication 1, dans lequel le composant (I) est un polyéthylène, un polypropylène, un copolymère de polyéthylène ou un copolymère de polypropylène.

4. Article non agricole selon la revendication 1, dans lequel le composant (I) est un biopolymère choisi dans le groupe constitué par la polycaprolactone, l'acide polylactique, l'acide polyglycolique, le polyhydroxybutyrate-valérate, le succinate de polybutylène, l'alcool polyvinylique, le polyhydroxyalcanoate et l'adipate de polyéthylène.

5. Article non agricole selon la revendication 1, dans lequel le composant (II) est un carboxylate en C₂-C₂₄ de Fe, Ce, Co, Mn, Cu ou V.

6. Article non agricole selon la revendication 1, dans lequel le composant (II) est un carboxylate en C₂-C₂₄ de Ce, Co ou Mn.

7. Article non agricole selon la revendication 1, dans lequel le composant (II) est un alcanoate en C₁₀-C₂₀ de Ce, Co ou Mn ou un alcénoate en C₁₀-C₂₀ de Ce, Co ou Mn.

8. Article non agricole selon la revendication 1, dans lequel
A₁ est un hydrogène ou un méthyle,
A₂ est une liaison directe ou un alkylène en C₂-C₆, et
n₁ est un nombre allant de 2 à 25 ;
n₂ et n₂* sont un nombre allant de 2 à 25 ;
A₃ et A₄ sont, indépendamment l'un de l'autre, un hydrogène ou un alkyle en C₁-C₄, ou A₃ et A₄ forment conjointement un groupe alkylène en C₉-C₁₃, et
les variables n₃ sont, indépendamment les unes des autres, un nombre allant de 1 à 25 ;
n₄ est un nombre de 2 à 25,
A₅ et A₆ sont, indépendamment l'un de l'autre, un alkyle en C₁-C₄, et
A₇ est un alkyle en C₁-C₄ ou un groupe de formule (aI)
à la condition qu'au moins 50 % des radicaux A₇ soient un groupe de formule (a-I) ;
m₁ est égal à 1, 2 ou 4,
si m₁ est égal à 1, E₂ est un alkyle en C₁₂-C₂₀,
si m₁ est égal à 2, E₂ est un alkylène en C₂-C₁₀ ou un groupe de formule (b-I),
E₃ est un alkyle en C₁-C₄,
E₄ est un alkylène en C₁-C₆, et
E₅ et E₆ sont, indépendamment l'un de l'autre, un alkyle en C₁-C₄, et
si m₁ est égal à 4, E₂ est un alcanetétrayle en C₄-C₆;
deux des radicaux E₇ sont -COO- (alkyle en C₁₀-C₁₅), et
deux des radicaux E₇ sont un groupe de formule (b-II) ;
E₉ et E₁₀ forment conjointement un alkylène en C₉-C₁₃,
E₁₁ est un hydrogène ou un groupe -Z₁-COO-Z₂,
Z₁ est un alkylène en C₂-C₆, et
Z₂ est un alkyle en C₁₀-C₁₆;
E₁₄ est un hydrogène, et
E₁₅ est un alkylène en C₂-C₆ ou un alkylidène en C₃-C₅;
E₁₇ est un alkyle en C₁₀-C₁₄;
E₂₄ est un alcoxy en C₁-C₄ ;
m₂ est égal à 1, 2 ou 3,
quand m₂ est égal à 1, E₂₆ est un groupe 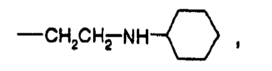 quand m₂ est égal à 2, E₂₆ est un alkylène en C₂-C₆, et
quand m₂ est égal à 3, E₂₆ est un groupe de formule (b-IV)
les radicaux E₂₇ sont, indépendamment l'un de l'autre, un alkylène en C₂-C₆, et
les radicaux E₂₈ sont, indépendamment les uns des autres, un alkyle en C₁-C₄ ou un cycloalkyle en C₅-C₈ ; et
E₃₀ est un alkylène en C₂-C₈,
R₁ et R₃ sont, indépendamment l'un de l'autre, un groupe de formule (c-I),
R₂ est un alkylène en C₂-C₈,
R₄ et R₅ sont, indépendamment l'un de l'autre, un hydrogène, un alkyle en C₁-C₁₂, un cycloalkyle en C₅-C₈ ou un groupe de formule (c-I), ou les radicaux R₄ et R₅ forment, conjointement avec l'atome d'azote auquel ils sont reliés, un cycle hétérocyclique de 5 à 10 membres, et
b₁ est un nombre allant de 2 à 25 ;
R₇ et R₁₁ sont, indépendamment l'un de l'autre, un hydrogène ou un alkyle en C₁-C₄,
R₈, R₉ et R₁₀ sont, indépendamment les uns des autres, un alkylène en C₂-C₄, et
X₁ , X₂, X₃, X₄, X₅ , X₆, X₇ et X₈ sont, indépendamment les uns des autres, un groupe de formule (c-II),
R₁₂ est un hydrogène, un alkyle en C₁-C₄, un cycloalkyle en C₅-C₈, ou un groupe de formule (c-I) ;
R₁₄ est un alkyle en C₁-C₄,
R₁₅ est un alkylène en C₃-C₆, et
b₂ est un nombre de 2 à 25 ;
R₁₇ et R₂₁ sont, indépendamment l'un de l'autre, une liaison directe ou un groupe -N(X₉)-CO-X₁₀-CO-N(X₁₁)-,
X₉ et X₁₁ sont, indépendamment l'un de l'autre, un hydrogène ou un alkyle en C₁-C₄,
X₁₀ est une liaison directe,
R₁₉ et R₂₃ sont un alkyle en C₁-C₂₅ ou un phényle,
R₂₀ et R₂₄ sont un hydrogène ou un alkyle en C₁-C₄,
R₂₂ est un alkyle en C₁-C₂₅ ou un groupe de formule (c-I), et
b₃ est un nombre de 1 à 25 ;
R₂₅, R₂₆, R₂₇, R₂₈ et R₂₉ sont, indépendamment les uns des autres, une liaison directe ou un alkylène en C₁-C₄, et
b₄ est un nombre de 1 à 25 ; et
b'₅, b''₅ et b'''₅ sont, indépendamment les uns des autres, un nombre allant de 2 à 4, et
R₃₁ est un hydrogène, un alkyle en C₁-C₄, un cycloalkyle en C₅-C₈, un phényle ou un benzyle.

9. Article non agricole selon la revendication 1, dans lequel le composant (III) est un ou plusieurs composés d'amine à empêchement stérique choisis dans le groupe constitué par les composés de formules :
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a),
(B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) et (C-5-a) et un produit (C-6-a) ; 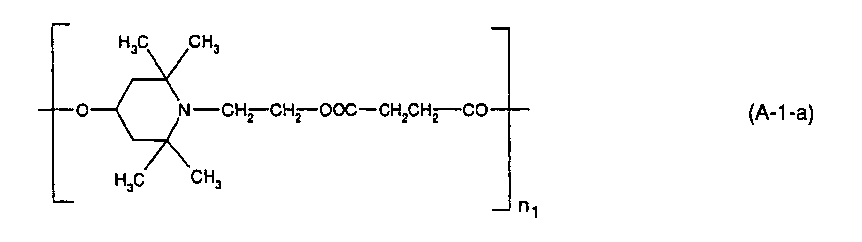 dans laquelle n₁ est un nombre allant de 2 à 20 ; 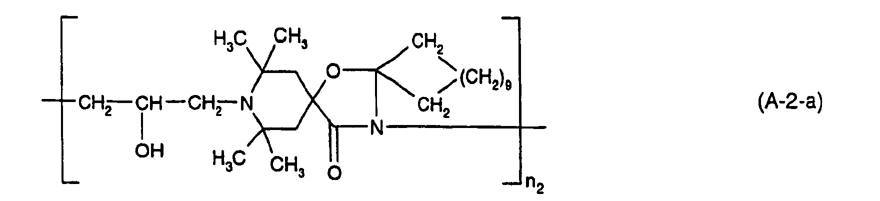 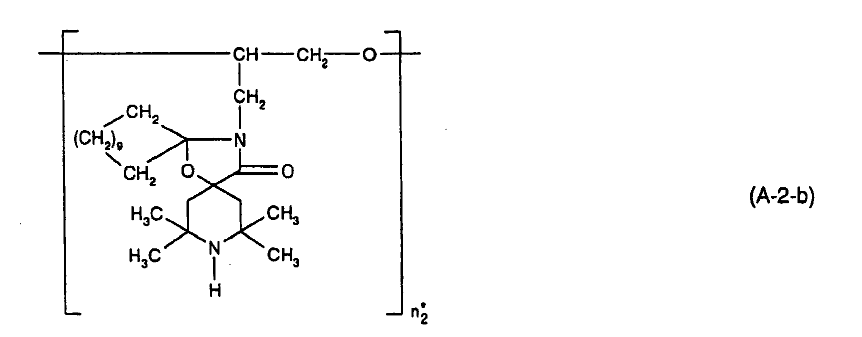 dans lesquelles n₂ et n₂^{*} sont un nombre allant de 2 à 20 ; 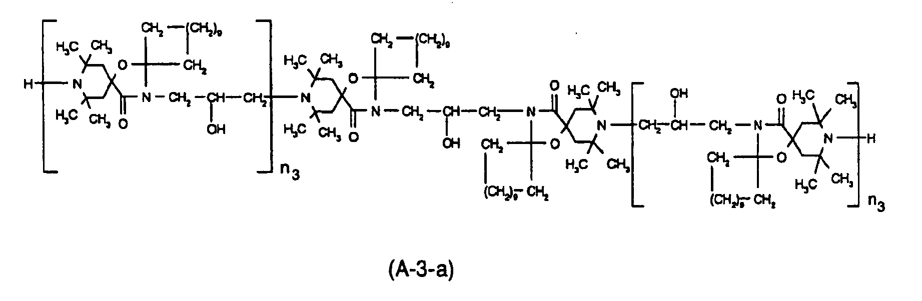 dans laquelle les variables n₃ sont, indépendamment les unes des autres, un nombre allant de 1 à 20 ; 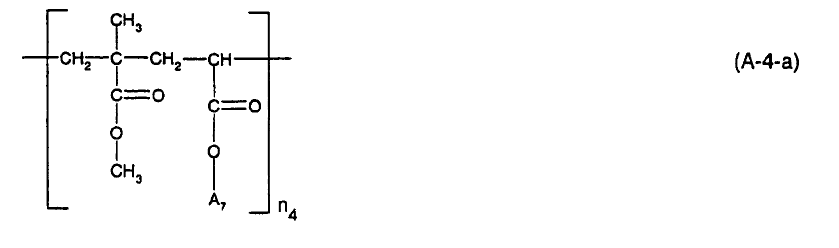 dans laquelle n₄ est un nombre de 2 à 20, et
au moins 50 % des radicaux A₇ sont un groupe de formule (a-I) 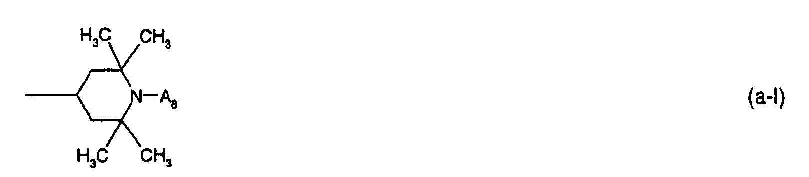 dans laquelle A₈ est un hydrogène, un alkyle en C₁-C₈, -O-, -OH, -CH₂CN, un alcoxy en C₁-C₁₈, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈,
et les radicaux A₇ restants sont éthyle ; 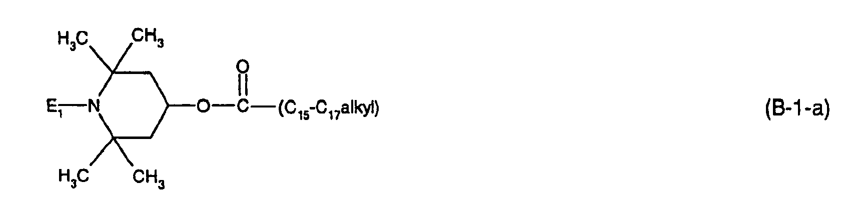 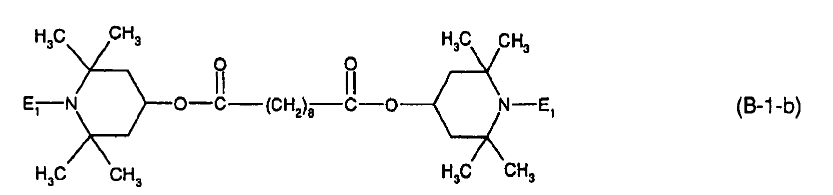 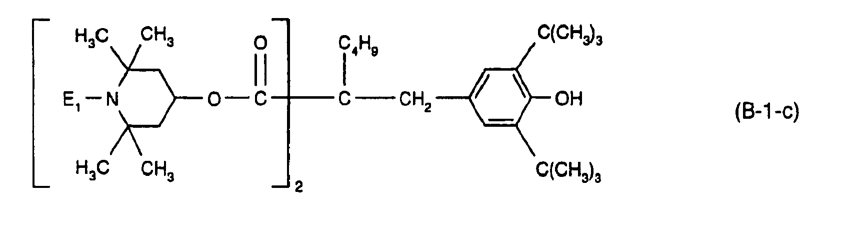 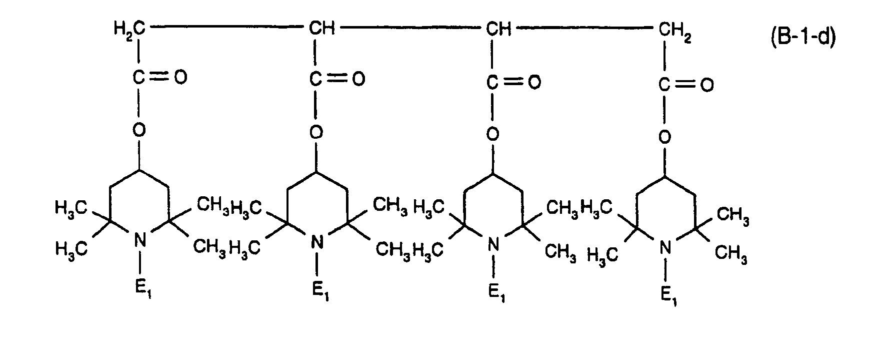 dans lesquelles E₁ est un hydrogène, un alkyle en C₁-C₈, -O-, -OH, -CH₂CN, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈, 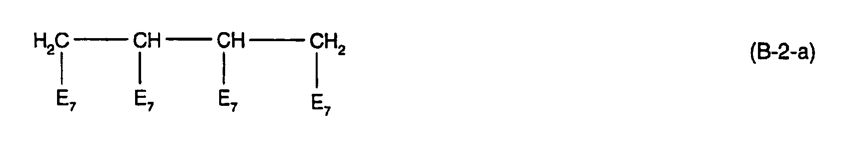 dans laquelle deux des radicaux E₇ sont -COO-C₁₃H₂₇ et
deux des radicaux E₇ sont 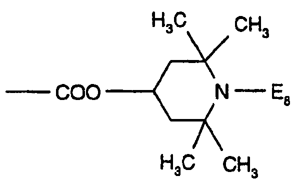 et E₈ est un hydrogène, un alkyle en C₁-C₈, -O-, -OH, -CH₂CN, un alcoxy en C₁-C₁₈, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ; 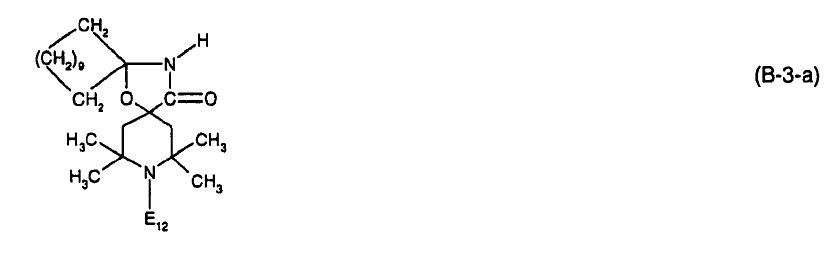 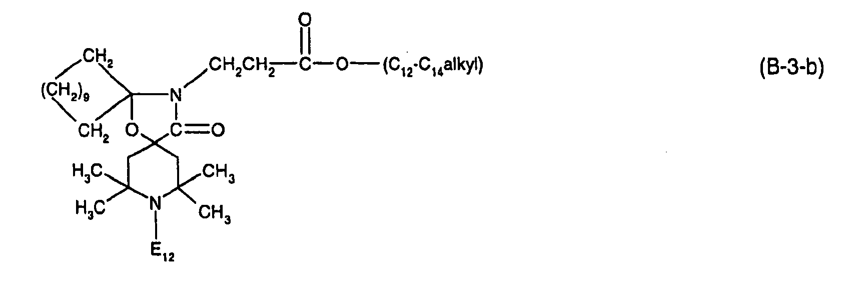 dans lesquelles E₁₂ est un hydrogène, un alkyle en C₁-C₈, -O-, -OH, -CH₂CN, un alcoxy en C₁-C₁₈, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ; 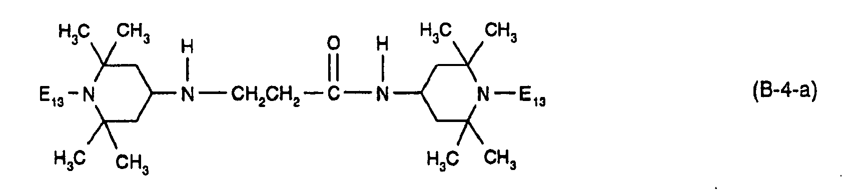 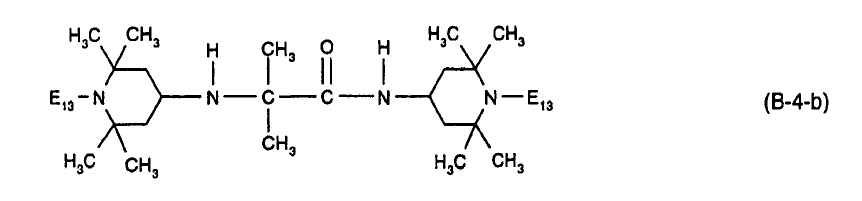 dans lesquelles E₁₃ est un hydrogène, un alkyle en C₁-C₈, -O-, -OH, -CH₂CN, un alcoxy en C₁-C₁₈, un cycloalcoxy en C₅-C₁₂ un alcényle en C₃-C₆, un phénylalkyle en C₇-C₉ non substitué ou substitué sur le phényle par 1, 2 ou 3 alkyles en C₁-C₄ ; ou un acyle en C₁-C₈ ; 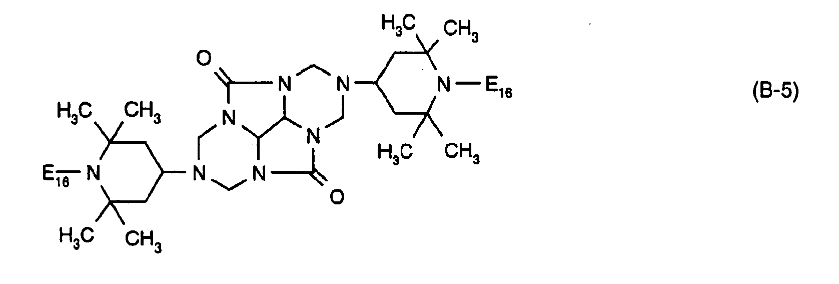 dans laquelle E₁₆ est un hydrogène, un alkyle en C₁-C₈, -O-, -OH, -CH₂CN, un alcoxy en C₁-C₁₈, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ; 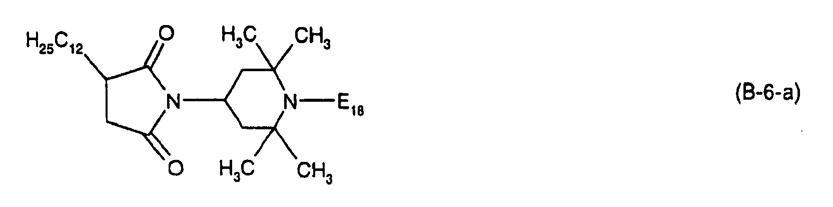 dans laquelle E₁₈ est un hydrogène, un alkyle en C₁-C₈, -O-, -OH, -CH₂CN, un alcoxy en C₁-C₁₈, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ; 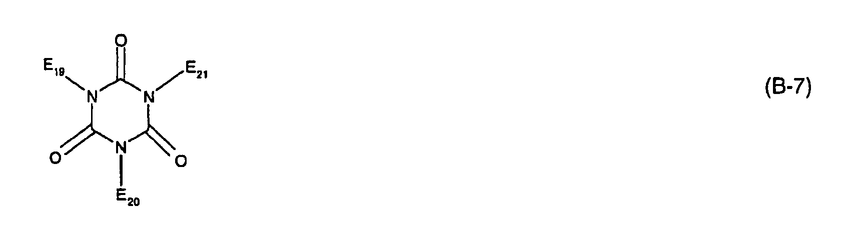 dans laquelle E₁₉, E₂₀ et E₂₁ sont, indépendamment les uns des autres, un groupe de formule (b-III) 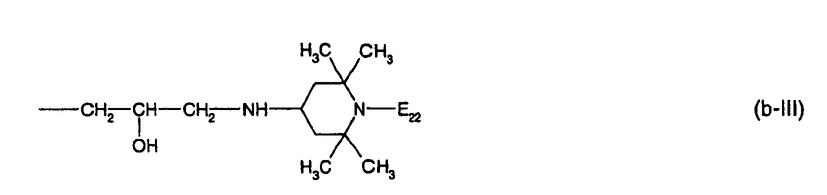 dans laquelle E₂₂ est un hydrogène, un alkyle en C₁-C₈, -O-, -OH, -CH₂CN, un alcoxy en C₁-C₁₈, un cycloalcoxy en C₅-C₁₂, un alcényle en C₃-C₅, un phénylalkyle en C₇-C₉ non substitué ou substitué sur le phényle par 1, 2 ou 3 alkyles en C₁-C₄ ; ou un acyle en C₁-C₈ ; 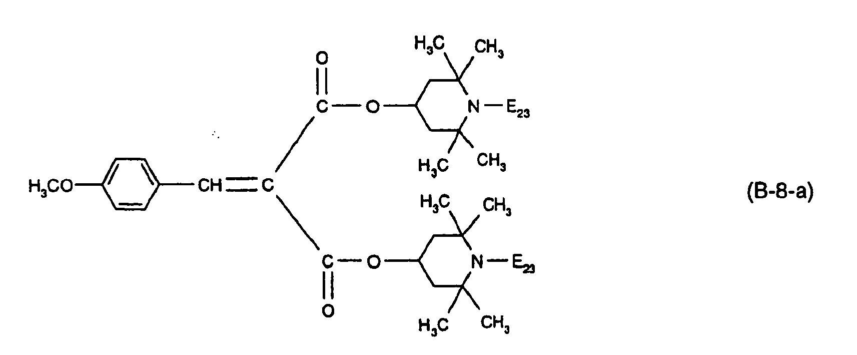 dans laquelle E₂₃ est un hydrogène, un alkyle en C₁-C₈, -O-, -OH, -CH₂CN, un alcoxy en C₁-C₁₈, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ; 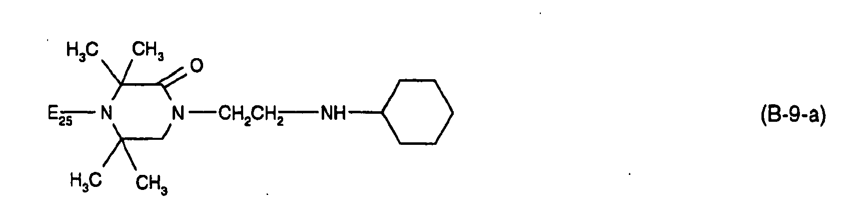 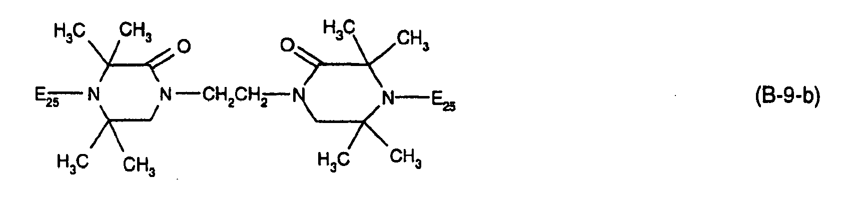 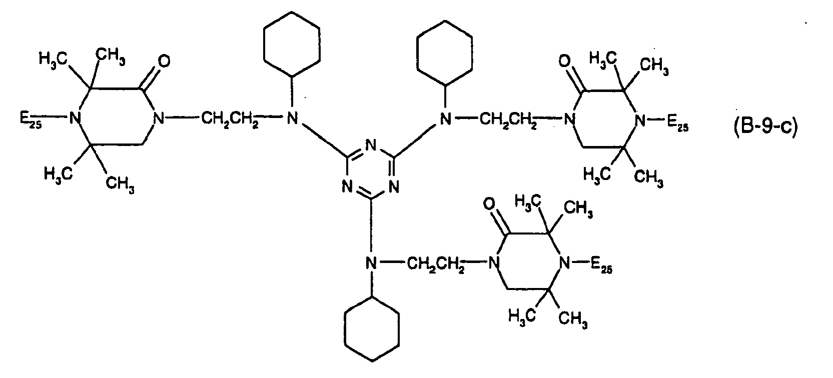 dans laquelle E₂₅ est un hydrogène, un alkyle en C₁-C₈, -O-, -OH, -CH₂CN, un alcoxy en C₁-C₁₈, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ; 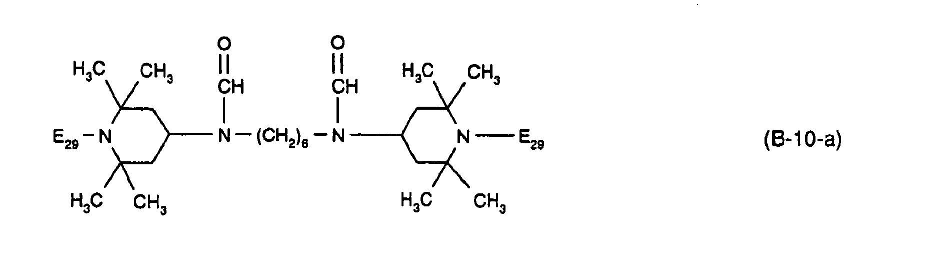 dans laquelle E₂₉ est un hydrogène, un alkyle en C₁-C₈, -O-, -OH, -CH₂CN, un alcoxy en C₁-C₁₈, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ; 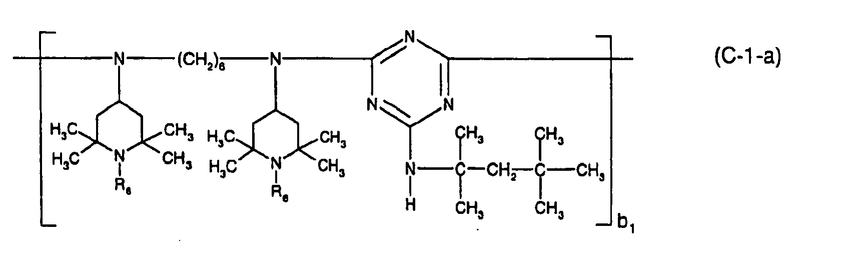 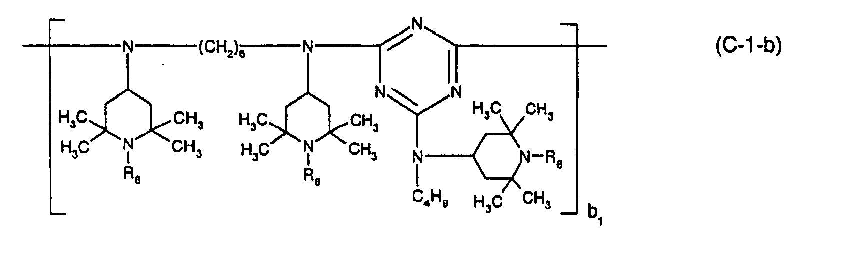 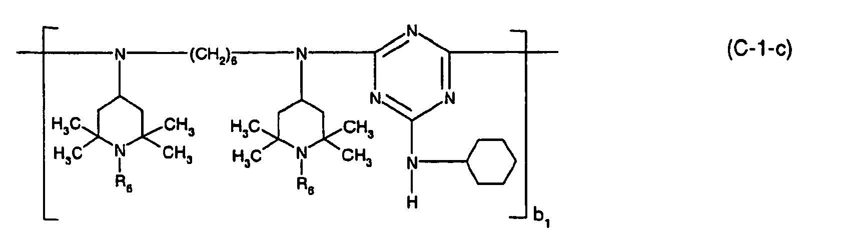 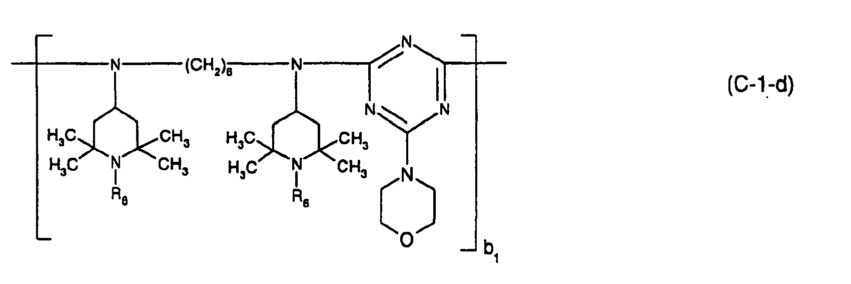 dans lesquelles b₁ est un nombre allant de 2 à 20 et R₆ est un hydrogène, un alkyle en C₁-C₈, -O-, -OH, -CH₂CN, un alcoxy en C₁-C₁₈, un cycloalcoxy en C₅-C₁₂, un alcényle en C₃-C₆, un phénylalkyle en C₇-C₉ non substitué ou substitué sur le phényle par 1, 2 ou 3 alkyles en C₁-C₄ ; ou un acyle en C₁-C₈ ; 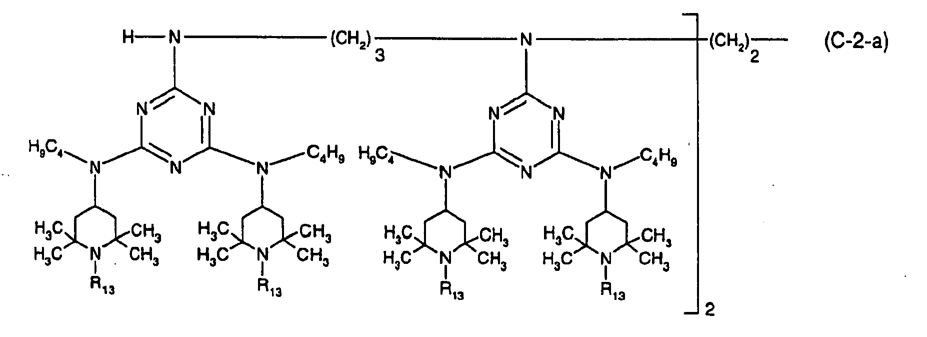 dans laquelle R₁₃ possède une des significations de R₆, 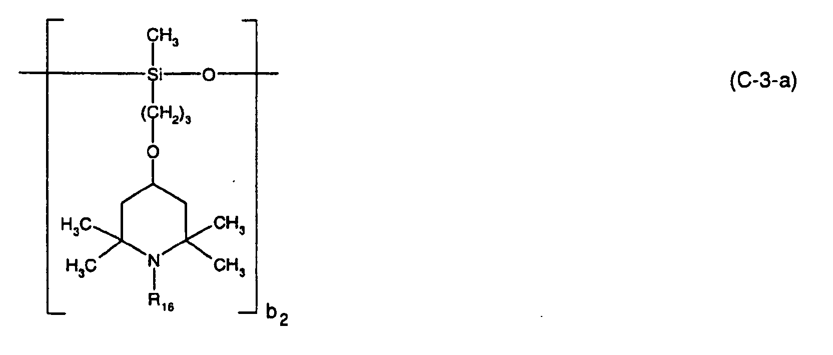 dans laquelle b₂ est un nombre de 2 à 20 et R₁₆ possède une des significations de R₆ ; 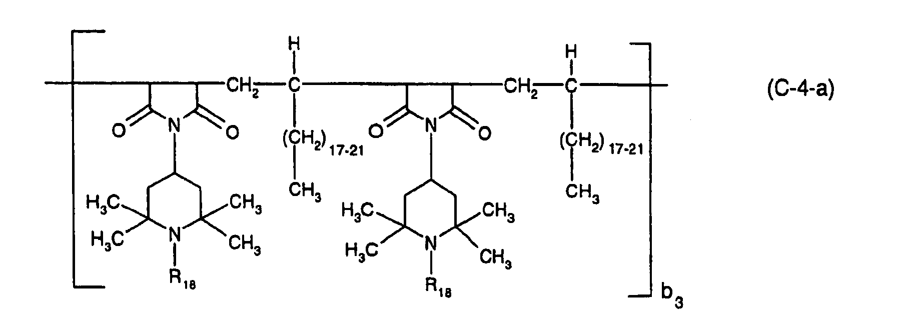 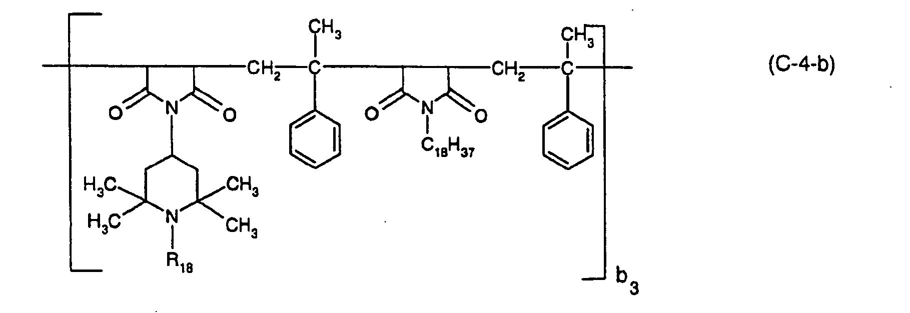 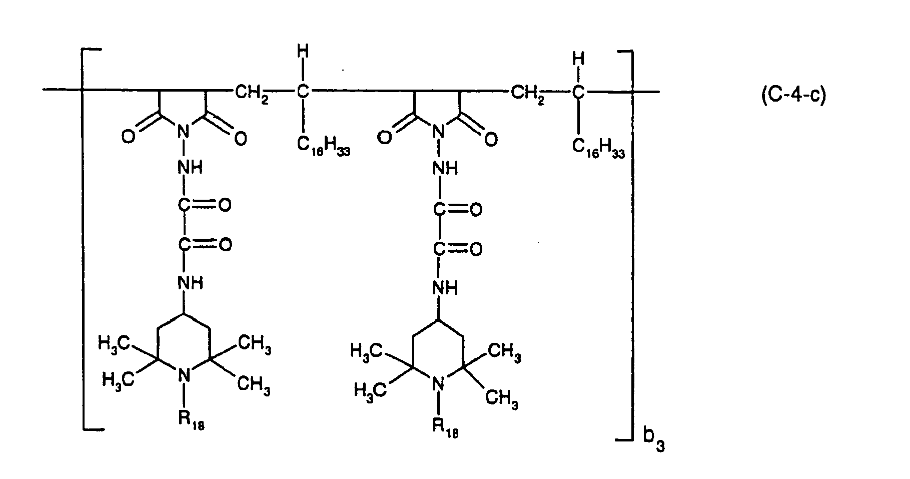 dans lesquelles b₃ est un nombre de 1 à 20 et R₁₈ possède une des significations de R₆ ; 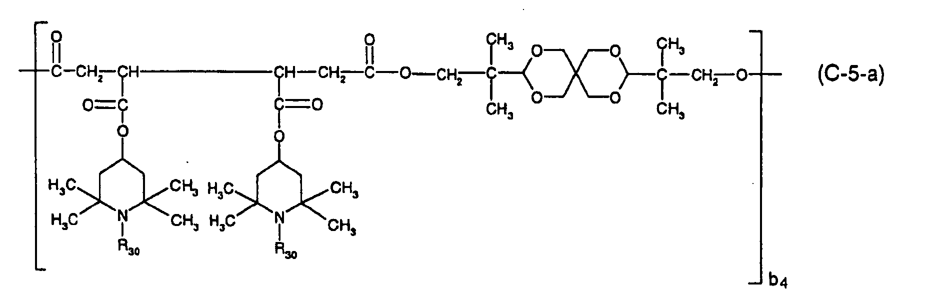 dans laquelle b₄ est un nombre de 1 à 20 et R₃₀ possède une des significations de R₆ ;
un produit (C-6-a) pouvant être obtenu en faisant réagir un produit, obtenu par la réaction d'une polyamine de formule (C-6-1-a) avec un chlorure cyanurique, avec un composé de formule (C-6-2-a) 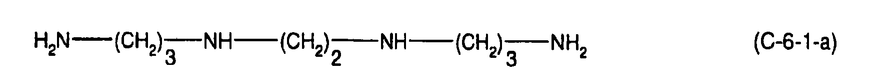 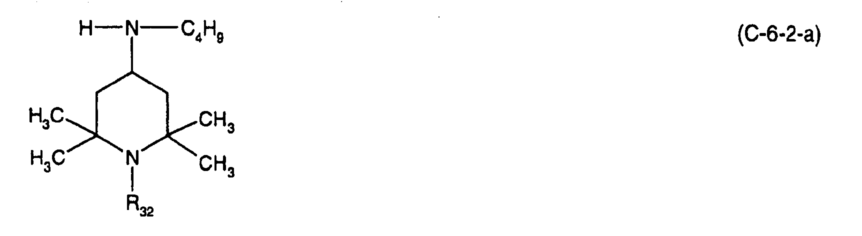 dans lesquelles R₃₂ possède une des significations de R₆.

10. Article non agricole selon la revendication 1, dans lequel A₈ est un hydrogène, un alkyle en C₁-C₄, un alcoxy en C₁-C₁₀, un cyclohexyloxy, un allyle, un benzyle ou un acétyle ;
E₁ est un hydrogène, un alkyle en C₁-C₄, un cyclohexyloxy, un allyle, un benzyle ou un acétyle et
E₈, E₁₂, E₁₃, E₁₆, E₁₈, E₂₂, E₂₃, E₂₅ et E₂₉ sont un hydrogène, un alkyle en C₁-C₄, un alcoxy en C₁-C₁₀, un cyclohexyloxy, un allyle, un benzyle ou un acétyle ;
R₆, R₁₃, R₁₆ , R₁₈, R₃₀ et R₃₂ sont un hydrogène, un alkyle en C₁-C₄, un alcoxy en C₁-C₁₀, un cyclohexyloxy, un allyle, un benzyle ou un acétyle.

11. Article non agricole selon la revendication 9, dans lequel A₈, E₁, E₈, E₁₂, E₁₃, E₁₆, E₁₈, E₂₂, E₂₃, E₂₅, E₂₉, R₆, R₁₃, R₁₆, R₁₈, R₃₀ et R₃₂ sont un hydrogène ou un méthyle et R₆ est en plus un alcoxy en C₁-C₈.

12. Article non agricole selon la revendication 9, dans lequel le composant (III) est un composé de formules :
(A-1-a), (A-2-a), (A-2-b),
(B-1-a), (B-1-b), (B-1-c), (B-1-d), (B-2-a), (B-3-a), (B-3-b), (B-4-a), (B-4-b), (B-5), (B-6-a), (B-8-a), (B-9-b), (B-10-a),
(C-1-a), (C-1-b), (C-1-c), (C-1-d), (C-2-a), (C-3-a), (C-4-a) ou (C-5-a) ou un produit (C-6-a).

13. Article non agricole selon la revendication 9, dans lequel le composant (III) est un composé de formules :
(A-1-a), (A-2-a), (A-2-b),
(C-1-a), (C-1-b), (C-1-c), (C-1-d), (C-2-a), (C-3-a), (C-4-a) ou (C-5-a) ou un produit (C-6-a).

14. Article non agricole selon la revendication 9, qui contient comme composant (III) deux composés d'amine à empêchement stérique différents, choisis dans le groupe constitué par les composés de formules:
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a),
(B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) et (C-5-a) et un produit (C-6-a) ;
à la condition que les deux composés d'amine à empêchement stérique différents ne soient pas choisis parmi les mêmes formules génériques.

15. Article non agricole selon la revendication 1, dans lequel le composant (III) est un composé de formule (A-1-a), ou
un composé de formule (C-1-a) dans laquelle R₆ est un hydrogène, ou
une combinaison d'un composé de formule (A-1-a) avec un composé de formule (C-1-a) dans laquelle R₆ est un hydrogène, ou
une combinaison d'un composé de formule (A-1-a) avec un composé de formule (C-2-a) dans laquelle R₁₃ est un méthyle, ou
une combinaison d'un composé de formule (B-1-b) dans laquelle E₁ est un hydrogène avec un composé de formule (C-1-a) dans laquelle R₆ est un hydrogène.

16. Article non agricole selon la revendication 1, qui contient, en plus, un ou plusieurs des composants suivants
(IV) un antioxydant,
(V) un absorbeur d'UV,
(VI) une charge,
(VII) un pigment,
(VIII) un sel inorganique ou organique de Ca, Mg, Zn ou Al.

17. Article non agricole selon la revendication 1, qui contient, en plus, un polyacide hydroxycarboxylique aliphatique.

18. Article non agricole selon la revendication 17, dans lequel le polyacide hydroxycarboxylique aliphatique est l'acide citrique.

19. Article non agricole selon la revendication 1, qui est un article choisi dans le groupe constitué par les géotextiles, les couvertures de décharges, les couvertures industrielles, les couvertures de déchets, les films pour échafaudage temporaire, les films pour bâtiments, les barrières pour les boues, les emballages à enrouler flexibles, les rideaux pour la volaille et les constructions d'abris temporaires.

20. Procédé pour le contrôle de la résistance aux intempéries et la dégradation d'un article de polymère organique non agricole selon la revendication 1, qui comprend l'incorporation dans le polymère organique les composants (II) et (III) selon la revendication 1.

21. Utilisation d'un mélange contenant des composants (II) et (III) selon la revendication 1 pour le contrôle de la résistance aux intempéries et la dégradation d'un article de polymère organique non agricole selon la revendication 1.

22. Article non agricole selon la revendication 1, à la condition que, quand le composant (I) est une polyoléfine, ladite polyoléfine ne contient pas de composé insaturé oxydable.
